(19) Europäisches Patentamt
European Patent Office
Office européen des brevets

(11) **EP 4 512 915 A1**

(12) **EUROPEAN PATENT APPLICATION**
published in accordance with Art. 153(4) EPC

(43) Date of publication:
26.02.2025 Bulletin 2025/09

(21) Application number: 23791947.7

(22) Date of filing: 21.04.2023

(51) International Patent Classification (IPC):
*C21D 8/12* (2006.01)     *C22C 38/00* (2006.01)
*C22C 38/60* (2006.01)     *H01F 1/147* (2006.01)

(52) Cooperative Patent Classification (CPC):
C21D 8/12; C22C 38/00; C22C 38/60; H01F 1/147

(86) International application number:
PCT/JP2023/015892

(87) International publication number:
WO 2023/204299 (26.10.2023 Gazette 2023/43)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 22.04.2022 JP 2022071182

(71) Applicant: NIPPON STEEL CORPORATION
Chiyoda-ku
Tokyo 100-8071 (JP)

(72) Inventors:
• **ATSUMI, Haruhiko**
  Tokyo 100-8071 (JP)
• **YAMAGATA, Ryutaro**
  Tokyo 100-8071 (JP)
• **KATAOKA, Takashi**
  Tokyo 100-8071 (JP)
• **KUNITA, Yuki**
  Tokyo 100-8071 (JP)

(74) Representative: **Vossius & Partner
Patentanwälte Rechtsanwälte mbB**
Siebertstrasse 3
81675 München (DE)

(54) **GRAIN-ORIENTED ELECTROMAGNETIC STEEL SHEET AND METHOD FOR MANUFACTURING GRAIN-ORIENTED ELECTROMAGNETIC STEEL SHEET**

(57)     A grain-oriented electrical steel sheet that can reduce iron loss and improve the adhesion of a secondary coating is provided. In a grain-oriented electrical steel sheet of the present embodiment, when a maximum emission intensity of Mg is defined as $I_{Mg/Mg}$, and an emission intensity of Sn at a sputtering time at which Mg exhibits the maximum emission intensity is defined as $I_{Sn/Mg}$, in glow emission spectroscopic spectra obtained by performing glow discharge optical emission spectroscopy in a thickness direction of a base steel sheet from a surface of a secondary coating, the glow emission spectroscopic spectra showing the relation of an emission intensity of Mg and an emission intensity of Sn with respect to a sputtering time, an intensity ratio $I_{ref}$ defined by Formula (1) is 0.0000 to 0.0006, and an iron loss $W_{17/15}$ is less than 0.90 W/kg.

$$I_{ref} = I_{Sn/Mg}/I_{Mg/Mg} \quad (1)$$

FIG.2

**Description**

TECHNICAL FIELD

The present disclosure relates to a grain-oriented electrical steel sheet, and a method for producing a grain-oriented electrical steel sheet.

BACKGROUND ART

A grain-oriented electrical steel sheet is a steel sheet in which the crystal orientation is integrated in {110}<001> orientation (Goss orientation). Grain-oriented electrical steel sheets are utilized for iron core materials of transformers or other electrical equipment as a soft magnetic material.

A method for producing a grain-oriented electrical steel sheet is as follows. A slab is heated and subjected to hot rolling to produce a hot-rolled steel sheet. The produced hot-rolled steel sheet is subjected to annealing. The hot-rolled steel sheet is then subjected to cold rolling to produce a cold-rolled steel sheet. The cold-rolled steel sheet is subjected to decarburization annealing to cause primary recrystallization to occur. The cold-rolled steel sheet after the decarburization annealing is subjected to final annealing to cause secondary recrystallization to occur. A grain-oriented electrical steel sheet is produced by the above process.

As described above, because grain-oriented electrical steel sheets are utilized for iron core materials, grain-oriented electrical steel sheets are required to have high magnetic properties. Specifically, there is a need for grain-oriented electrical steel sheets which have low iron loss.

Improving the degree of integration to Goss orientation is known as a technique for improving iron loss. Means for improving the degree of integration to Goss orientation are proposed in Japanese Patent Application Publication No. 6-049543 (Patent Literature 1), Japanese Patent Application Publication No. 7-62436 (Patent Literature 2), Japanese Patent Application Publication No. 10-280040 (Patent Literature 3), and Japanese Patent Application Publication No. 2003-096520 (Patent Literature 4).

In the aforementioned Patent Literatures 1 to 4, rapid heating is performed in the temperature raising process of decarburization annealing in order to induce the occurrence of primary recrystallization. By performing rapid heating, Goss-oriented grains that serve as nuclei for secondary recrystallization are enriched in the primary recrystallized structure. As a result, the iron loss of the grain-oriented electrical steel sheet is improved.

CITATION LIST

PATENT LITERATURE

    Patent Literature 1: Japanese Patent Application Publication No. 6-049543
    Patent Literature 2: Japanese Patent Application Publication No. 7-62436
    Patent Literature 3: Japanese Patent Application Publication No. 10-280040
    Patent Literature 4: Japanese Patent Application Publication No. 2003-096520

SUMMARY OF INVENTION

TECHNICAL PROBLEM

In this connection, a grain-oriented electrical steel sheet usually includes a base steel sheet, a primary coating, and a secondary coating. The primary coating is formed on the base steel sheet. The secondary coating is formed on the primary coating. By providing grain-oriented electrical steel sheets with a primary coating and a secondary coating, the insulation properties between the steel sheets are enhanced when the grain-oriented electrical steel sheets are utilized as an iron core.

The primary coating is an oxide that is mainly composed of forsterite ($Mg_2SiO_4$). The primary coating contributes to imparting tension to the steel sheet and to enhancing the insulation properties of the steel sheet. In addition, the primary coating has a role of improving the adhesion of the secondary coating to the base steel sheet.

Therefore, with respect to grain-oriented electrical steel sheets, there is a demand to reduce iron loss and also to improve the adhesion of the secondary coating. In Patent Literatures 1 to 4, there is no discussion regarding achieving both a reduction in iron loss and an improvement in the adhesion of the secondary coating.

An objective of the present disclosure is to provide a grain-oriented electrical steel sheet that can reduce iron loss and improve the adhesion of a secondary coating.

SOLUTION TO PROBLEM

A grain-oriented electrical steel sheet according to the present disclosure is as follows.
A grain-oriented electrical steel sheet, including:

a base steel sheet,
a primary coating formed on the base steel sheet, and
a secondary coating formed on the primary coating,
wherein:

a chemical composition of the base steel sheet consists of, in mass%,
Si: 2.50 to 4.50%,
Mn: 0.01 to 1.00%,
Sn: 0.05 to 0.30%,
N: 0.010% or less,
C: 0.010% or less,
sol. Al: 0.010% or less,
one or more kinds of element selected from a group consisting of S and Se: 0.020% or less in total,
P: 0.00 to 0.05%,
Sb: 0.00 to 0.50%,
Cr: 0.00 to 0.50%,
Cu: 0.00 to 0.50%,
Ni: 0.00 to 0.50%, and
Bi: 0.0000 to 0.0100%,
with the balance being Fe and impurities;
and wherein:
in glow emission spectroscopic spectra obtained by performing glow discharge optical emission spectroscopy from a surface of the secondary coating in a thickness direction of the base steel sheet, the glow emission spectroscopic spectra showing a relation of an emission intensity of Mg and an emission intensity of Sn with respect to a sputtering time:

when a maximum emission intensity of Mg is defined as $I_{Mg/Mg}$, and
an emission intensity of Sn at the sputtering time at which Mg exhibits the maximum emission intensity is defined as $I_{Sn/Mg}$,
an intensity ratio $I_{ref}$ defined by Formula (1) is 0.0000 to 0.0006, and
an iron loss $W_{17/50}$ measured in accordance with JIS C 2556: 2015 is less than 0.90 W/kg.

$$I_{ref} = I_{Sn/Mg}/I_{Mg/Mg} \quad (1)$$

A method for producing a grain-oriented electrical steel sheet according to the present disclosure includes the following processes.
A method for producing the grain-oriented electrical steel sheet described above, including:

a hot rolling process of producing a hot-rolled steel sheet by performing hot rolling on a slab having a chemical composition consisting of:

Si: 2.50 to 4.50%,
Mn: 0.01 to 1.00%,
Sn: 0.05 to 0.30%,
N: 0.002 to 0.020%,
C: 0.020 to 0.100%,
sol. Al: 0.010 to 0.050%,
one or more kinds of element selected from a group consisting of S and Se: 0.010 to 0.050% in total,
P: 0.00 to 0.05%,
Sb: 0.00 to 0.50%,

3

Cr: 0.00 to 0.50%,

Cu: 0.00 to 0.50%,

Ni: 0.00 to 0.50%, and

Bi: 0.0000 to 0.0100%,

with the balance being Fe and impurities;

a hot-rolled sheet annealing process of annealing the hot-rolled steel sheet;

a pickling process of performing a pickling treatment on the hot-rolled steel sheet after the hot-rolled sheet annealing process;

a cold rolling process of subjecting the hot-rolled steel sheet after the pickling process to cold rolling to produce a cold-rolled steel sheet;

a decarburization annealing process of subjecting the cold-rolled steel sheet to decarburization annealing to produce a decarburization-annealed steel sheet;

a final annealing process of applying an annealing separator to the decarburization-annealed steel sheet and subjecting the decarburization-annealed steel sheet to which the annealing separator is applied to final annealing to produce a final-annealed steel sheet on which the primary coating is formed; and

a secondary coating formation process of applying a secondary coating forming solution to the final-annealed steel sheet and subjecting the final-annealed steel sheet to which the secondary coating forming solution is applied to a heat treatment to form the secondary coating on the final-annealed steel sheet;

wherein:

in the pickling process,

a hydrochloric acid concentration in a pickling bath is set to 5 to 20% by mass, and a bath temperature is set to 80 to 100°C, and

an immersion time in the pickling bath is set to 30 to 120 seconds;

in the decarburization annealing process,

a rapid heating attainment temperature Ta is set to 800 to 900°C,

an average heating rate V1 during a period until a temperature of the cold-rolled steel sheet reaches the rapid heating attainment temperature Ta from 550°C is set to 100°C/sec or more, and

after the temperature of the cold-rolled steel sheet rises to the rapid heating attainment temperature Ta, the cold-rolled steel sheet is held for 60 seconds or more at a decarburization annealing temperature of 800 to 950°C, and an average oxygen partial pressure ratio PO4 during a period in which the cold-rolled steel sheet is held at the decarburization annealing temperature is made 0.60 or less; and

in the final annealing process,

an average heating rate V3 (°C/hr) and an average oxygen partial pressure ratio PO3 during a period until a temperature of the decarburization-annealed steel sheet reaches 1100°C from 900°C satisfy Formula (3) and Formula (4), and

a purity of a hydrogen gas introduced into a furnace atmosphere of a final annealing furnace used for the final annealing is more than 99.9%;

$$31 \times Sn + 5 \le V3 \le 30 \quad (3)$$

$$0.000 \le PO3 \le -0.020 \times Sn + 0.015 \quad (4)$$

where, a content of Sn in percent by mass in the slab is substituted for Sn in Formula (3) and Formula (4).

ADVANTAGEOUS EFFECTS OF INVENTION

The grain-oriented electrical steel sheet according to the present disclosure enables a reduction in iron loss and an improvement in the adhesion of the secondary coating. The method for producing a grain-oriented electrical steel sheet according to the present disclosure can produce the aforementioned grain-oriented electrical steel sheet.

BRIEF DESCRIPTION OF DRAWINGS

[FIG. 1] FIG. 1 is a perspective view of a grain-oriented electrical steel sheet according to the present embodiment.

[FIG. 2] FIG. 2 is a graph showing glow emission spectroscopic spectra of Mg and Sn (a GDS spectrum of Mg and a GDS spectrum of Sn) obtained by performing glow discharge optical emission spectroscopy in a thickness direction from the surface of a secondary coating of a grain-oriented electrical steel sheet.

DESCRIPTION OF EMBODIMENTS

Initially, the present inventors conducted studies regarding the chemical composition as means for reducing the iron loss of a grain-oriented electrical steel sheet having a primary coating and a secondary coating. As a result, the present inventors considered that if a base steel sheet of a grain-oriented electrical steel sheet has a chemical composition consisting of, in mass%, Si: 2.50 to 4.50%, Mn: 0.01 to 1.00%, N: 0.010% or less, C: 0.010% or less, sol. Al: 0.010% or less, S: 0.010% or less, Se: 0.010% or less, P: 0.00 to 0.05%, Sb: 0.00 to 0.50%, Cr: 0.00 to 0.50%, Cu: 0.00 to 0.50%, Ni: 0.00 to 0.50%, and Bi: 0.0000 to 0.0100%, with the balance being Fe and impurities, iron loss can be reduced to a certain extent.

However, in the case of the chemical composition described above, a sufficient reduction in iron loss was not obtained. Therefore, the present inventors conducted further studies. As a result, the present inventors obtained the following finding.

In the chemical composition described above, when Sn is further contained in an amount of 0.05 to 0.30% in lieu of a part of Fe, the degree of integration to Goss orientation can be increased. Therefore, iron loss is sufficiently reduced. Specifically, by satisfying the following Feature 1, the grain-oriented electrical steel sheet of the present embodiment can increase the degree of integration to Goss orientation and reduce iron loss.

(Feature 1)

The chemical composition of the base steel sheet consists of, in mass%, Si: 2.50 to 4.50%, Mn: 0.01 to 1.00%, Sn: 0.05 to 0.30%, N: 0.010% or less, C: 0.010% or less, sol. Al: 0.010% or less, one or more kinds of element selected from a group consisting of S and Se: 0.020% or less in total, P: 0.00 to 0.05%, Sb: 0.00 to 0.50%, Cr: 0.00 to 0.50%, Cu: 0.00 to 0.50%, Ni: 0.00 to 0.50%, and Bi: 0.0000 to 0.0100%, with the balance being Fe and impurities.

However, the present inventors newly found that even when the grain-oriented electrical steel sheet satisfies Feature 1, that is, even when the chemical composition of the base steel sheet contains the aforementioned content of Sn, in some cases the adhesion of the secondary coating cannot be sufficiently increased. Therefore, the present inventors conducted further studies regarding means that can achieve both a reduction in iron loss and an improvement in the adhesion of the secondary coating. As a result, the present inventors obtained the following finding.

As described above, Sn reduces the iron loss of a grain-oriented electrical steel sheet. However, since Sn is a segregation element, Sn tends to segregate in the outer layer of the base steel sheet. Therefore, in the process of producing the grain-oriented electrical steel sheet, Sn that segregated in the outer layer of the base steel sheet tends to easily diffuse into the primary coating. In a case where Sn has excessively diffused into the primary coating, in the primary coating, a region where Sn has excessively penetrated does not become a dense structure and becomes a porous structure in comparison to the other regions. This kind of porous structure in the primary coating is referred to as a "porous region".

The secondary coating is formed on the surface of the primary coating. If the primary coating includes an excessive amount of porous regions, in the secondary coating, a portion that is formed on a porous region will be susceptible to the influence of Sn that segregated in the outer layer of the base steel sheet. Specifically, in the secondary coating, in a region formed on a porous region, the adhesion decreases due to Sn that segregated in the outer layer of the base steel sheet.

Therefore, in order to achieve both a reduction in the iron loss and an improvement in the adhesion of the secondary coating of a grain-oriented electrical steel sheet, it is effective to suppress the occurrence of porous regions in the primary coating. In order to reduce porous regions in the primary coating, it is effective to reduce the content of Sn in the primary coating.

Therefore, for the grain-oriented electrical steel sheet of the present embodiment, a glow emission spectroscopic spectrum in the thickness direction from the surface of the grain-oriented electrical steel sheet is employed as an index of the content of Sn in the primary coating. Specifically, glow discharge optical emission spectroscopy is performed in the thickness direction of the base steel sheet from the surface of the secondary coating of the grain-oriented electrical steel sheet to obtain glow emission spectroscopic spectra showing the relation of the emission intensity of Mg and the emission intensity of Sn with respect to the sputtering time. The following items are defined in the glow emission spectroscopic spectra.

- The maximum emission intensity of Mg is defined as $I_{Mg/Mg}$.
- The emission intensity of Sn at the sputtering time at which Mg exhibits the maximum emission intensity is defined as $I_{Sn/Mg}$.

As described above, the primary coating is mainly composed of forsterite ($Mg_2SiO_4$). Therefore, a position where $I_{Mg/Mg}$ is detected indicates the position of the primary coating. Further, $I_{Sn/Mg}$ means the emission intensity of Sn at the detection position of $I_{Mg/Mg}$. Thus, $I_{Sn/Mg}$ can be adopted as an index of the content of Sn in the primary coating.

Therefore, the present inventors conducted further studies regarding the relation between $I_{Mg/Mg}$ and $I_{Sn/Mg}$, and the adhesion of the secondary coating. As a result, the present inventors found that if a grain-oriented electrical steel sheet that satisfies Feature 1 also satisfies the following Feature 2 and Feature 3, the iron loss can be sufficiently reduced and the adhesion of the secondary coating can also be sufficiently increased.

(Feature 2)

An intensity ratio $I_{ref}$ defined by Formula (1) is 0.0000 to 0.0006.

$$I_{ref} = I_{Sn/Mg}/I_{Mg/Mg} \qquad (1)$$

(Feature 3)

An iron loss $W_{17/50}$ measured in accordance with JIS C 2556: 2015 is less than 0.90 W/kg.

The grain-oriented electrical steel sheet of the present embodiment has been completed based on the above findings. The grain-oriented electrical steel sheet of the present embodiment is as follows, and the method for producing a grain-oriented electrical steel sheet of the present embodiment includes the following processes.

[1] A grain-oriented electrical steel sheet, including:

a base steel sheet,
a primary coating formed on the base steel sheet, and
a secondary coating formed on the primary coating,
wherein:

a chemical composition of the base steel sheet consists of, in mass%,
Si: 2.50 to 4.50%,
Mn: 0.01 to 1.00%,
Sn: 0.05 to 0.30%,
N: 0.010% or less,
C: 0.010% or less,
sol. Al: 0.010% or less,
one or more kinds of element selected from a group consisting of S and Se: 0.020% or less in total,
P: 0.00 to 0.05%,
Sb: 0.00 to 0.50%,
Cr: 0.00 to 0.50%,
Cu: 0.00 to 0.50%,
Ni: 0.00 to 0.50%, and
Bi: 0.0000 to 0.0100%,
with the balance being Fe and impurities,
and wherein:
in glow emission spectroscopic spectra obtained by performing glow discharge optical emission spectroscopy from a surface of the secondary coating in a thickness direction of the base steel sheet, the glow emission spectroscopic spectra showing a relation of an emission intensity of Mg and an emission intensity of Sn with respect to a sputtering time:

when a maximum emission intensity of Mg is defined as $I_{Mg/Mg}$, and
an emission intensity of Sn at the sputtering time at which Mg exhibits the maximum emission intensity is defined as $I_{Sn/Mg}$,
an intensity ratio $I_{ref}$ defined by Formula (1) is 0.0000 to 0.0006, and
an iron loss $W_{17/50}$ measured in accordance with JIS C 2556: 2015 is less than 0.90 W/kg.

$$I_{ref} = I_{Sn/Mg}/I_{Mg/Mg} \qquad (1)$$

[2] The grain-oriented electrical steel sheet according to [1], wherein:
the $I_{Sn/Mg}$ is 0.0021 or less.
[3] The grain-oriented electrical steel sheet according to [1] or [2], wherein:

in the glow emission spectroscopic spectra,
when the emission intensity of Sn at a time point at which a further 20.0 seconds passes from a sputtering time at which the $I_{Sn/Mg}$ is obtained is defined as $I_{Sn/Mg+20}$, an Sn concentration gradient $\Delta I_{Sn}$ defined by Formula (2) is 0.0000 to 0.0004/sec.

$$\Delta I_{Sn} = (I_{Sn/Mg+20} - I_{Sn/Mg})/20 \qquad (2)$$

[4] The grain-oriented electrical steel sheet according to any one of [1] to [3], wherein the chemical composition of the base steel sheet contains one element or more selected from a group consisting of:

P: 0.01 to 0.05%,
Sb: 0.01 to 0.50%,
Cr: 0.01 to 0.50%,
Cu: 0.01 to 0.50%,
Ni: 0.01 to 0.50%, and
Bi: 0.0001 to 0.0100%.

[5] A method for producing a grain-oriented electrical steel sheet according to [1], including:
a hot rolling process of producing a hot-rolled steel sheet by performing hot rolling on a slab having a chemical composition consisting of:

Si: 2.50 to 4.50%,
Mn: 0.01 to 1.00%,
Sn: 0.05 to 0.30%,
N: 0.002 to 0.020%,
C: 0.020 to 0.100%,
sol. Al: 0.010 to 0.050%,
one or more kinds of element selected from a group consisting of S and Se: 0.010 to 0.050% in total,
P: 0.00 to 0.05%,
Sb: 0.00 to 0.50%,
Cr: 0.00 to 0.50%,
Cu: 0.00 to 0.50%,
Ni: 0.00 to 0.50%, and
Bi: 0.0000 to 0.0100%,
with the balance being Fe and impurities;
a hot-rolled sheet annealing process of annealing the hot-rolled steel sheet;
a pickling process of performing a pickling treatment on the hot-rolled steel sheet after the hot-rolled sheet annealing process;
a cold rolling process of subjecting the hot-rolled steel sheet after the pickling process to cold rolling to produce a cold-rolled steel sheet;
a decarburization annealing process of subjecting the cold-rolled steel sheet to decarburization annealing to produce a decarburization-annealed steel sheet;
a final annealing process of applying an annealing separator to the decarburization-annealed steel sheet and subjecting the decarburization-annealed steel sheet to which the annealing separator is applied to final annealing to produce a final-annealed steel sheet on which the primary coating is formed; and
a secondary coating formation process of applying a secondary coating forming solution to the final-annealed steel sheet and subjecting the final-annealed steel sheet to which the secondary coating forming solution is applied to a heat treatment to form the secondary coating on the final-annealed steel sheet;
wherein:

in the pickling process,

a hydrochloric acid concentration in a pickling bath is set to 5 to 20% by mass, and a bath temperature is set to 80 to 100°C, and

an immersion time in the pickling bath is set to 30 to 120 seconds;

in the decarburization annealing process,

a rapid heating attainment temperature Ta is set to 800 to 900°C,

an average heating rate V1 during a period until a temperature of the cold-rolled steel sheet reaches the rapid heating attainment temperature Ta from 550°C is set to 100°C/sec or more, and

after the temperature of the cold-rolled steel sheet rises to the rapid heating attainment temperature Ta, the cold-rolled steel sheet is held for 60 seconds or more at a decarburization annealing temperature of 800 to 950°C, and an average oxygen partial pressure ratio PO4 during a period in which the cold-rolled steel sheet is held at the decarburization annealing temperature is made 0.60 or less; and

in the final annealing process,

an average heating rate V3 (°C/hr) and an average oxygen partial pressure ratio PO3 during a period until a temperature of the decarburization-annealed steel sheet reaches 1100°C from 900°C satisfy Formula (3) and Formula (4), and

a purity of a hydrogen gas introduced into a furnace atmosphere of a final annealing furnace used for the final annealing is more than 99.9%;

$$31 \times Sn + 5 \leq V3 \leq 30 \qquad (3)$$

$$0.000 \leq PO3 \leq -0.020 \times Sn + 0.015 \qquad (4)$$

where, a content of Sn in percent by mass in the slab is substituted for Sn in Formula (3) and Formula (4).

[6] The method for producing a grain-oriented electrical steel sheet according to [5], wherein:

in the decarburization annealing process, in addition,
the average oxygen partial pressure ratio PO4 satisfies Formula (5);

$$0.88 \times Sn + 0.19 \leq PO4 \leq 0.60 \qquad (5)$$

where, a content of Sn in percent by mass in the slab is substituted for Sn in Formula (5).

[7] The method for producing a grain-oriented electrical steel sheet according to [5] or [6], wherein the chemical composition of the slab contains one element or more selected from a group consisting of:

P: 0.01 to 0.05%,
Sb: 0.01 to 0.50%,
Cr: 0.01 to 0.50%,
Cu: 0.01 to 0.50%,
Ni: 0.01 to 0.50%, and
Bi: 0.0001 to 0.0100%.

The grain-oriented electrical steel sheet of the present embodiment and the method for producing the grain-oriented electrical steel sheet are described in detail hereunder. Note that, the symbol "%" in relation to elements means "mass percent" unless otherwise noted.

[Regarding structure of grain-oriented electrical steel sheet]

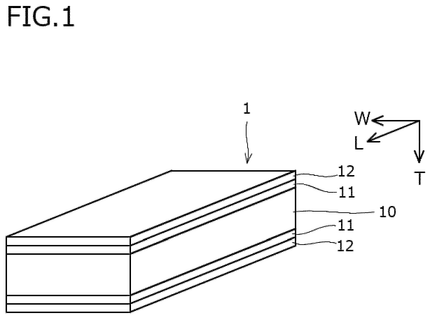

FIG. 1 is a perspective view of the grain-oriented electrical steel sheet according to the present embodiment. A direction L in the figure indicates the rolling direction of the grain-oriented electrical steel sheet. A direction W indicates the width direction of the grain-oriented electrical steel sheet. A direction T indicates the thickness direction of the grain-oriented electrical steel sheet.

Referring to FIG. 1, a grain-oriented electrical steel sheet 1 according to the present embodiment includes a base steel sheet 10, a primary coating 11, and a secondary coating 12. The primary coating 11 is formed on the base steel sheet 10. In FIG. 1, the primary coating 11 is formed on the surface of the base steel sheet 10 and is in direct contact with the surface of the base steel sheet 10. The secondary coating 12 is formed on the primary coating 11. As illustrated in FIG. 1, the primary coating 11 and the secondary coating 12 are formed on a pair of surfaces of the base steel sheet 10 (that is, the front surface and back surface of the base steel sheet 10).

The grain-oriented electrical steel sheet 1 of the present embodiment satisfies the following Feature 1 to Feature 3.

(Feature 1)

The chemical composition of the base steel sheet 10 consists of, in mass%, Si: 2.50 to 4.50%, Mn: 0.01 to 1.00%, Sn: 0.05 to 0.30%, N: 0.010% or less, C: 0.010% or less, sol. Al: 0.010% or less, one or more kinds of element selected from a group consisting of S and Se: 0.020% or less in total, P: 0.00 to 0.05%, Sb: 0.00 to 0.50%, Cr: 0.00 to 0.50%, Cu: 0.00 to 0.50%, Ni: 0.00 to 0.50%, and Bi: 0.0000 to 0.0100%, with the balance being Fe and impurities.

(Feature 2)

In glow emission spectroscopic spectra obtained by performing glow discharge optical emission spectroscopy in the thickness direction of the base steel sheet 10 from the surface of the secondary coating 12, the glow emission spectroscopic spectra showing the relation of an emission intensity of Mg and an emission intensity of Sn with respect to a sputtering time,

when a maximum emission intensity of Mg is defined as $I_{Mg/Mg}$, and
the emission intensity of Sn at the sputtering time at which Mg exhibits the maximum emission intensity is defined as $I_{Sn/Mg}$,
an intensity ratio $I_{ref}$ defined by Formula (1) is 0.0000 to 0.0006.

$$I_{ref} = I_{Sn/Mg}/I_{Mg/Mg} \qquad (1)$$

(Feature 3)

An iron loss $W_{17/50}$ measured in accordance with JIS C 2556: 2015 is less than 0.90 W/kg.

Hereunder, Feature 1 to Feature 3 of the grain-oriented electrical steel sheet 1 of the present embodiment are described.

[(Feature 1) Regarding chemical composition of base steel sheet 10]

The chemical composition of the base steel sheet 10 contains the following elements.

Si: 2.50 to 4.50%

Silicon (Si) increases the electrical resistance (specific resistance) of the steel material and reduces the iron loss of the grain-oriented electrical steel sheet 1. If the content of Si is less than 2.50%, even if the contents of other elements are within the range of the present embodiment, the steel will undergo phase transformation in a final annealing process and secondary recrystallization will not proceed sufficiently. As a result, the aforementioned advantageous effect will not be sufficiently obtained.

On the other hand, if the content of Si is more than 4.50%, even if the contents of other elements are within the range of the present embodiment, the steel sheet will become brittle.

Therefore, the content of Si is 2.50 to 4.50%.

A preferable lower limit of the content of Si is 2.80%, more preferably is 3.00%, and further preferably is 3.20%.

A preferable upper limit of the content of Si is 4.20%, more preferably is 4.00%, further preferably is 3.70%, further preferably is 3.60%, and further preferably is 3.50%.

Mn: 0.01 to 1.00%

Manganese (Mn) increases the specific resistance of the grain-oriented electrical steel sheet 1 and reduces the iron loss. Mn also increases hot workability and suppresses the occurrence of cracks during hot rolling. In addition, Mn combines with S and/or Se to form fine MnS and/or fine MnSe. The fine MnS and fine MnSe serve as precipitation nuclei for fine AlN that is utilized as an inhibitor. Therefore, if the precipitated amount of fine MnS and fine MnSe is large, a sufficient amount of fine AlN can be obtained. If the content of Mn is less than 0.01%, a sufficient amount of fine MnS and fine MnSe will not precipitate even if the contents of other elements are within the range of the present embodiment.

On the other hand, if the content of Mn is more than 1.00%, even if the contents of other elements are within the range of the present embodiment, the magnetic flux density of the grain-oriented electrical steel sheet 1 will decrease and the iron loss will also deteriorate.

Therefore, the content of Mn is 0.01 to 1.00%.

A preferable lower limit of the content of Mn is 0.02%, more preferably is 0.03%, and further preferably is 0.05%.

A preferable upper limit of the content of Mn is 0.70%, more preferably is 0.50%, further preferably is 0.30%, and further preferably is 0.10%.

Sn: 0.05 to 0.30%

Tin (Sn) improves the primary recrystallization texture by application of rapid heating during the process of raising the temperature in a decarburization annealing process. Specifically, Goss-oriented grains which serve as nuclei for secondary recrystallization are enriched in the steel sheet by Sn. By this means, the iron loss of the grain-oriented electrical steel sheet 1 is reduced. If the content of Sn is less than 0.05%, the aforementioned advantageous effect will not be sufficiently obtained even if the contents of other elements are within the range of the present embodiment.

On the other hand, if the content of Sn is more than 0.30%, even if the contents of other elements are within the range of the present embodiment, the steel sheet will become brittle or secondary recrystallization will become unstable during the process of producing the grain-oriented electrical steel sheet 1. As a result, the magnetic properties of the grain-oriented electrical steel sheet 1 will deteriorate.

Therefore, the content of Sn is 0.05 to 0.30%.

A preferable lower limit of the content of Sn is 0.07%, more preferably is 0.09%, and further preferably is 0.11%.

A preferable upper limit of the content of Sn is 0.28%, more preferably is 0.25%, further preferably is 0.22%, and further preferably is 0.20%.

N: 0.010% or less

Nitrogen (N) combines with Al to form AlN during the process of producing the grain-oriented electrical steel sheet 1, and functions as an inhibitor. Therefore, N is an essential element in the slab that is the starting material of the grain-oriented electrical steel sheet 1. However, N is removed from the steel sheet during the process of producing the grain-oriented electrical steel sheet 1. If the content of N in the grain-oriented electrical steel sheet 1 is more than 0.010%, nitrides that are a cause of magnetic aging will easily form.

Therefore, the content of N is 0.010% or less.

A preferable lower limit of the content of N is 0.001%, and more preferably is 0.002%.

A preferable upper limit of the content of N is 0.009%, more preferably is 0.008%, and further preferably is 0.007%.

C: 0.010% or less

Carbon (C) is an essential element in the slab in order to improve magnetic flux density. However, C is removed from the steel sheet during the process of producing the grain-oriented electrical steel sheet 1. If the content of C in the grain-oriented electrical steel sheet 1 is more than 0.010%, even if the contents of other elements are within the range of the present embodiment, C will form cementite ($Fe_3C$). In such a case, the iron loss of the grain-oriented electrical steel sheet 1 will deteriorate.

Therefore, the content of C is 0.010% or less.

A preferable lower limit of the content of C is 0.001%, and more preferably is 0.002%.

A preferable upper limit of the content of C is 0.009%, more preferably is 0.008%, and further preferably is 0.007%.

Sol. Al: 0.010% or less

Acid-soluble aluminum (sol. Al) combines with N to form AlN during the process of producing the grain-oriented electrical steel sheet 1, and functions as an inhibitor. However, if the content of sol. Al is more than 0.010%, Al-based inclusions will remain in the steel sheet even if the contents of other elements are within the range of the present embodiment. In such a case, the iron loss of the grain-oriented electrical steel sheet 1 will deteriorate.

Therefore, the content of sol. Al is 0.010% or less.

A preferable lower limit of the content of sol. Al is 0.001%, and more preferably is 0.002%.

A preferable upper limit of the content of sol. Al is 0.009%, more preferably is 0.008%, and further preferably is 0.007%.

One or more kinds of element selected from the group consisting of S and Se: 0.020% or less in total

Sulfur (S) and selenium (Se) combine with Mn during the production process to form fine MnS or MnSe that are inhibitors. Therefore, S and Se are essential elements in the slab. However, S and Se are removed from the steel sheet during the process of producing the grain-oriented electrical steel sheet 1. If the total content of one or more kinds of element selected from the group consisting of S and Se in the grain-oriented electrical steel sheet 1 is more than 0.020%, even if the contents of other elements are within the range of the present embodiment, MnS or MnSe will remain in the base steel sheet 10. In such a case, the iron loss of the grain-oriented electrical steel sheet 1 will deteriorate.

Therefore, the total content of one or more kinds of element selected from the group consisting of S and Se is 0.020% or less.

A preferable lower limit of the total content of one or more kinds of element selected from the group consisting of S and Se is 0.001%, and more preferably is 0.002%.

A preferable upper limit of the total content of one or more kinds of element selected from the group consisting of S and Se is 0.018%, more preferably is 0.016%, and further preferably is 0.014%.

Preferably, the content of S or the total content of S and Se is 0.020% or less. Note that, the content of Se may be 0%.

The balance of the chemical composition of the base steel sheet 10 is Fe and impurities. Here, the term "impurities" means substances which, during industrial production of the base steel sheet 10 that is the starting material of the grain-oriented electrical steel sheet 1, are mixed in from ore or scrap that is used as the raw material, or from the production environment or the like, and which are not intentionally contained but are allowed within a range that does not adversely affect the grain-oriented electrical steel sheet 1 of the present embodiment.

[Regarding Optional Elements]

The chemical composition of the base steel sheet 10 may further contain one element or two or more elements selected from the group consisting of P, Sb, Cr, Cu, Ni, and Bi in lieu of a part of Fe.

P: 0.00 to 0.05%

Phosphorus (P) is an optional element, and does not have to be contained. That is, the content of P may be 0.00%.

P improves the primary recrystallization texture during the process of producing the grain-oriented electrical steel sheet 1 and reduces the iron loss of the grain-oriented electrical steel sheet 1. If the chemical composition includes even a small content of P, the aforementioned advantageous effect will be obtained to a certain extent.

However, P reduces workability of the steel sheet. If the content of P is more than 0.05%, workability of the steel sheet will markedly decrease even if the contents of other elements are within the range of the present embodiment.

Therefore, the content of P is 0.00 to 0.05%.

A preferable lower limit of the content of P is 0.01%, and more preferably is 0.02%.

A preferable upper limit of the content of P is 0.04%, and more preferably is 0.03%.

Sb: 0.00 to 0.50%

Antimony (Sb) is an optional element, and does not have to be contained. That is, the content of Sb may be 0.00%.

When contained, Sb functions as an inhibitor and stabilizes the secondary recrystallization during the process of producing the grain-oriented electrical steel sheet 1. As a result, the iron loss of the grain-oriented electrical steel sheet 1 is reduced. If the chemical composition includes even a small content of Sb, the aforementioned advantageous effect will be obtained to a certain extent.

However, if the content of Sb is more than 0.50%, even if the contents of other elements are within the range of the present embodiment, adhesion of the primary coating to the base steel sheet 10 will decrease.

Therefore, the content of Sb is 0.00 to 0.50%.

A preferable lower limit of the content of Sb is 0.01%, more preferably is 0.03%, and further preferably is 0.05%.

A preferable upper limit of the content of Sb is 0.40%, more preferably is 0.30%, further preferably is 0.20%, and further preferably is 0.10%.

Cr: 0.00 to 0.50%

Chromium (Cr) is an optional element, and does not have to be contained. That is, the content of Cr may be 0.00%.

When contained, Cr increases the degree of integration of Goss-oriented grains during secondary recrystallization in the process of producing the grain-oriented electrical steel sheet 1. If the chemical composition includes even a small content of Cr, the aforementioned advantageous effect will be obtained to a certain extent.

However, if the content of Cr is more than 0.50%, even if the contents of other elements are within the range of the present embodiment, Cr oxides will form. In such a case, the iron loss of the grain-oriented electrical steel sheet 1 will deteriorate.

Therefore, the content of Cr is 0.00 to 0.50%.

A preferable lower limit of the content of Cr is 0.01%, more preferably is 0.03%, and further preferably is 0.05%.

A preferable upper limit of the content of Cr is 0.40%, more preferably is 0.30%, further preferably is 0.20%, and further preferably is 0.10%.

Cu: 0.00 to 0.50%

Copper (Cu) is an optional element, and does not have to be contained. That is, the content of Cu may be 0.00%.

When contained, Cu increases adhesion of the primary coating 11 to the base steel sheet 10. If the chemical composition includes even a small content of Cu, the aforementioned advantageous effect will be obtained to a certain extent.

However, if the content of Cu is more than 0.50%, even if the contents of other elements are within the range of the present embodiment, hot workability during the process of producing the grain-oriented electrical steel sheet 1 will decrease.

Therefore, the content of Cu is 0.00 to 0.50%.

A preferable lower limit of the content of Cu is 0.01%, more preferably is 0.03%, and further preferably is 0.05%.

A preferable upper limit of the content of Cu is 0.40%, more preferably is 0.30%, further preferably is 0.20%, and further preferably is 0.10%.

Ni: 0.00 to 0.50%

Nickel (Ni) is an optional element, and does not have to be contained. That is, the content of Ni may be 0.00%.

When contained, Ni increases the degree of integration of Goss-oriented grains during secondary recrystallization in the process of producing the grain-oriented electrical steel sheet 1. If the chemical composition includes even a small content of Ni, the aforementioned advantageous effect will be obtained to a certain extent.

However, if the content of Ni is more than 0.50%, even if the contents of other elements are within the range of the present embodiment, the secondary recrystallization will, on the contrary, become unstable. In such a case, the iron loss of the grain-oriented electrical steel sheet 1 will deteriorate.

Therefore, the content of Ni is 0.00 to 0.50%.

A preferable lower limit of the content of Ni is 0.01%, more preferably is 0.03%, and further preferably is 0.05%.

A preferable upper limit of the content of Ni is 0.40%, more preferably is 0.30%, further preferably is 0.20%, and further preferably is 0.10%.

Bi: 0.0000 to 0.0100%

Bismuth (Bi) is an optional element, and does not have to be contained. That is, the content of Bi may be 0.0000%.

When contained, Bi functions as an inhibitor and stabilizes the secondary recrystallization during the process of producing the grain-oriented electrical steel sheet 1. As a result, the magnetic properties of the grain-oriented electrical steel sheet 1 are enhanced. If the chemical composition includes even a small content of Bi, the aforementioned advantageous effect will be obtained to a certain extent.

However, if the content of Bi is more than 0.0100%, even if the contents of other elements are within the range of the present embodiment, adhesion of the primary coating 11 to the base steel sheet 10 will decrease.

Therefore, the content of Bi is 0.0000 to 0.0100%.

A preferable lower limit of the content of Bi is 0.0001 %, more preferably is 0.0005%, further preferably is 0.0010%, and further preferably is 0.0020%.

A preferable upper limit of the content of Bi is 0.0090%, more preferably is 0.0070%, and further preferably is 0.0050%.

[Method for determining chemical composition of base steel sheet 10]

The chemical composition of the base steel sheet of the present embodiment can be determined by a well-known composition analysis method. First, the primary coating 11 and the secondary coating 12 are removed from the base steel sheet 10 by the following method. Specifically, the grain-oriented electrical steel sheet 1 including the secondary coating 12 is immersed in a high-temperature alkaline solution to remove the secondary coating 12. The composition and temperature of the alkaline solution as well as the immersion time may be adjusted as appropriate. For example, the grain-oriented electrical steel sheet 1 including the secondary coating 12 is immersed in a sodium hydroxide aqueous solution consisting of 30 to 50% by mass of NaOH and 50 to 70% by mass of $H_2O$ at a temperature of 80 to 90°C for 5 to 10 minutes. After immersion, the steel sheet is washed with water and then dried. By performing this process, the secondary coating 12 is removed from the grain-oriented electrical steel sheet 1.

Further, the grain-oriented electrical steel sheet 1 from which the secondary coating 12 has been removed but on which the primary coating 11 remains is immersed in high-temperature hydrochloric acid to remove the primary coating 11. The concentration and temperature of the hydrochloric acid as well as the immersion time may be adjusted as appropriate. For example, the grain-oriented electrical steel sheet 1 from which the secondary coating 12 has been removed and on which the primary coating 11 remains is immersed in hydrochloric acid at a concentration of 30 to 40% by mass at a temperature of 80 to 90°C for 1 to 5 minutes. After immersion, the steel sheet is washed with water and then dried. By performing the above processes, the base steel sheet 10 from which the secondary coating 12 and the primary coating 11 have been removed is obtained.

Machined chips are taken from the obtained base steel sheet 10. The machined chips that are taken are dissolved in acid to obtain a solution. The solution is subjected to ICP-AES (Inductively Coupled Plasma Atomic Emission Spectrometry) to perform elementary analysis of the chemical composition. The content of C and the content of S are determined by a well-known high-frequency combustion method (combustion-infrared absorption method). The content of N is determined using a well-known inert gas fusion-thermal conductivity method. Specifically, analysis can be performed using, for example, a component analyzer (product name: ICPS-8000) manufactured by Shimadzu Corporation.

Note that, for the content of each element, a numerical value up to the least significant digit of the content of each element defined in the present embodiment that is obtained by rounding off a fraction of the measured numerical value based on the significant figures defined in the present embodiment is taken as the content of the relevant element. For example, the content of C in the base steel sheet of the present embodiment is defined as a numerical value up to the thousandths place. Therefore, a numerical value up to the thousandths place obtained by rounding off the ten-thousandths place of the measured numerical value is taken as the content of C.

Similarly, for the content of each element other than the content of C in the base steel sheet of the present embodiment also, a value obtained by rounding off a fraction of the numerical value of the measured value up to the least significant digit defined in the present embodiment is taken as the content of the relevant element.

Note that, rounding off means rounding down if the fraction is less than 5, and rounding up if the fraction is 5 or more.

[Regarding primary coating 11]

The primary coating 11 is a coating that is mainly composed of forsterite ($Mg_2SiO_4$). Specifically, the primary coating 11 contains forsterite in an amount of 50% by mass or more. The primary coating 11 is formed by a reaction between an annealing separator containing magnesia and an oxide film such as $SiO_2$ on the surface of the base steel sheet 10 or elements contained in the base steel sheet 10 during final annealing. Therefore, the primary coating 11 has a composition derived from the annealing separator and the chemical composition of the base steel sheet 10. For example, the primary coating 11 contains the aforementioned forsterite, spinel ($MgAl_2O_4$), and sulfide. The sulfide contains one or more kinds of element among Mn, Ca, and Ti.

[Regarding secondary coating 12]

The secondary coating 12 is formed on the primary coating 11. In a case where a plurality of the grain-oriented electrical steel sheets 1 are stacked and used, the secondary coating 12 secures the insulation between the grain-oriented electrical steel sheets 1 that are stacked on each other. The secondary coating 12 has a well-known composition. Specifically, the secondary coating 12 contains at least one kind or more of inorganic substance such as a metal chromate, a metal phosphate, colloidal silica, a Zr compound, and a Ti compound. Preferably the secondary coating 12 is a coating which is mainly composed of a phosphate compound. That is, the secondary coating 12 contains a phosphate compound.

The secondary coating 12 may contain, for example, one kind or more selected from the group consisting of colloidal silica and polytetrafluoroethylene together with the phosphate compound. The phosphate compound is, for example, sodium phosphate, aluminum phosphate, or magnesium phosphate.

[(Feature 2) Regarding intensity ratio $I_{ref}$]

In the grain-oriented electrical steel sheet 1 of the present embodiment, in addition, the ratio of the Sn concentration to the Mg concentration in the primary coating is sufficiently low. Specifically, glow discharge optical emission spectroscopy is performed in the thickness direction T of the base steel sheet 10 from the surface of the secondary coating 12 to obtain glow emission spectroscopic spectra showing the relation of the emission intensity of Mg and emission intensity of Sn with respect to the sputtering time. In the obtained glow emission spectroscopic spectra, the maximum emission intensity of Mg is defined as $I_{Mg/Mg}$, and the emission intensity of Sn at the sputtering time at which Mg exhibits the maximum emission intensity is defined as $I_{Sn/Mg}$. In this case, an intensity ratio $I_{ref}$ defined by Formula (1) is 0.0000 to 0.0006.

$$I_{ref} = I_{Sn/Mg}/I_{Mg/Mg} \quad (1)$$

Hereunder, the intensity ratio $I_{ref}$ is described.

Sn in the base steel sheet 10 promotes enrichment of fine Goss-oriented grains during primary recrystallization. Therefore, Sn increases the degree of integration to Goss orientation in the grain-oriented electrical steel sheet 1 and reduces the iron loss of the grain-oriented electrical steel sheet 1.

On the other hand, since Sn is a segregation element, Sn tends to segregate in the outer layer of the base steel sheet 10. Therefore, in the process of producing the grain-oriented electrical steel sheet 1, Sn that segregated in the outer layer of the base steel sheet 10 diffuses into the primary coating 11. In a case where Sn excessively diffused into the primary coating 11, a region where Sn has excessively penetrated in the primary coating 11 does not become a dense structure and becomes a porous region in comparison to the other regions.

The secondary coating 12 is formed on the surface of the primary coating 11. If the primary coating 11 includes an excessive amount of porous regions, in the secondary coating 12, a portion that is formed on a porous region will be susceptible to the influence of Sn that segregated in the outer layer of the base steel sheet 10. Specifically, in the secondary coating 12, in a region formed on a porous region, the adhesion will decrease due to Sn that segregated in the outer layer of the base steel sheet 10.

Therefore, in order to achieve both a reduction in the iron loss and an improvement in the adhesion of the secondary coating 12 of the grain-oriented electrical steel sheet 1, it is effective to provide the base steel sheet 10 with a chemical composition that satisfies Feature 1 and also to suppress the occurrence of porous regions in the primary coating 11.

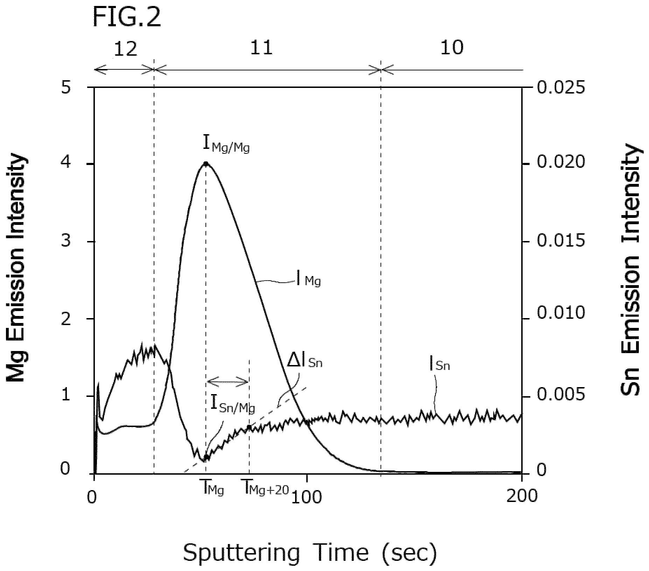

FIG. 2 is a graph showing glow emission spectroscopic spectra of Mg and Sn (a GDS spectrum of Mg and a GDS spectrum of Sn) obtained by performing glow discharge optical emission spectroscopy in the thickness direction T from the surface of the secondary coating 12 of the grain-oriented electrical steel sheet 1. The abscissa in FIG. 2 represents the sputtering time in the glow discharge optical emission spectroscopy. The ordinate in FIG. 2 represents the emission intensity of Mg and the emission intensity of Sn. Referring to FIG. 2, $I_{Mg}$, $I_{Sn}$, $I_{Mg/Mg}$, $I_{Sn/Mg}$, and $I_{ref}$ are defined as follows.

Ing:
Glow discharge optical emission spectroscopy is performed from the surface of the grain-oriented electrical steel sheet 1, that is, the surface of the secondary coating 12, in the thickness direction T of the grain-oriented electrical steel sheet 1. A glow emission spectroscopic spectrum of Mg (GDS spectrum of Mg) is obtained by the glow discharge optical emission spectroscopy. The GDS spectrum of Mg shows the relation between the sputtering time and the emission intensity of Mg, with the surface of the secondary coating 12 taken as the measurement start time (that is, sputtering time = 0). The obtained GDS spectrum of Mg is defined as $I_{Mg}$.

$I_{Sn}$:
A glow emission spectroscopic spectrum of Sn (GDS spectrum of Sn) is obtained by the glow discharge optical emission spectroscopy described above. The obtained GDS spectrum of Sn is defined as $I_{Sn}$. If the emission intensity is 0.01 or less, the GDS spectrum is smoothed to remove noise. In the smoothing, a 50-section moving average line is adopted as an approximate value. One section means a measurement interval, which is 0.025 seconds.

Note that, in order to perform zero-point correction for the emission intensity of Sn, the emission intensity of Sn in each section of a GDS spectrum of a reference steel sheet that has a chemical composition in which the content of Sn is 0% and which consists of the elements other than Sn described in Feature 1 with the balance being Fe and impurities and in which the content of each element is within the range of the content of the corresponding element described in Feature 1 is taken as an offset value. In each section of the obtained GDS spectrum of Sn described above, a value obtained by excluding the offset value of Sn of the reference steel sheet is taken as the emission intensity of Sn in each section.

$I_{Mg/Mg}$:
The maximum emission intensity in the GDS spectrum of Mg is defined as $I_{Mg/Mg}$.

$I_{Sn/Mg}$:
The sputtering time at $I_{Mg/Mg}$ in the GDS spectrum of Mg is defined as $T_{Mg}$. In the GDS spectrum of Sn, the emission intensity of Sn at a sputtering time $T_{Mg}$ is defined as $I_{Sn/Mg}$.

$I_{ref}$:
The ratio of $I_{Sn/Mg}$ to $I_{Mg/Mg}$ is defined as an intensity ratio $I_{ref}$. That is, the intensity ratio $I_{ref}$ is defined by Formula (1).

$$I_{ref} = I_{Sn/Mg}/I_{Mg/Mg} \qquad (1)$$

As described above, the primary coating 11 is a coating that is mainly composed of forsterite ($Mg_2SiO_4$), and has the highest content of Mg in comparison to the secondary coating 12 and the base steel sheet 10. Therefore, in FIG. 2, a region 11 that includes $I_{Mg/Mg}$ in the GDS spectrum $I_{Mg}$ of Mg corresponds to the primary coating 11. Further, a region 10 on the side where the sputtering time is longer than for the primary coating 11 and in which the Sn intensity in the GDS spectrum $I_{Sn}$ of Sn is approximately constant even after the sputtering time elapses corresponds to the base steel sheet 10. A region 12 on the side where the sputtering time is shorter than for the primary coating 11 and in which the Mg intensity in the GDS spectrum $I_{Mg}$ of Mg is approximately constant even after the sputtering time elapses corresponds to the secondary coating 12.

The intensity ratio $I_{ref}$ defined by Formula (1) is an index of the Sn concentration to the Mg concentration in the primary coating 11. When the intensity ratio $I_{ref}$ is more than 0.0006, the Sn concentration in the primary coating 11 is excessively high. In this case, there will be an excessively large amount of porous regions in the primary coating 11. Therefore, even if the grain-oriented electrical steel sheet 1 satisfies Feature 1 and is excellent in iron loss, the adhesion of the secondary coating 12 will decrease.

When the intensity ratio $I_{ref}$ is 0.0006 or less, in the grain-oriented electrical steel sheet 1 that satisfies Feature 1, both excellent iron loss and excellent adhesion of the secondary coating 12 can be achieved. Therefore, in the grain-oriented electrical steel sheet 1 of the present embodiment, the intensity ratio $I_{ref}$ is 0.0000 to 0.0006.

A preferable upper limit of the intensity ratio $I_{ref}$ is 0.0005, and more preferably is 0.0004. The lower limit of the intensity ratio $I_{ref}$ is preferably as low as possible.

Note that, a preferable upper limit of $I_{Sn/Mg}$ is 0.0021 or less, more preferably is 0.0020, further preferably is 0.0018, further preferably is 0.0016, and further preferably is 0.0014.

A preferable lower limit of $I_{Nn/Mg}$ is 0.0001, and more preferably is 0.0000.

[Method for determining intensity ratio $I_{ref}$]

The intensity ratio $I_{ref}$ can be determined by the following method.

First, a sample with dimensions of 30 mm in a rolling direction L and 40 mm in a width direction W and having the same thickness as the thickness of the grain-oriented electrical steel sheet 1 is taken from a central portion in the width direction W of the grain-oriented electrical steel sheet 1.

Glow discharge optical emission spectroscopy is performed in the thickness direction T of the base steel sheet 10 from the surface of the secondary coating 12 of the sample or from the surface of the primary coating 11 after removing the secondary coating 12 of the sample by the method described above, and glow emission spectroscopic spectra (GDS spectra) of Mg and Sn are measured. Specifically, the GDS spectrum of Mg and the GDS spectrum of Sn are measured using a high frequency glow emission spectroscope (GD-OES, manufactured by Rigaku Corporation, GDA750) in an argon atmosphere (Ar pressure: 3 hPa), with a power output of 30 W applied using the sample as a cathode. The measurement area is set to 4 mm $\varphi$, the measurement time is set to 200 seconds, and the measurement interval is set to 0.025 seconds.

In the obtained GDS spectrum of Mg, $I_{Mg/Mg}$ is determined. Further, in the GDS spectrum of Sn, the intensity of Sn $I_{Sn/Mg}$ at the sputtering time $T_{Mg}$ is determined. The obtained $I_{Mg/Mg}$ and $I_{Sn/Mg}$ are used to determine the intensity ratio $I_{ref}$ based on Formula (1).

The significant figures of $I_{Mg/Mg}$ are to be to the tenths place. That is, a value obtained by rounding off the numerical value of the hundredths place is adopted as $I_{Mg/Mg}$. The significant figures of $I_{Sn/Mg}$ are to be to the ten-thousandths place. That is, a value obtained by rounding off the numerical value of the hundred-thousandths place is adopted as $I_{Sn/Mg}$. The significant figures of the intensity ratio $I_{ref}$ are to be to the ten-thousandths place. That is, a value obtained by rounding off the numerical value of the hundred-thousandths place is adopted as the intensity ratio $I_{ref}$.

Note that, in the grain-oriented electrical steel sheet 1 of the present embodiment, the intensity $I_{Sn/Mg}$ of Sn in the GDS spectrum is 0.0021 or less. A preferable upper limit of the intensity $I_{Sn/Mg}$ is 0.0020, more preferably is 0.0019, and further preferably is 0.0018. A preferable lower limit of the intensity $I_{Sn/Mg}$ is 0.0005, more preferably is 0.0003, further preferably is 0.0001, and further preferably is 0.0000.

[(Feature 3) Regarding iron loss]

In the grain-oriented electrical steel sheet 1 of the present embodiment that satisfies the aforementioned Feature 1 and Feature 2, in addition, an iron loss $W_{17/50}$ measured in accordance with JIS C 2556: 2015 is less than 0.90 W/kg. A preferable upper limit of the iron loss $W_{17/50}$ of the grain-oriented electrical steel sheet 1 of the present embodiment is 0.88 W/kg, and more preferably is 0.85 W/kg.

[Regarding preferable Sn concentration gradient $\Delta I_{Sn}$]

Preferably, the grain-oriented electrical steel sheet 1 of the present embodiment also satisfies the following Feature 4.

(Feature 4)

In the glow emission spectroscopic spectra, when the emission intensity of Sn at a time point at which 20.0 seconds passes from the sputtering time at which $I_{Sn/Mg}$ is obtained is defined as $I_{Sn/Mg+20}$, an Sn concentration gradient $\Delta I_{Sn}$ defined by Formula (2) is 0.0000 to 0.0004/sec.

$$\Delta I_{Sn} = (I_{Sn/Mg+20} - I_{Sn/Mg})/20 \qquad (2)$$

The grain-oriented electrical steel sheet 1 of the present embodiment does not have to satisfy the above Feature 4. When the grain-oriented electrical steel sheet 1 satisfies Feature 4, the adhesion of the secondary coating 12 is further improved. Hereunder, Feature 4 is described.

$\Delta I_{Sn}$ is defined as follows.

$\Delta I_{Sn}$:
Referring to FIG. 2, a time point at which 20.0 seconds passes from the sputtering time $T_{Mg}$ is defined as a sputtering time $T_{Mg+20}$. In the GDS spectrum of Sn, the emission intensity of Sn at the sputtering time $T_{Mg+20}$ is defined as $I_{Sn/Mg+20}$. At this time, the Sn concentration gradient $\Delta I_{Sn}$ is defined by the aforementioned Formula (2).

The Sn concentration gradient $\Delta I_{Sn}$ is an index of a gradient of the Sn concentration in the primary coating 11. In the grain-oriented electrical steel sheet 1 that satisfies Feature 1 and Feature 2, if the Sn concentration gradient $\Delta I_{Sn}$ is 0.0004/sec or less, the gradient of the Sn concentration in the primary coating 11 is moderate, and not steep. Therefore, the Sn concentration in the primary coating 11 is suppressed more effectively. Thus, porous regions in the primary coating 11 are suppressed more effectively. As a result, in the grain-oriented electrical steel sheet 1, the adhesion of the secondary coating 12 is further improved. Therefore, the Sn concentration gradient $\Delta I_{Sn}$ is 0.0000 to 0.0004/sec.

A preferable upper limit of the Sn concentration gradient $\Delta I_{Sn}$ is 0.0003, and more preferably is 0.0002. The Sn concentration gradient $\Delta I_{Sn}$ is preferably as low as possible.

[Method for determining Sn concentration gradient $\Delta I_{Sn}$]

The Sn concentration gradient $\Delta I_{Sn}$ can be determined by the following method.

$I_{Sn/Mg}$ and $I_{Sn/Mg+20}$ are determined in a GDS spectrum of Sn obtained by glow discharge optical emission spectroscopy carried out under the conditions described in the above section [Method for determining intensity ratio $I_{ref}$]. The obtained $I_{Sn/Mg}$ and $I_{Sn/Mg+20}$ are used to determine the Sn concentration gradient $\Delta I_{Sn}$ based on Formula (2).

The significant figures of $I_{Sn/Mg}$ and $I_{Sn/Mg+20}$ are to be to the ten-thousandths place. That is, $I_{Sn/Mg}$ and $I_{Sn/Mg+20}$ are values obtained by rounding off the hundred-thousandths place of each of the corresponding numerical values that are determined. The significant figures of the Sn concentration gradient $\Delta I_{Sn}$ are to be to the ten-thousandths place. That is, the Sn concentration gradient $\Delta I_{Sn}$ is a value obtained by rounding off the hundred-thousandths place of the determined numerical value.

The grain-oriented electrical steel sheet 1 according to the present embodiment satisfies Feature 1 to Feature 3. Therefore, excellent iron loss and excellent adhesion of the secondary coating 12 can both be achieved.

Preferably, the grain-oriented electrical steel sheet 1 of the present embodiment also satisfies Feature 4. In this case, the adhesion of the secondary coating 12 is further improved.

[Production method]

Hereunder, one example of a method for producing the grain-oriented electrical steel sheet 1 of the present embodiment is described. Note that, as long as the grain-oriented electrical steel sheet 1 of the present embodiment is constituted as described above, the production method is not particularly limited. However, the method for producing the grain-oriented electrical steel sheet 1 described hereunder is a favorable example of a method for producing the grain-oriented electrical steel sheet 1 of the present embodiment.

[Production process flow]

The method for producing the grain-oriented electrical steel sheet 1 of the present embodiment includes the following processes.

    (Process 1) Hot rolling process
    (Process 2) Hot-rolled sheet annealing process
    (Process 3) Pickling process
    (Process 4) Cold rolling process
    (Process 5) Decarburization annealing process
    (Process 6) Final annealing process
    (Process 7) Secondary coating formation process

A feature of the method for producing the grain-oriented electrical steel sheet 1 of the present embodiment is that the following production conditions are satisfied in the pickling process, the decarburization annealing process, and the final annealing process.

(Process 3: Production condition in pickling process)

Condition 1: The hydrochloric acid concentration in the pickling bath is to be 5 to 20% by mass, the bath temperature is to be 80 to 100°C, and the immersion time in the pickling bath is to be 30 to 120 seconds.

(Process 5: Production conditions in decarburization annealing process)

Condition 2: A rapid heating attainment temperature Ta is to be 800 to 900°C.

Condition 3: An average heating rate V1 during a period until the temperature of the cold-rolled steel sheet reaches the rapid heating attainment temperature Ta from 550°C is to be 100°C/sec or more.

Condition 4: After the temperature of the cold-rolled steel sheet is raised to the rapid heating attainment temperature Ta, the cold-rolled steel sheet is held for 60 seconds or more at a decarburization annealing temperature of 800 to 950°C, and an average oxygen partial pressure ratio PO4 during the period in which the cold-rolled steel sheet is held at the decarburization annealing temperature is to be 0.60 or less.

(Process 6: Production conditions in final annealing process)

Condition 5: An average heating rate V3 and an average oxygen partial pressure ratio PO3 during a period until the temperature of the decarburization-annealed steel sheet reaches 1100°C from 900°C satisfy Formula (3) and Formula (4).

$$31 \times Sn + 5 \leq V3 \leq 30 \quad (3)$$

$$0.000 \leq PO3 \leq -0.020 \times Sn + 0.015 \quad (4)$$

Where, the content of Sn in percent by mass in the slab is substituted for Sn in Formula (3) and Formula (4).

Condition 6: The purity of hydrogen gas in the atmosphere at the final annealing temperature in the final annealing furnace is to be more than 99.9% (that is, more than 3N (4N or more)).

Hereunder, each of the processes 1 to 7 and each of the conditions 1 to 6 are described.

[(Process 1) Hot rolling process]

In the hot rolling process, a prepared slab is subjected to hot rolling to produce a hot-rolled steel sheet.

[Chemical composition of slab]

The chemical composition of the slab consists of, in mass%, Si: 2.50 to 4.50%, Mn: 0.01 to 1.00%, Sn: 0.05 to 0.30%, N: 0.002 to 0.020%, C: 0.020 to 0.100%, sol. Al: 0.010 to 0.050%, one or more kinds of element selected from a group consisting of S and Se: 0.010 to 0.050% in total, P: 0.00 to 0.05%, Sb: 0.00 to 0.50%, Cr: 0.00 to 0.50%, Cu: 0.00 to 0.50%, Ni: 0.00 to 0.50%, and Bi: 0.0000 to 0.0100%, with the balance being Fe and impurities.

The chemical composition of the slab may contain one element or more selected from a group consisting of P: 0.01 to 0.05%, Sb: 0.01 to 0.50%, Cr: 0.01 to 0.50%, Cu: 0.01 to 0.50%, Ni: 0.01 to 0.50%, and Bi: 0.0001 to 0.0100%.

In the chemical composition of the slab, the contents of N, C, sol. Al, S and Se are high compared to the chemical composition of the base steel sheet 10. These elements act as inhibitors in the production process. However, most of these elements are removed from the steel sheet in the final annealing process. As a result of the elements being removed, the chemical composition of the base steel sheet 10 is obtained. The action of each element is the same as the action of the corresponding element described above in the section [(Feature 1) Regarding chemical composition of base steel sheet 10].

The slab is produced by a well-known method. For example, a molten steel is produced (melted). The molten steel is used to produce a slab by a continuous casting process.

The prepared slab is subjected to hot rolling using a hot rolling mill to produce a steel sheet (hot-rolled steel sheet). First, the steel material is heated. For example, the slab is charged into a well-known reheating furnace or a well-known soaking pit and heated. A preferable heating temperature of the slab is 1100 to 1450°C.

The heated slab is subjected to hot rolling using a hot rolling mill to produce a hot-rolled steel sheet. The hot rolling mill is equipped with a roughing mill, and a finish rolling mill that is arranged downstream of the roughing mill. The roughing mill is equipped with one rough rolling stand or a plurality of rough rolling stands arranged in a row. Each rough rolling stand includes a pair of work rolls arranged one above the other. In a case where there is only one rough rolling stand, the roughing mill is a reverse rolling mill. In a case where a plurality of rough rolling stands are arranged, the roughing mill may be a tandem rolling mill or may be a reverse rolling mill. The finish rolling mill is equipped with finish rolling stands that are arranged in a row. Each finish rolling stand includes a pair of work rolls arranged one above the other. After the heated slab is rolled by the roughing mill, the slab is subjected to further rolling by the finish rolling mill to produce a hot-rolled steel sheet.

The thickness of the hot-rolled steel sheet produced by the hot rolling is not particularly limited, and the thickness can be made a well-known thickness. The thickness of the hot-rolled steel sheet is, for example, 1.5 mm to 3.0 mm.

[(Process 2) Hot-rolled sheet annealing process]

In the hot-rolled sheet annealing process, the hot-rolled steel sheet produced in the hot rolling process is subjected to an annealing treatment. By performing the hot-rolled sheet annealing process, recrystallization occurs in the steel sheet structure, and the magnetic properties improve.

It suffices to use a well-known method to perform the hot-rolled sheet annealing process. The method for heating the hot-rolled steel sheet is not particularly limited, and a well-known heating method may be employed. The annealing temperature is, for example, 900 to 1200°C, and the holding time at the annealing temperature is, for example, 10 to 300 seconds.

[(Process 3) Pickling process]

In the pickling process, a pickling treatment is performed on the hot-rolled steel sheet at a timing that is after the hot-rolled sheet annealing process and is before the cold rolling process. The pickling treatment satisfies the following condition 1.

[Condition 1: Regarding pickling time]

The hydrochloric acid concentration in the pickling bath is to be 5 to 20% by mass. The temperature of the pickling bath (bath temperature) is to be 80 to 100°C. The immersion time (pickling time) in the pickling bath is to be 30 to 120 seconds (condition 1).

If the pickling time in the aforementioned pickling bath is more than 120 seconds, not only will a scale layer of the hot-rolled steel sheet be removed, but an Si-free layer that is present at the outer layer of the hot-rolled steel sheet will also be removed. In such a case, in the decarburization annealing process that is a subsequent process, a strong Si oxidized layer will be formed at the outer layer of the steel sheet, and formation of an internal Si oxidized layer in the outer layer of the steel sheet will be insufficient. Consequently, the amount of primary coating formed in the final annealing process after the decarburization annealing process will be insufficient. As a result, sufficient adhesion of the secondary coating to the steel sheet will not be obtained in the produced steel sheet.

If the pickling time is 120 seconds or less, although the scale layer of the hot-rolled steel sheet will be removed, the Si-free layer that is present at the outer layer of the hot-rolled steel sheet will sufficiently remain. Therefore, sufficient adhesion of the secondary coating to the steel sheet will be obtained.

Although the lower limit of the pickling time is not particularly limited, if the pickling time is 30 seconds or more, the scale layer of the hot-rolled steel sheet will be sufficiently removed. Therefore, the lower limit of the pickling time is 30 seconds.

[(Process 4) Cold rolling process]

In the cold rolling process, the hot-rolled steel sheet after the hot-rolled sheet annealing process is subjected to cold rolling once or a plurality of times. The cold rolling is performed using a cold rolling mill. The cold rolling mill is, for example, a tandem rolling mill which is equipped with a plurality of cold rolling stands arranged in a row, in which each cold rolling stand includes a pair of work rolls. The cold rolling mill may also be a single cold rolling stand of a reverse type.

In the cold rolling process, the cold rolling may be cold rolling that is performed only once or may be cold rolling that is performed a plurality of times. In the case of performing cold rolling a plurality of times, after performing cold rolling once using the aforementioned cold rolling mill, an intermediate annealing treatment may be performed for the purpose of softening the steel sheet. In this case, after the intermediate annealing treatment, the next cold rolling is performed. That is, an intermediate annealing treatment may be performed between cold rolling passes.

It suffices to adopt well-known conditions as the conditions for the intermediate annealing treatment performed between one cold rolling pass and the next cold rolling pass. For example, the annealing temperature in the intermediate annealing treatment is 900 to 1200°C, and the holding time at the annealing temperature is 30 to 1800 seconds. After strain introduced into the steel sheet in the previous cold rolling pass is reduced (the steel sheet is softened) by the intermediate annealing treatment, the next cold rolling pass is performed.

Note that, in the cold rolling process, as described above, it is also possible to perform cold rolling only one time. The thickness of the cold-rolled steel sheet produced by the cold rolling is not particularly limited, and the thickness can be set to a well-known thickness. The thickness of the cold-rolled steel sheet is, for example, 0.17 mm to 0.22 mm.

[(Process 5) Decarburization annealing process]

In the decarburization annealing process, the cold-rolled steel sheet after the cold rolling process is subjected to decarburization annealing to cause primary recrystallization to occur.

The decarburization annealing process includes the following processes.

(Process 51) Temperature raising process
(Process 52) Decarburization process
(Process 53) Cooling process
Hereunder, each of processes 51 to 53 is described.

[(Process 51) Temperature raising process]

In the temperature raising process, first, the cold-rolled steel sheet after the cold rolling process is charged into a heat treatment furnace. In the heat treatment furnace (continuous annealing furnace) for decarburization annealing in the present embodiment, the temperature of the cold-rolled steel sheet is increased to a rapid heating attainment temperature Ta of 800 to 900°C at an average heating rate V1 by, for example, electrical heating or high frequency induction heating. After reaching the rapid heating attainment temperature Ta, the temperature of the steel sheet is raised or cooled to the decarburization annealing temperature. The decarburization annealing temperature is to be 800 to 950°C.

[(Process 52) Decarburization process]

In the decarburization process, the cold-rolled steel sheet after the temperature raising process is held at the decarburization annealing temperature to perform decarburization annealing. By this means, primary recrystallization is caused to occur in the steel sheet. By performing the decarburization annealing, carbon in the steel sheet is removed from the steel sheet, and primary recrystallization occurs. As mentioned above, the decarburization annealing temperature is 800 to 950°C.

[(Process 53) Cooling process]

In the cooling process, the cold-rolled steel sheet after the decarburization process is cooled to normal temperature by a well-known method to obtain a decarburization-annealed steel sheet. The cooling method may be allowing the steel sheet to cool, or may be water cooling. Preferably, the cold-rolled steel sheet after the decarburization process is allowed to cool. In the decarburization annealing process that is performed by carrying out the above processes, the cold-rolled steel sheet is subjected to a decarburization annealing treatment to obtain a decarburization-annealed steel sheet.

[Production conditions in decarburization annealing process]

The decarburization annealing process satisfies the following condition 2 to condition 4.

[Condition 2: Regarding rapid heating attainment temperature Ta]

The rapid heating attainment temperature Ta is to be 800 to 900°C.

The rapid heating attainment temperature Ta corresponds to the temperature of the steel sheet. If the rapid heating attainment temperature Ta is less than 800°C, in some cases the rapid heating effect will not be sufficiently obtained. On the other hand, if the rapid heating attainment temperature Ta is more than 900°C, in some cases a strong oxide film will be formed and the decarburization during the decarburization annealing may be inferior compared to the desired decarburization. If the rapid heating attainment temperature Ta is 800 to 900°C, the grains of the steel sheet after primary recrystallization will have an appropriate size. Consequently, in the final annealing process, secondary recrystallization will sufficiently occur.

Note that, after reaching the rapid heating attainment temperature Ta, after the temperature has been raised or cooled to the decarburization annealing temperature of 800 to 950°C, the steel sheet is held at the decarburization annealing temperature for 60 seconds or more to perform decarburization annealing. The upper limit of the holding time at the decarburization annealing temperature is, for example, 300 seconds.

A preferable upper limit of the holding time at the decarburization annealing temperature is 290 seconds, more preferably is 280 seconds, and further preferably is 270 seconds.

A preferable lower limit of the holding time at the decarburization annealing temperature is 65 seconds, more preferably is 70 seconds, and further preferably is 75 seconds.

[Condition 3: Regarding average heating rate V1]

The average heating rate V1 during a period until the temperature of the cold-rolled steel sheet reaches the rapid heating attainment temperature Ta from 550°C is to be 100°C/sec or more.

Strain is accumulated in the cold-rolled steel sheet. If the average heating rate V1 with respect to the cold-rolled steel sheet is less than 100°C/sec, the strain energy that serves as the driving force for recrystallization will be released before recrystallization is started. In such a case, a sufficient amount of fine Goss-oriented grains cannot be formed in the cold-rolled steel sheet after the primary recrystallization (that is, the cold-rolled steel sheet after the decarburization annealing process). Furthermore, it will also be more difficult to exert the effect obtained by containing Sn.

If the average heating rate V1 is 100°C/sec or more, primary recrystallization will occur in a state in which strain energy is sufficiently accumulated in the cold-rolled steel sheet. Therefore, a sufficient amount of fine Goss-oriented grains can be formed in the cold-rolled steel sheet after the primary recrystallization. Consequently, in the final annealing process that is the next process, the degree of integration to Goss orientation after secondary recrystallization can be increased. As a result, iron loss of the grain-oriented electrical steel sheet 1 can be sufficiently reduced.

Note that, the upper limit of the average heating rate V1 is not particularly limited. Even if the average heating rate V1 is made faster than 3000°C/sec, the aforementioned advantageous effect will be substantially saturated. Therefore, the upper limit of the average heating rate V1 is, for example, 3000°C/sec.

A preferable lower limit of the average heating rate V1 is 150°C/sec, more preferably is 200°C/sec, further preferably is 300°C/sec, further preferably is 400°C/sec, further preferably is 500°C/sec, further preferably is 600°C/sec, further preferably is 700°C/sec, further preferably is 800°C/sec, and further preferably is 900°C/sec.

Note that, when the content of Sn is the same, in comparison to a case where the average heating rate V1 is less than 400°C/sec, when the average heating rate V1 is 400°C/sec or more, the iron loss $W_{17/50}$ of the grain-oriented electrical steel sheet can be further reduced.

The average heating rate V1 is measured by the following method. A plurality of thermometers for measuring the surface temperature of the steel sheet are installed inside the heat treatment furnace. The plurality of thermometers are arranged from the upstream side to the downstream side of the heat treatment furnace. The average heating rate V1 is determined based on the temperatures of the steel sheet measured by the thermometers, and the time taken for the steel sheet temperature to rise from 550°C to the rapid heating attainment temperature Ta.

[Condition 4: Regarding average oxygen partial pressure ratio PO4]

After the temperature of the cold-rolled steel sheet is raised to the rapid heating attainment temperature Ta, the cold-rolled steel sheet is held at the decarburization annealing temperature of 800 to 950°C for 60 seconds or more, and an average oxygen partial pressure ratio PO4 in the heat treatment furnace while the cold-rolled steel sheet is held at the decarburization annealing temperature is to be 0.60 or less. Note that, although not particularly limited, the upper limit of the holding time at the decarburization annealing temperature is, for example, 300 seconds.

If the average oxygen partial pressure ratio PO4 is more than 0.60, the iron loss $W_{17/50}$ of the grain-oriented electrical steel sheet will be 0.90 W/kg or more. If the average oxygen partial pressure ratio PO4 is 0.60 or less, on the precondition that the other conditions are satisfied, a grain-oriented electrical steel sheet that satisfies Features 1 to 3 can be produced.

The average oxygen partial pressure ratio PO4 can be measured by the following method. The atmospheric gas at the decarburization annealing temperature in a soaking zone within the heat treatment furnace through which a coil for decarburization annealing is continuously passed is sampled once. The dew point and the hydrogen concentration are measured in each atmospheric gas that is sampled. A water vapor partial pressure ($PH_2O$) and a hydrogen partial pressure ($PH_2$) are determined based on the obtained dew point and hydrogen concentration. Based on the water vapor partial pressure ($PH_2O$) and the hydrogen partial pressure ($PH_2$), $PH_2O/PH_2$ is defined as an oxygen partial pressure ratio. The arithmetic average value of the oxygen partial pressure ratios of the respective sampled atmospheric gases is defined as the average oxygen partial pressure ratio PO4.

[Other Condition: Regarding average oxygen partial pressure ratio PO1]

The average oxygen partial pressure ratio PO1 during a period until the temperature of the cold-rolled steel sheet reaches the rapid heating attainment temperature Ta from 550°C is to be 0.10 or less. The average oxygen partial pressure ratio PO1 is a known condition.

When the average oxygen partial pressure ratio PO1 is 0.10 or less, formation of $SiO_2$ in the outer layer of the steel sheet during the temperature raising process can be sufficiently suppressed. Consequently, sufficient decarburization will be performed in the decarburization process. Furthermore, the primary coating can also be sufficiently formed in the final annealing process that is the next process. Therefore, the average oxygen partial pressure ratio PO1 is 0.10 or less.

A preferable upper limit of the average oxygen partial pressure ratio PO1 is 0.09, and more preferably is 0.08. The lower limit of the average oxygen partial pressure ratio PO1 is not particularly limited.

The average oxygen partial pressure ratio PO1 can be measured by the following method. The atmospheric gas is sampled once during a period until the rapid heating attainment temperature Ta is reached from 550°C in the temperature increasing zone of the heat treatment furnace in which decarburization annealing is carried out. The dew point and the hydrogen concentration are measured in each atmospheric gas that is sampled. A water vapor partial pressure ($PH_2O$) and a hydrogen partial pressure ($PH_2$) are determined based on the obtained dew point and hydrogen concentration. Based on the water vapor partial pressure ($PH_2O$) and the hydrogen partial pressure ($PH_2$), $PH_2O/PH_2$ is defined as an oxygen partial pressure ratio. The arithmetic average value of the oxygen partial pressure ratios of the respective sampled atmospheric gases is defined as the average oxygen partial pressure ratio PO1. Note that, an electrical heating apparatus or an induction heating apparatus is arranged in the temperature increasing zone.

[(Process 6) Final annealing process]

In the final annealing process, an annealing separator is applied to the decarburization-annealed steel sheet, and the decarburization-annealed steel sheet to which the annealing separator has been applied is subjected to final annealing to produce a final-annealed steel sheet. The primary coating 11 is formed on the base steel sheet 10 in the final annealing process.

The final annealing process includes the following processes.

    (Process 61) Annealing separator application process
    (Process 62) Annealing process
    Hereunder, each process is described.

[(Process 61) Annealing separator application process]

In the annealing separator application process, an annealing separator is applied to the decarburization-annealed steel sheet. Specifically, an aqueous slurry containing an annealing separator is applied to the decarburization-annealed steel sheet. The aqueous slurry is prepared by adding water to the annealing separator and stirring the mixture. The annealing separator has a well-known composition. The annealing separator contains magnesium oxide (MgO). Preferably, MgO is the main component of the annealing separator. Here, the term "main component" means that the content of MgO in the annealing separator is 60.0% by mass or more. In addition to MgO, the annealing separator may also contain a well-known addition agent.

In the annealing separator application process, the annealing separator in the form of the aqueous slurry is applied onto the surface of the decarburization-annealed steel sheet. The steel sheet onto whose surface the annealing separator has been applied is dried in an annealing furnace, and thereafter is coiled in a coil shape. After the steel sheet has been coiled into a coil shape, the annealing process is performed.

[(Process 62) Annealing process]

In the annealing process, the steel sheet after the annealing separator application process is subjected to final annealing to cause secondary recrystallization to occur. In the annealing process in which the final annealing is performed, the coiled steel sheet is charged into an annealing furnace to perform final annealing. The annealing process includes a temperature raising process and a purification treatment process. In the temperature raising process, the temperature of the coiled steel sheet is raised to a final annealing temperature inside the annealing furnace. The final annealing temperature is 1100 to 1250°C. In this temperature raising process, the primary coating 11 is formed. After the temperature raising process, the coiled steel sheet is held at the final annealing temperature for 5 to 50 hours to perform a purification treatment (purification treatment process). By performing the purification treatment process, the respective elements in the chemical composition of the steel sheet are removed to a certain extent from the steel sheet. In particular, S, Al, N and the like that function as inhibitors are removed to a large extent. A primary coating containing forsterite is formed on the surface of the grain-oriented electrical steel sheet 1 after the annealing process.

[Condition 5 in final annealing process: Regarding average heating rate V3 and average oxygen partial pressure PO3]

The final annealing process satisfies the following condition 5.

[(Condition 5) Regarding Formula (3) and Formula (4)]

In the temperature raising process in the annealing process in which the aforementioned final annealing is performed, the average heating rate V3 (°C/hr) during a period until the temperature of the decarburization-annealed steel sheet reaches 1 100°C from 900°C, and the average oxygen partial pressure ratio PO3 satisfy Formula (3) and Formula (4).

$$31 \times Sn + 5 \leq V3 \leq 30 \quad (3)$$

$$0.000 \leq PO3 \leq -0.020 \times Sn + 0.015 \quad (4)$$

Where, the content of Sn in percent by mass in the slab is substituted for Sn in Formula (3) and Formula (4).

[Regarding Formula (3)]

If the average heating rate V3 is less than the lower limit of Formula (3), an $SiO_2$ internal oxidized layer that is formed in the outer layer of the steel sheet in the decarburization annealing process will grow further. In such a case, formation of the primary coating will be insufficient, and an excessively large amount of porous regions will be formed. Consequently, the grain-oriented electrical steel sheet 1 will no longer satisfy Feature 2. As a result, the adhesion of the secondary coating 12 of the grain-oriented electrical steel sheet 1 will decrease.
On the other hand, if the average heating rate V3 is more than the upper limit of Formula (3), the starting temperature of the secondary recrystallization will be a high temperature. In such a case, inhibitors will be rapidly removed. Consequently, secondary recrystallization failure will occur. As a result, the iron loss of the grain-oriented electrical steel sheet 1 will deteriorate.
Therefore, the average heating rate V3 satisfies Formula (3).
The average heating rate V3 is measured by the following method. Because final annealing is performed with the steel sheet in a coil shape, a thermocouple is installed on the outer peripheral surface of the coil to perform temperature measurement. The internal temperature of the coil is calculated based on the outer peripheral surface temperature by general thermal conduction calculations.

[Regarding Formula (4)]

If the average oxygen partial pressure ratio PO3 is more than the upper limit of Formula (4), formation of the primary coating will be insufficient, and an excessively large amount of porous regions will be formed. In such a case, the grain-oriented electrical steel sheet 1 will no longer satisfy Feature 2. As a result, the adhesion of the secondary coating 12 of the grain-oriented electrical steel sheet 1 will decrease. Therefore, the average oxygen partial pressure ratio PO3 satisfies Formula (4). Note that, the average oxygen partial pressure PO3 means the average oxygen concentration in atmospheric gas from 900°C to 1100°C inside the annealing furnace.
The average oxygen partial pressure ratio PO3 can be measured by the following method. The atmospheric gas inside the annealing furnace in which the coil for final annealing is housed is sampled a plurality of times during a period until the temperature reaches 1100°C from 900°C. The sampling interval is to be 1 minute. In each of the sampled atmospheric gases, the dew point and the hydrogen concentration are measured. The water vapor partial pressure ($PH_2O$) and the hydrogen partial pressure ($PH_2$) are determined based on the obtained dew point and hydrogen concentration. Based on the water vapor partial pressure ($PH_2O$) and the hydrogen partial pressure ($PH_2$), $PH_2O/PH_2$ is defined as an oxygen partial pressure ratio. The arithmetic average value of the oxygen partial pressure ratios of the respective sampled atmospheric gases is defined as the average oxygen partial pressure ratio PO3.

[Other Condition 1: Regarding average heating rate V2]

An average heating rate V2 during a period until the temperature of the decarburization-annealed steel sheet reaches 900°C from 650°C is to be 5 to 50°C/hr. Note that, the average heating rate V2 is a known condition.
If the average heating rate V2 is 5°C/hr or more, growth of an $SiO_2$ internal oxidized layer that is formed in the outer layer of the steel sheet in the decarburization annealing process will be suppressed. In such a case, the primary coating 11 will be sufficiently formed, and porous regions can be sufficiently suppressed in the primary coating.
Further, if the average heating rate V2 is 50°C/hr or less, temperature deviations within the coil can be sufficiently suppressed. In such a case, secondary recrystallization failures will be suppressed. Therefore, the average heating rate V2 is 5 to 50°C/hr.

A preferable lower limit of the average heating rate V2 is 7°C/hr, and more preferably is 10°C/hr. A preferable upper limit of the average heating rate V2 is 45°C/hr, and more preferably is 40°C/hr.

The average heating rate V2 is measured by the following method. Because final annealing is performed with the steel sheet in a coil shape, a thermocouple is installed on the outer peripheral surface of the coil to perform temperature measurement. The internal temperature of the coil is calculated based on the outer peripheral surface temperature of the coil by general thermal conduction calculations.

[(Condition 6) Regarding purity of hydrogen gas in annealing furnace atmosphere in final annealing process]

In the final annealing process, the atmospheric gas in the final annealing furnace during the temperature raising process is made a mixed atmospheric gas of hydrogen gas and nitrogen gas. Then, after reaching the final annealing temperature, the atmospheric gas is switched from a mixed atmosphere of hydrogen gas and nitrogen gas to a single atmosphere of only hydrogen gas. In the present embodiment, the purity of the hydrogen gas introduced into the atmosphere in the final annealing furnace at the final annealing temperature is to be more than 3N (that is, 4N or more: 99.99% or more). If the purity of the hydrogen gas is 3N or less (that is, 99.9% or less), $I_{ref}$ will be more than 0.0006 in the primary coating that is formed, and the grain-oriented electrical steel sheet will not satisfy Feature 2.

If the purity of the hydrogen gas is more than 3N (that is, if the purity is 4N or more), $I_{ref}$ will be 0.0006 or less in the primary coating that is formed.

[Other Condition 2: Regarding average oxygen partial pressure ratio PO2]

An average oxygen partial pressure ratio PO2 during a period until the temperature of the decarburization-annealed steel sheet reaches 900°C from 650°C is to be 0.020 or less. The average oxygen partial pressure ratio PO2 is a known condition.

If the average oxygen partial pressure ratio PO2 is 0.020 or less, the primary coating will be sufficiently formed. Therefore, the average oxygen partial pressure ratio PO2 is 0.020 or less.

A preferable upper limit of the average oxygen partial pressure ratio PO2 is 0.018, more preferably is 0.016, and further preferably is 0.014. The lower limit of the average oxygen partial pressure ratio PO2 is not particularly limited.

The average oxygen partial pressure ratio PO2 can be measured by the following method. The atmospheric gas inside the heat treatment furnace in which the coil for final annealing is housed is sampled a plurality of times during a period until the temperature reaches 900°C from 650°C. The sampling interval is to be 1 minute. In each of the sampled atmospheric gases, the dew point and the hydrogen concentration are measured. The water vapor partial pressure ($PH_2O$) and the hydrogen partial pressure ($PH_2$) are determined based on the obtained dew point and hydrogen concentration. Based on the water vapor partial pressure ($PH_2O$) and the hydrogen partial pressure ($PH_2$), $PH_2O/PH_2$ is defined as an oxygen partial pressure ratio. The arithmetic average value of the oxygen partial pressure ratios of the respective sampled atmospheric gases is defined as the average oxygen partial pressure ratio PO2.

[(Process 7) Secondary coating formation process]

In the secondary coating formation process, an insulation coating agent mainly composed of colloidal silica and phosphate is applied onto the primary coating 11 of the steel sheet after the final annealing process, and thereafter baking is performed. By this means, the secondary coating 12 is formed on the primary coating 11.

The grain-oriented electrical steel sheet 1 that satisfies Feature 1 to Feature 3 can be produced by the above production process.

[Preferred production process]

Preferably, in the decarburization annealing process of process 5, the following Condition 7 is also satisfied.

(Condition 7)

The cold-rolled steel sheet is held at the decarburization annealing temperature for 60 seconds or more, and the average oxygen partial pressure ratio PO4 during the period in which the cold-rolled steel sheet is held at the decarburization annealing temperature satisfies Formula (5).

$$0.88 \times Sn + 0.19 \leq PO4 \leq 0.60 \quad (5)$$

Where, the content of Sn in percent by mass in the slab is substituted for Sn in Formula (5).

[Condition 7: Regarding Formula (5)]

If the average oxygen partial pressure ratio PO4 is equal to or greater than the lower limit of Formula (5), an $SiO_2$ internal oxidized layer formed in the outer layer of the steel sheet in the decarburization annealing process will be appropriately formed. In such a case, the primary coating that is formed in the final annealing process will be stably formed. Therefore, the grain-oriented electrical steel sheet 1 will also satisfy Feature 4, and not only Feature 1 to Feature 3. As a result, adhesion of the secondary coating 12 of the grain-oriented electrical steel sheet 1 will further improve. Therefore, preferably the average oxygen partial pressure ratio PO4 satisfies Formula (5).

[Other production processes]

In the method for producing the grain-oriented electrical steel sheet 1 according to the present embodiment, in addition, as necessary, a magnetic domain refining process may be performed after the final annealing process or after the secondary coating formation process. In the magnetic domain refining process, a laser beam or the like that has a magnetic domain refining effect is irradiated onto the surface of the grain-oriented electrical steel sheet 1, or grooves are formed in the surface of the grain-oriented electrical steel sheet 1. In this case, the grain-oriented electrical steel sheet 1 which is further excellent in magnetic properties can be produced. The magnetic domain refining process does not have to be performed.

In the method for producing the grain-oriented electrical steel sheet 1 according to the present embodiment, furthermore, as necessary, nitriding may be performed at a timing that is after the decarburization annealing process and is before the final annealing process. It suffices to perform nitriding under well-known conditions. Preferable nitriding conditions are, for example, as follows.

Nitriding temperature: 700 to 850°C

Atmosphere in nitriding furnace (nitriding atmosphere): atmosphere containing gas having nitriding capability such as hydrogen, nitrogen, and ammonia.

When the nitriding temperature is 700 to 850°C, nitrogen easily penetrates into the steel sheet during nitriding. If nitriding is performed within this temperature range, a preferable amount of nitrogen can be secured inside the steel sheet. Therefore, fine AlN will be favorably formed in the steel sheet before secondary recrystallization. As a result, secondary recrystallization will favorably occur during final annealing. Note that, although the time for which the steel sheet is held at the nitriding temperature is not particularly limited, for example, it suffices to hold the steel sheet at the nitriding temperature for 10 to 60 seconds.

Hereunder, aspects of the present invention are described specifically by way of examples. These examples are examples for verifying the advantageous effects of the present invention, and are not intended to limit the present invention.

EXAMPLE 1

In Example 1, grain-oriented electrical steel sheets 1 were produced by varying the production conditions in the final annealing process.

Specifically, slabs in which the contents of Si, Mn, N, C, sol. Al, and S were as shown in Table 1-1, and also in which the content of Sn was as shown in Table 1-2 were prepared.

[Table 1-1]

TABLE 1-1

| Test Number | Chemical Composition of Slab (unit is mass%; balance is Fe and impurities) | | | | | |
|---|---|---|---|---|---|---|
| | Si | Mn | N | C | Sol.Al | S |
| 1 | 3.34 | 0.08 | 0.008 | 0.075 | 0.028 | 0.024 |
| 2 | 3.05 | 0.07 | 0.005 | 0.069 | 0.022 | 0.024 |
| 3 | 3.21 | 0.04 | 0.008 | 0.069 | 0.024 | 0.010 |
| 4 | 3.28 | 0.08 | 0.007 | 0.073 | 0.026 | 0.021 |

(continued)

| Test Number | Chemical Composition of Slab (unit is mass%; balance is Fe and impurities) | | | | | |
|---|---|---|---|---|---|---|
| | Si | Mn | N | C | Sol.Al | S |
| 5 | 3.28 | 0.07 | 0.004 | 0.078 | 0.012 | 0.019 |
| 6 | 2.80 | 0.09 | 0.002 | 0.061 | 0.015 | 0.024 |
| 7 | 3.21 | 0.12 | 0.014 | 0.077 | 0.038 | 0.032 |
| 8 | 3.90 | 0.06 | 0.009 | 0.091 | 0.024 | 0.019 |
| 9 | 3.36 | 0.02 | 0.004 | 0.075 | 0.018 | 0.011 |
| 10 | 2.60 | 0.08 | 0.011 | 0.069 | 0.024 | 0.021 |
| 11 | 3.05 | 0.06 | 0.011 | 0.065 | 0.042 | 0.019 |
| 12 | 3.44 | 0.17 | 0.009 | 0.072 | 0.039 | 0.041 |
| 13 | 3.62 | 0.18 | 0.008 | 0.081 | 0.028 | 0.041 |
| 14 | 3.29 | 0.18 | 0.007 | 0.071 | 0.029 | 0.042 |
| 15 | 3.36 | 0.12 | 0.010 | 0.079 | 0.031 | 0.035 |
| 16 | 3.21 | 0.09 | 0.010 | 0.077 | 0.029 | 0.029 |
| 17 | 3.10 | 0.08 | 0.007 | 0.065 | 0.028 | 0.021 |
| 18 | 3.36 | 0.07 | 0.008 | 0.071 | 0.022 | 0.019 |
| 19 | 2.90 | 0.03 | 0.003 | 0.066 | 0.013 | 0.014 |
| 20 | 3.28 | 0.04 | 0.007 | 0.079 | 0.029 | 0.011 |
| 21 | 2.80 | 0.05 | 0.008 | 0.066 | 0.027 | 0.015 |
| 22 | 2.80 | 0.06 | 0.005 | 0.063 | 0.018 | 0.021 |
| 23 | 3.05 | 0.11 | 0.011 | 0.075 | 0.028 | 0.029 |
| 24 | 3.28 | 0.10 | 0.005 | 0.071 | 0.026 | 0.028 |
| 25 | 3.24 | 0.08 | 0.006 | 0.073 | 0.024 | 0.027 |
| 26 | 3.28 | 0.09 | 0.004 | 0.069 | 0.022 | 0.029 |
| 27 | 3.36 | 0.08 | 0.009 | 0.073 | 0.028 | 0.022 |
| 28 | 3.24 | 0.07 | 0.010 | 0.071 | 0.031 | 0.024 |
| 29 | 3.36 | 0.06 | 0.006 | 0.076 | 0.029 | 0.019 |
| 30 | 3.44 | 0.06 | 0.012 | 0.082 | 0.036 | 0.018 |
| 31 | 3.21 | 0.10 | 0.005 | 0.075 | 0.017 | 0.028 |
| 32 | 3.66 | 0.14 | 0.004 | 0.081 | 0.019 | 0.039 |
| 33 | 3.24 | 0.10 | 0.003 | 0.073 | 0.011 | 0.028 |
| 34 | 3.24 | 0.08 | 0.009 | 0.077 | 0.026 | 0.021 |
| 35 | 3.30 | 0.08 | 0.008 | 0.071 | 0.024 | 0.025 |
| 36 | 2.80 | 0.08 | 0.007 | 0.062 | 0.028 | 0.029 |
| 37 | 3.21 | 0.07 | 0.004 | 0.071 | 0.028 | 0.019 |
| 38 | 3.25 | 0.09 | 0.009 | 0.077 | 0.02 8 | 0.024 |
| 39 | 3.28 | 0.15 | 0.005 | 0.074 | 0.025 | 0.030 |
| 40 | 3.24 | 0.16 | 0.008 | 0.075 | 0.031 | 0.033 |
| 41 | 3.44 | 0.11 | 0.008 | 0.071 | 0.032 | 0.031 |
| 42 | 3.23 | 0.18 | 0.007 | 0.077 | 0.028 | 0.042 |

(continued)

| Test Number | Chemical Composition of Slab (unit is mass%; balance is Fe and impurities) | | | | | |
|---|---|---|---|---|---|---|
| | Si | Mn | N | C | Sol.Al | S |
| 43 | 3.24 | 0.08 | 0.004 | 0.077 | 0.017 | 0.021 |
| 44 | 3.36 | 0.09 | 0.015 | 0.081 | 0.039 | 0.022 |
| 45 | 3.30 | 0.07 | 0.005 | 0.072 | 0.031 | 0.022 |
| 46 | 3.21 | 0.04 | 0.009 | 0.071 | 0.028 | 0.011 |
| 47 | 3.24 | 0.05 | 0.003 | 0.077 | 0.016 | 0.018 |
| 48 | 3.24 | 0.08 | 0.009 | 0.076 | 0.026 | 0.021 |
| 49 | 3.35 | 0.18 | 0.012 | 0.075 | 0.028 | 0.049 |
| 50 | 3.71 | 0.11 | 0.009 | 0.081 | 0.027 | 0.039 |
| 51 | 3.35 | 0.08 | 0.008 | 0.077 | 0.027 | 0.021 |
| 52 | 3.05 | 0.07 | 0.018 | 0.061 | 0.045 | 0.019 |
| 53 | 3.21 | 0.07 | 0.009 | 0.079 | 0.023 | 0.025 |
| 54 | 3.21 | 0.07 | 0.009 | 0.071 | 0.038 | 0.021 |
| 55 | 3.28 | 0.06 | 0.003 | 0.077 | 0.022 | 0.018 |
| 56 | 3.42 | 0.06 | 0.008 | 0.075 | 0.019 | 0.015 |
| 57 | 3.21 | 0.05 | 0.008 | 0.071 | 0.033 | 0.014 |
| 58 | 3.24 | 0.08 | 0.007 | 0.066 | 0.020 | 0.025 |
| 59 | 3.24 | 0.09 | 0.005 | 0.069 | 0.027 | 0.028 |
| 60 | 3.36 | 0.08 | 0.008 | 0.071 | 0.028 | 0.021 |
| 61 | 3.30 | 0.07 | 0.008 | 0.074 | 0.026 | 0.021 |
| 62 | 3.35 | 0.07 | 0.008 | 0.077 | 0.025 | 0.023 |

Each slab was subjected to a hot rolling process. Specifically, the slab was heated to 1350°C, and thereafter the slab was subjected to hot rolling to produce a hot-rolled steel sheet having a thickness of 2.3 mm.

The hot-rolled steel sheet after the hot rolling process was subjected to a hot-rolled sheet annealing process in which the annealing temperature was 900 to 1200°C and the holding time was 10 to 300 seconds. After the hot-rolled sheet annealing process, a pickling process was performed. A pickling bath in which the hydrochloric acid concentration was 10% and the bath temperature was 90°C was used for the pickling process. For the test numbers other than Test No. 61, the pickling time was set to 120 seconds. For Test No. 61, the pickling time was set to 180 seconds. Thereafter, a cold rolling process was performed to produce a cold-rolled steel sheet (base steel sheet) having a thickness of 0.22 mm.

The cold-rolled steel sheet was subjected to a decarburization annealing process. In the decarburization annealing process, the rapid heating attainment temperature Ta was set to 850°C, and the decarburization annealing temperature was set to 830°C. The average heating rate V1 until the temperature of the cold-rolled steel sheet reached the rapid heating attainment temperature Ta (850°C) from 550°C was set to 800°C/sec, and the average oxygen partial pressure ratio PO1 was set to 0.03. The holding time at the decarburization annealing temperature (830°C) was set to 60 seconds. The average oxygen partial pressure ratio PO4 at the decarburization annealing temperature was set to 0.50.

An annealing separator (aqueous slurry) having MgO as a main component was applied to the decarburization-annealed steel sheet after the decarburization annealing process, and thereafter the decarburization-annealed steel sheet was coiled into a coil shape. The steel sheet coiled in a coil shape was subjected to a final annealing process. In the final annealing process, the average heating rate V2 during a period until the temperature of the steel sheet reached 900°C from 650°C was set to 20°C/hr, and the average oxygen partial pressure ratio PO2 was set to 0.008. In addition, the average heating rate V3 and the average oxygen partial pressure ratio PO3 during a period until the temperature reached 1 100°C from 900°C were set to as shown in Table 1-2. After raising the temperature to 1100°C or more, the steel sheet was held for 5 hours or more at that temperature. In the test numbers other than Test No. 62, the purity of the hydrogen gas used as the atmospheric gas for final annealing was 6N (99.9999%). On the other hand, in Test No. 62, the purity of the hydrogen gas used as the atmospheric gas for final annealing was 3N (99.9%).

[Table 1-2]

TABLE 1-2

| Test Number | Sn Content (mass%) | Pickling Time (secs) | 31Sn+5 | V3 (°C/hr) | PO3 | -0.020Sn +0.015 | Hydrogen Gas Purity | $I_{Sn/Mg}$ | $I_{Mg/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|---|---|---|---|---|---|---|
| 1 | 0.00 | 120 | 5 | 10 | 0.005 | 0.013 | 6N | - | 3.9 | - | - | 20 | 0.90 or more | Comparative Example |
| 2 | 0.04 | 120 | 6 | 10 | 0.005 | 0.014 | 6N | 0.0002 | 4,3 | 0.0000 | 0.0000 | 10 | 0.90 or more | Comparative Example |
| 3 | 0.05 | 120 | 7 | 5 | 0.002 | 0.014 | 6N | 0.0023 | 3,2 | 0.0007 | -0.0001 | 40 | 0.85 | Comparative Example |
| 4 | 0.06 | 120 | 7 | 5 | 0.003 | 0.014 | 6N | 0.0024 | 3.2 | 0.0008 | -0.0001 | 40 | 0.85 | Comparative Example |
| 5 | 0.05 | 120 | 7 | 5 | 0010 | 0.014 | 6N | 0.0026 | 3.1 | 0.0008 | -0.0001 | 40 | 0.84 | Comparative Example |
| 6 | 0.05 | 120 | 7 | 5 | 0.015 | 0.014 | 6N | 0.0032 | 2.9 | 0.0011 | -0.0002 | 50 | 0.85 | Comparative Example |
| 7 | 0.05 | 120 | 7 | 10 | 0.002 | 0.014 | 6N | 0.0001 | 4.5 | 0.0000 | 0.0001 | 10 | 0.85 | Inventive Example |
| 8 | 0.07 | 120 | 7 | 10 | 0.005 | 0.014 | 6N | 0.0001 | 4.3 | 0.0000 | 0.0001 | 10 | 0.84 | Inventive Example |
| 9 | 0.06 | 120 | 7 | 10 | 0.010 | 0.014 | 6N | 0.0001 | 4.1 | 0.0000 | 0.0001 | 10 | 0.83 | Inventive Example |
| 10 | 0,05 | 120 | 7 | 10 | 0.015 | 0.014 | 6N | 0.0023 | 3.2 | 0.0007 | -0.0001 | 40 | 0.84 | Comparative Example |
| 11 | 0.05 | 120 | 7 | 15 | 0.002 | 0.014 | 6N | 0.0001 | 4.5 | 0.0000 | 0.0001 | 10 | 0.84 | Inventive Example |
| 12 | 0.05 | 120 | 7 | 15 | 0.005 | 0.014 | 6N | 0.0001 | 4.4 | 0.0000 | 0.0001 | 10 | 0.84 | Inventive Example |
| 13 | 0.06 | 120 | 7 | 15 | 0.010 | 0.014 | 6N | 0.0001 | 4.2 | 0.0000 | 0.0001 | 10 | 0.84 | Inventive Example |

EP 4 512 915 A1

| Test Number | Sn Content (mass%) | Pickling Time (secs) | 31Sn+5 | V3 (°C/hr) | PO3 | -0.020Sn +0.015 | Hydrogen Gas Purity | $I_{Sn/Mg}$ | $I_{Mg/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|---|---|---|---|---|---|---|
| 14 | 0.05 | 120 | 7 | 15 | 0.015 | 0.014 | 6N | 0.0022 | 3.3 | 0.0007 | -0.0001 | 40 | 0.84 | Comparative Example |
| 15 | 0.06 | 120 | 7 | 30 | 0.002 | 0.014 | 6N | 0.0001 | 4.7 | 0.0000 | 0.0001 | 10 | 0.84 | Inventive Example |
| 16 | 0.05 | 120 | 7 | 30 | 0.005 | 0.014 | 6N | 0.0001 | 4.4 | 0.0000 | 0.0001 | 10 | 0.83 | Inventive Example |
| 17 | 0.05 | 120 | 7 | 30 | 0.010 | 0.014 | 6N | 0.0001 | 4.3 | 0.0000 | 0.0001 | 10 | 085 | Inventive Example |
| 18 | 0.05 | 120 | 7 | 30 | 0.015 | 0.014 | 6N | 0.0023 | 3.4 | 0.0007 | -0.0001 | 40 | 0.84 | Comparative Example |
| 19 | 0.06 | 120 | 7 | 35 | 0.005 | 0.014 | 6N | 0.0001 | 4.7 | 0.0000 | 0.0001 | 10 | 0.90 or more | Comparative Example |
| 20 | 0.12 | 120 | 9 | 10 | 0.002 | 0.013 | 6N | 0.0002 | 4.1 | 0.0000 | 0.0002 | 10 | 0.79 | Inventive Example |
| 21 | 0.11 | 120 | 8 | 10 | 0.005 | 0.013 | 6N | 0.0003 | 4.1 | 0.0001 | 0.0001 | 10 | 0.80 | Inventive Example |
| 22 | 0.13 | 120 | 9 | 10 | 0.010 | 0.012 | 6N | 0.0005 | 3.9 | 0.0001 | 0.0001 | 20 | 0.79 | Inventive Example |
| 23 | 0.12 | 120 | 9 | 10 | 0.015 | 0.013 | 6N | 0.0031 | 3.4 | 0.0009 | -0.0001 | 40 | 0.79 | Comparative Example |
| 24 | 0.10 | 120 | 8 | 15 | 0.002 | 0.013 | 6N | 0.0001 | 4.3 | 0.0000 | 0.0001 | 10 | 0.80 | Inventive Example |
| 25 | 013 | 120 | 9 | 15 | 0.005 | 0.012 | 6N | 0.0003 | 4.1 | 0.0001 | 0.0002 | 10 | 0.79 | Inventive Example |
| 26 | 0.12 | 120 | 9 | 15 | 0.010 | 0.013 | 6N | 0.0004 | 4.0 | 0.0001 | 0.0001 | 20 | 0.78 | Inventive Example |
| 27 | 0.12 | 120 | 9 | 15 | 0.015 | 0.013 | 6N | 0.0028 | 3.6 | 0.0008 | 0.0000 | 40 | 0.79 | Comparative Example |

| Test Number | Sn Content (mass%) | Pickling Time (secs) | 31Sn+5 | V3 (°C/hr) | PO3 | -0.020Sn +0.015 | Hydrogen Gas Purity | $I_{Sn/Mg}$ | $I_{Mg/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|---|---|---|---|---|---|---|
| 28 | 0.11 | 120 | 8 | 30 | 0.002 | 0.013 | 6N | 0.0001 | 4.5 | 0.0000 | 0.0001 | 10 | 0.78 | Inventive Example |
| 29 | 011 | 120 | 8 | 30 | 0.005 | 0.013 | 6N | 0.0003 | 4.5 | 0.0001 | 0.0001 | 20 | 0.79 | Inventive Example |
| 30 | 0.10 | 120 | 8 | 30 | 0.010 | 0.013 | 6N | 0.0003 | 4.3 | 0.0001 | 0.0001 | 20 | 0.80 | Inventive Example |
| 31 | 0.10 | 120 | 8 | 30 | 0.015 | 0.013 | 6N | 0.0025 | 3.6 | 0.0007 | 0.0000 | 40 | 0.80 | Comparative Example |
| 32 | 0.12 | 120 | 9 | 35 | 0.005 | 0.013 | 6N | 0.0001 | 4.5 | 0.0000 | 0.0001 | 10 | 0.90 or more | Comparative Example |
| 33 | 0.21 | 120 | 12 | 10 | 0.002 | 0.011 | 6N | 0.0035 | 3.5 | 0.0010 | 0.0001 | 40 | 0.78 | Comparative Example |
| 34 | 0.22 | 120 | 12 | 10 | 0.005 | 0.011 | 6N | 0.0038 | 3.3 | 0.0012 | 0.0001 | 40 | 0.76 | Comparative Example |
| 35 | 0.21 | 120 | 12 | 10 | 0.010 | 0.011 | 6N | 0.0039 | 3.3 | 0.0012 | 0.0001 | 40 | 0.15 | Comparative Example |
| 36 | 0.20 | 120 | 11 | 10 | 0.015 | 0.011 | 6N | 0.0041 | 3.1 | 0.0013 | 0.0001 | 50 | 0.76 | Comparaiive Example |
| 37 | 0.20 | 120 | 11 | 15 | 0.002 | 0.011 | 6N | 0.0012 | 4.1 | 0.0003 | 0.0003 | 10 | 0.77 | Inventive Example |
| 38 | 0.20 | 120 | 11 | 15 | 0.003 | 0.011 | 6N | 0.0014 | 4.1 | 0.0003 | 0.0002 | 10 | 0.76 | Inventive Example |
| 39 | 0.21 | 120 | 12 | 15 | 0.010 | 0.011 | 6N | 0.0013 | 3.9 | 0.0004 | 0.0002 | 20 | 0.77 | Inventive Example |
| 40 | 0.22 | 120 | 12 | 15 | 0.015 | 0.011 | 6N | 0.0033 | 3.2 | 0.0010 | 0.0001 | 40 | 0.76 | Comparative Example |
| 41 | 0.22 | 120 | 12 | 30 | 0.002 | 0.011 | 6N | 0.0011 | 4.3 | 0.0003 | 0.0003 | 10 | 0.75 | Inventive Example |

EP 4 512 915 A1

| Test Number | Sn Content (mass%) | Pickling Time (secs) | 31Sn+5 | V3 (°C/hr) | PO3 | -0.020Sn +0.015 | Hydrogen Gas Purity | $I_{Sn/Mg}$ | $I_{Mg/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|---|---|---|---|---|---|---|
| 42 | 0.22 | 120 | 12 | 30 | 0.005 | 0.011 | 6N | 0.0012 | 4.2 | 0.0003 | 0.0003 | 10 | 0.76 | Inventive Example |
| 43 | 0.20 | 120 | 11 | 30 | 0.010 | 0.011 | 6N | 0.0013 | 3.9 | 0.0003 | 0.0002 | 20 | 0.77 | Inventive Example |
| 44 | 0.23 | 120 | 12 | 30 | 0.015 | 0.010 | 6N | 0.0031 | 3.4 | 0.0009 | 0.0002 | 40 | 0.76 | Comparative Example |
| 45 | 0.20 | 120 | 11 | 35 | 0.005 | 0.011 | 6N | 0.0011 | 4.5 | 0.0002 | 0.0003 | 10 | 0.90 or more | Comparative Example |
| 46 | 0.30 | 120 | 14 | 10 | 0.002 | 0.009 | 6N | 0.0031 | 3.3 | 0.0009 | 0.0004 | 40 | 0.74 | Comparative Example |
| 47 | 0.29 | 120 | 14 | 10 | 0.005 | 0.009 | 6N | 0.0036 | 3.2 | 0.0011 | 0.0004 | 40 | 0.74 | Comparative Example |
| 48 | 0.29 | 120 | 14 | 10 | 0.010 | 0.009 | 6N | 0.0041 | 2.9 | 0.0014 | 0.0003 | 50 | 0.75 | Comparative Example |
| 49 | 0.27 | 120 | 13 | 10 | 0.015 | 0.010 | 6N | 0.0043 | 2.6 | 0.0017 | 0.0001 | 50 | 0.75 | Comparative Example |
| 50 | 0.29 | 120 | 14 | 15 | 0.002 | 0.009 | 6N | 0.0018 | 3.9 | 0.0005 | 0.0003 | 20 | 0.73 | Inventive Example |
| 51 | 0.29 | 120 | 14 | 15 | 0.003 | 0.009 | 6N | 0.0021 | 3.8 | 0.0006 | 0.0002 | 20 | 0.73 | Inventive Example |
| 52 | 0.30 | 120 | 14 | 15 | 0.010 | 0.009 | 6N | 0.0038 | 3.5 | 0.0011 | 0.0002 | 50 | 0.13 | Comparative Example |
| 53 | 0.29 | 120 | 14 | 15 | 0.015 | 0.009 | 6N | 0.0042 | 3.3 | 0.0013 | 0.0002 | 50 | 0.74 | Comparative Example |
| 54 | 0.30 | 120 | 14 | 30 | 0.002 | 0.009 | 6N | 0.0015 | 3.9 | 0.0004 | 0.0004 | 20 | 0.73 | Inventive Example |
| 55 | 0.29 | 120 | 14 | 30 | 0.005 | 0.009 | 6N | 0.0023 | 3.7 | 0.0006 | 0.0003 | 20 | 0.75 | Inventive Example |

| Test Number | Sn Content (mass%) | Pickling Time (secs) | 31Sn+5 | V3 (°C/hr) | PO3 | -0.020Sn +0.015 | Hydrogen Gas Purity | $I_{Sn/Mg}$ | $I_{Mg/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|---|---|---|---|---|---|---|
| 56 | 0.29 | 120 | 14 | 30 | 0.010 | 0.009 | 6N | 0.0034 | 3.3 | 0.0010 | 0.0002 | 40 | 073 | Comparative Example |
| 57 | 0.29 | 120 | 14 | 30 | 0.015 | 0.009 | 6N | 0.0039 | 3.1 | 0.0013 | 0.0002 | 50 | 0.74 | Comparative Example |
| 58 | 0.29 | 120 | 14 | 35 | 0.005 | 0.009 | 6N | 0.0013 | 4.3 | 0.0003 | 0.0004 | 20 | 0.90 or more | Comparative Example |
| 59 | 0.34 | 120 | 16 | - | - | - | 6N | - | - | - | - | Not evaluated due to cracking during rolling | | Comparative Example |
| 60 | 0.32 | 120 | 15 | 20 | 0.005 | 0.009 | 6N | 0.0025 | 3.9 | 0.0006 | 0.0004 | 20 | 0.90 or more | Comparative Example |
| 61 | 0.10 | 180 | 8 | 13 | 0.002 | 0.013 | 6N | 0.0022 | 3.1 | 0.0007 | 0.0000 | 40 | 0.79 | Comparative Example |
| 62 | 0.12 | 120 | 9 | 12 | 0.002 | 0.013 | 3N | 0.0024 | 3.2 | 0.0008 | 0.0001 | 40 | 0.78 | Comparative Example |

The steel sheet after the final annealing process was subjected to a secondary coating formation process. In the secondary coating formation process, an insulation coating agent mainly composed of colloidal silica and phosphate was applied onto the surface (onto the primary coating) of the steel sheet after the final annealing process, and thereafter baking was performed under well-known conditions and a secondary coating was formed. A grain-oriented electrical steel sheet of each test number was produced by the above production process.

[Evaluation tests]

The following evaluation tests were performed on the grain-oriented electrical steel sheet of each test number.

(Test 1) Test to determine chemical composition of base steel sheet
(Test 2) Intensity ratio $I_{ref}$ determination test
(Test 3) Sn concentration gradient $\Delta I_{Sn}$ determination test
(Test 4) Secondary coating adhesion evaluation test
(Test 5) Iron loss measurement test

[(Test 1) Test to determine chemical composition of base steel sheet]

The chemical composition of the base steel sheet of the grain-oriented electrical steel sheet of each test number was determined by the following method. First, the base steel sheet was extracted by removing the primary coating and secondary coating from the grain-oriented electrical steel sheet by the method described above. Using the base steel sheet, the chemical composition of the base steel sheet was analyzed based on the method described above in the section [Method for determining chemical composition of base steel sheet 10]. The chemical compositions of the base steel sheets in Example 1 as determined as a result of the analysis were as shown in Table 1-3.

[Table 1-3]

TABLE 1-3

| Test Number | Chemical Composition of Base Steel Sheet (unit is mass%; balance is Fe and impurities) | | | | | | |
|---|---|---|---|---|---|---|---|
| | Si | Mn | Sn | N | C | Sol.Al | S |
| 1 | 3.31 | 0.08 | 0.00 | 0.001 | 0.002 | 0.001 | 0.001 |
| 2 | 3.05 | 0.07 | 0.04 | 0.001 | 0.002 | 0.001 | 0.001 |
| 3 | 3.21 | 0.04 | 0.05 | 0.001 | 0.002 | 0.001 | 0.001 |
| 4 | 3.28 | 0.08 | 0.06 | 0.001 | 0.002 | 0.001 | 0.001 |
| 5 | 3.28 | 0.07 | 0.05 | 0.001 | 0.001 | 0.001 | 0.001 |
| 6 | 2.80 | 0.09 | 0.05 | 0.001 | 0.001 | 0.002 | 0.001 |
| 7 | 3.21 | 0.12 | 0.05 | 0.003 | 0.002 | 0.002 | 0.001 |
| 8 | 3.86 | 0.06 | 0.07 | 0.001 | 0.003 | 0.001 | 0.001 |
| 9 | 3.31 | 0.02 | 0.06 | 0.001 | 0.002 | 0.001 | 0.001 |
| 10 | 2.60 | 0.08 | 0.05 | 0.002 | 0.002 | 0.001 | 0.001 |
| 11 | 3.05 | 0.06 | 0.05 | 0.002 | 0.001 | 0.001 | 0.001 |
| 12 | 3.44 | 0.15 | 0.05 | 0.001 | 0.002 | 0.001 | 0.003 |
| 13 | 3.60 | 0.18 | 0.06 | 0.001 | 0.003 | 0.003 | 0.003 |
| 14 | 3.29 | 0.18 | 0.05 | 0.001 | 0.001 | 0.001 | 0.003 |
| 15 | 3.36 | 0.12 | 0.06 | 0.002 | 0.001 | 0.001 | 0.002 |
| 16 | 3.21 | 0.09 | 0.05 | 0.002 | 0.001 | 0.001 | 0.002 |
| 17 | 3.10 | 0.08 | 0.05 | 0.001 | 0.001 | 0.002 | 0.001 |
| 18 | 3.36 | 0.07 | 0.05 | 0.001 | 0.002 | 0.001 | 0.001 |

(continued)

| Test Number | Chemical Composition of Base Steel Sheet (unit is mass%; balance is Fe and impurities) | | | | | | |
|---|---|---|---|---|---|---|---|
| | Si | Mn | Sn | N | C | Sol.Al | S |
| 19 | 2.90 | 0.03 | 0.06 | 0.001 | 0.002 | 0.001 | 0.001 |
| 20 | 3.28 | 0.04 | 0.12 | 0.001 | 0.001 | 0.001 | 0.001 |
| 21 | 2.80 | 0.05 | 0.11 | 0.001 | 0.001 | 0.001 | 0.001 |
| 22 | 2.79 | 0.06 | 0.13 | 0.001 | 0.002 | 0.002 | 0.001 |
| 23 | 3.05 | 0.11 | 0.12 | 0.002 | 0.002 | 0.001 | 0.003 |
| 24 | 3.28 | 0.10 | 0.10 | 0.001 | 0.002 | 0.001 | 0.002 |
| 25 | 3.24 | 0.08 | 0.13 | 0.001 | 0.002 | 0.001 | 0.003 |
| 26 | 3.28 | 0.09 | 0.12 | 0.001 | 0.001 | 0.002 | 0.002 |
| 27 | 3.36 | 0.08 | 0.12 | 0.001 | 0.002 | 0.002 | 0.001 |
| 28 | 3.24 | 0.07 | 0.11 | 0.001 | 0.002 | 0.002 | 0.001 |
| 29 | 3.36 | 0.06 | 0.11 | 0.001 | 0.002 | 0.002 | 0.001 |
| 30 | 3.42 | 0.06 | 0.10 | 0.002 | 0.003 | 0.002 | 0.001 |
| 31 | 3.20 | 0.10 | 0.10 | 0.001 | 0.002 | 0.001 | 0.003 |
| 32 | 3.66 | 0.13 | 0.12 | 0.001 | 0.001 | 0.001 | 0.003 |
| 33 | 3.24 | 0.10 | 0.21 | 0.001 | 0.001 | 0.001 | 0.003 |
| 34 | 3.24 | 0.08 | 0.22 | 0.001 | 0.002 | 0.004 | 0.001 |
| 35 | 3.30 | 0.08 | 0.21 | 0.001 | 0.001 | 0.002 | 0.001 |
| 36 | 2.80 | 0.08 | 0.20 | 0.001 | 0.002 | 0.002 | 0.001 |
| 37 | 3.21 | 0.07 | 0.20 | 0.001 | 0.002 | 0.002 | 0.001 |
| 38 | 3.24 | 0.09 | 0.20 | 0.001 | 0.001 | 0.001 | 0.001 |
| 39 | 3.28 | 0.15 | 0.21 | 0.001 | 0.001 | 0.002 | 0.002 |
| 40 | 3.24 | 0.14 | 0.22 | 0.001 | 0.001 | 0.001 | 0.004 |
| 41 | 3.44 | 0.11 | 0.21 | 0.001 | 0.001 | 0.001 | 0.002 |
| 42 | 3.23 | 0.18 | 0.22 | 0.001 | 0.002 | 0.001 | 0.003 |
| 43 | 3.24 | 0.08 | 0.20 | 0.001 | 0.001 | 0.001 | 0.001 |
| 44 | 3.36 | 0.09 | 0.23 | 0.002 | 0.001 | 0.002 | 0.001 |
| 45 | 3.30 | 0.07 | 0.20 | 0.001 | 0.002 | 0.001 | 0.001 |
| 46 | 3.21 | 0.04 | 0.30 | 0.001 | 0.002 | 0.001 | 0.001 |
| 47 | 3.24 | 0.05 | 0.29 | 0.001 | 0.001 | 0.001 | 0.001 |
| 48 | 3.24 | 0.08 | 0.29 | 0.001 | 0.002 | 0.001 | 0.001 |
| 49 | 3.35 | 0.16 | 0.27 | 0.003 | 0.002 | 0.001 | 0.004 |
| 50 | 3.68 | 0.11 | 0.29 | 0.001 | 0.003 | 0.002 | 0.003 |
| 51 | 3.35 | 0.08 | 0.28 | 0.001 | 0.001 | 0.002 | 0.001 |
| 52 | 3.05 | 0.07 | 0.30 | 0.004 | 0.002 | 0.002 | 0.001 |
| 53 | 3.21 | 0.07 | 0.29 | 0.001 | 0.001 | 0.001 | 0.001 |
| 54 | 3.21 | 0.07 | 0.30 | 0.001 | 0.002 | 0.001 | 0.001 |
| 55 | 3.28 | 0.06 | 0.29 | 0.001 | 0.002 | 0.001 | 0.001 |
| 56 | 3.42 | 0.06 | 0.28 | 0.001 | 0.001 | 0.001 | 0.001 |

(continued)

| Test Number | Chemical Composition of Base Steel Sheet (unit is mass%; balance is Fe and impurities) | | | | | | |
|---|---|---|---|---|---|---|---|
| | Si | Mn | Sn | N | C | Sol.Al | S |
| 57 | 3.21 | 0.05 | 0.29 | 0.001 | 0.002 | 0.001 | 0.001 |
| 58 | 3.24 | 0.08 | 0.29 | 0.001 | 0.002 | 0.001 | 0.001 |
| 59 | Not evaluated due to cracking during rolling | | | | | | |
| 60 | 3.34 | 0.08 | 0.31 | 0.001 | 0.001 | 0.001 | 0.001 |
| 61 | 3.29 | 0.07 | 0.09 | 0.002 | 0.002 | 0.001 | 0.001 |
| 62 | 3.33 | 0.06 | 0.11 | 0.001 | 0.002 | 0.001 | 0.001 |

[(Test 2) Intensity ratio $I_{ref}$ determination test]

The intensity ratio $I_{ref}$ of the grain-oriented electrical steel sheet of each test number was determined by the method described above in the section [Method for determining intensity ratio $I_{ref}$]. Note that, an apparatus with the product name GDA750 manufactured by Rigaku Corporation was used as the glow discharge optical emission spectrometer (GD-OES). The obtained $I_{Mg/Mg}$, $I_{Sn/Mg}$, and intensity ratio $I_{ref}$ are shown in Table 1-2.

[(Test 3) Sn concentration gradient $\Delta I_{Sn}$ determination test]

The Sn concentration gradient $\Delta I_{Sn}$ of the grain-oriented electrical steel sheet of each test number was determined based on the method described above in the section [Method for determining Sn concentration gradient $\Delta I_{Sn}$]. At this time, a 50-section moving average line was adopted as an approximate value. Further, a value obtained by subtracting 0.0070 from the Sn emission intensity of each section as an offset for the Sn emission intensity was taken as the emission intensity $I_{Sn}$ of Sn. The obtained $I_{Sn/Mg+20}$ and Sn concentration gradient $\Delta I_{Sn}$ are shown in Table 1-2.

[(Test 4) Secondary coating adhesion evaluation test]

The adhesion of the secondary coating of the grain-oriented electrical steel sheet of each test number was evaluated by the following method. Specifically, a sample having a length of 60 mm in the rolling direction and a length of 15 mm in the width direction was taken from the center position of the width of the grain-oriented electrical steel sheet of each test number.
The sample was subjected to a bending test using a cylindrical mandrel bending tester. Specifically, a flex resistance test described in JIS K 5600-5-1 (1999) was performed. A cylindrical mandrel (that is, a round mandrel bar) was installed in the testing machine. The sample was placed on the cylindrical mandrel in a manner so that the axial direction of the cylindrical mandrel coincided with the width direction of the sample. After fixing the sample with a clamp, the sample was bent 180° using the cylindrical mandrel as a fulcrum.
The aforementioned bending was performed using a cylindrical mandrel with a diameter of 10 mm, and thereafter the diameter of the cylindrical mandrel was increased at a pitch of 10 mm and the aforementioned bending was performed. The minimum diameter at which the residual ratio of the secondary coating was 40% or more was defined as a "bending peeling diameter" (mm). If the bending peeling diameter was 30 mm or less, it was determined that the sample was excellent in adhesion of the secondary coating. Further, if the bending peeling diameter was 20 mm or less, it was determined that the adhesion of the secondary coating was markedly excellent. If the bending peeling diameter was 40 mm or more, it was determined that the adhesion of the secondary coating was low. The obtained bending peeling diameter is shown in Table 1-2.

[(Test 5) Iron loss measurement test]

The magnetic properties (iron loss $W_{17/50}$) of the grain-oriented electrical steel sheet of each test number were evaluated in accordance with JIS C 2556: 2015. The obtained iron loss $W_{17/50}$ is shown in Table 1-2.

[Evaluation results]

Referring to Table 1-1 to 1-3, in each of Test Nos. 7 to 9, 11 to 13, 15 to 17, 20 to 22, 24 to 26, 28 to 30, 37 to 39, 41 to 43, 50, 51, 54, and 55, the chemical composition was appropriate and the production conditions were also appropriate. As a result, in each of these test numbers, the intensity ratio $I_{ref}$ defined by Formula (1) was 0.0006 or less. In addition, the Sn concentration gradient $\Delta I_{Sn}$ was 0.0004/sec or less. Therefore, the iron loss $W_{17/50}$ was a low value of less than 0.90 W/kg, and thus each of these test numbers was excellent in iron loss. In addition, the bending peeling diameter was 30 mm or less, and thus each of these test numbers was also excellent in adhesion of the secondary coating.

On the other hand, in Test Nos. 1 and 2, the content of Sn in the base steel sheet was low. Therefore, the iron loss $W_{17/50}$ was 0.90 W/kg or more.

In Test No. 59, the content of Sn in the slab was high. Consequently, cracks occurred in the steel sheet in the cold rolling process. Therefore, the subsequent production processes and Test 2 to Test 5 were not performed.

In Test No. 60, the content of Sn in the base steel sheet was high. Therefore, the iron loss $W_{17/50}$ was 0.90 W/kg or more.

In Test Nos. 3 to 6, 33 to 36, and 46 to 49, the average heating rate V3 during a period until the temperature in the final annealing process reached 1100°C from 900°C was too slow. In addition, in Test Nos. 6, 36, 48, and 49, the average oxygen partial pressure ratio PO3 in the final annealing process was too high. Consequently, the intensity ratio $I_{ref}$ was more than 0.0006. As a result, the bending peeling diameter was 40 mm or more, and thus the adhesion of the secondary coating was low.

In each of Test Nos. 19, 32, 45, and 58, the average heating rate V3 was too high. Therefore, the iron loss $W_{17/50}$ was 0.90 W/kg or more.

In each of Test Nos. 10, 14, 18, 23, 27, 31, 40, 44, 52, 53, 56, and 57, the average oxygen partial pressure ratio PO3 in the final annealing process was too high. Consequently, the intensity ratio $I_{ref}$ was more than 0.0006. As a result, the bending peeling diameter was 40 mm or more, and thus the adhesion of the secondary coating was low.

In Test No. 61, the pickling time in the pickling process was too long. Consequently, the intensity ratio $I_{ref}$ was more than 0.0006. As a result, the bending peeling diameter was 40 mm or more, and thus the adhesion of the secondary coating was low.

In Test No. 62, the purity of the hydrogen gas in the final annealing process was too low. Consequently, the intensity ratio $I_{ref}$ was more than 0.0006. As a result, the bending peeling diameter was 40 mm or more, and thus the adhesion of the secondary coating was low.

EXAMPLE 2

In Example 2, a plurality of grain-oriented electrical steel sheets in which the chemical compositions of the base metals were different from each other were produced.

Specifically, slabs having the chemical compositions shown in Table 2 were prepared.

[Table 2]

TABLE 2

| Test Number | Chemical Composition of Slab (unit is mass%; balance is Fe and impurities) | | | | | | | | | | | | | |
|---|---|---|---|---|---|---|---|---|---|---|---|---|---|---|
| | Si | Mn | Sn | N | C | Sol.Al | S | Se | P | Sb | Cr | Cu | Ni | Bi |
| 1 | 3.24 | 0.08 | 0.18 | 0.008 | 0.081 | 0.024 | 0.024 | - | - | - | - | - | - | - |
| 2 | 2.89 | 0.08 | 0.16 | 0.008 | 0.076 | 0.026 | 0.012 | 0.011 | - | - | - | - | - | - |
| 3 | 3.32 | 0.08 | 0.20 | 0.009 | 0.078 | 0.024 | 0.022 | - | 0.01 | - | - | - | - | - |
| 4 | 3.28 | 0.06 | 0.18 | 0.008 | 0.078 | 0.024 | 0.019 | - | - | 0.02 | - | - | - | - |
| 5 | 3.32 | 0.08 | 0.16 | 0.008 | 0.081 | 0.028 | 0.023 | - | - | - | 0.05 | - | - | - |
| 6 | 3.32 | 0.08 | 0.20 | 0.009 | 0.076 | 0.024 | 0.024 | - | - | - | - | 0.05 | - | - |
| 7 | 3.34 | 0.08 | 0.18 | 0.008 | 0.083 | 0.024 | 0.023 | - | - | - | - | - | 0.05 | - |
| 8 | 3.36 | 0.08 | 0.20 | 0.008 | 0.079 | 0.033 | 0.016 | - | - | - | - | - | - | 0.0020 |
| 9 | 3.34 | 0.08 | 0.22 | 0.008 | 0.080 | 0.023 | 0.022 | - | - | - | - | - | 0.05 | 0.0010 |
| 10 | 3.46 | 0.08 | 0.20 | 0.008 | 0.076 | 0.024 | 0.023 | - | - | - | 0.05 | 0.05 | - | 0.0010 |
| 11 | 3.31 | 0.08 | 0.18 | 0.008 | 0.076 | 0.023 | 0.024 | - | - | 0.01 | - | - | - | 0.0030 |
| 12 | 3.32 | 0.07 | 0.16 | 0.009 | 0.077 | 0.029 | 0.023 | - | - | - | 0.02 | 0.08 | 0.08 | 0.0020 |

(continued)

| Test Number | Chemical Composition of Slab (unit is mass%; balance is Fe and impurities) | | | | | | | | | | | | | |
|---|---|---|---|---|---|---|---|---|---|---|---|---|---|---|
| | Si | Mn | Sn | N | C | Sol.Al | S | Se | P | Sb | Cr | Cu | Ni | Bi |
| 13 | 3.31 | 0.08 | 0.18 | 0.008 | 0.078 | 0.026 | 0.020 | | 0.01 | | 0.06 | 0.10 | 0.03 | 0.0010 |
| 14 | 3.32 | 0.09 | 0.18 | 0.008 | 0.081 | 0.024 | 0.011 | 0.012 | 0.01 | 0.01 | 0.01 | 0.01 | 0.02 | 0.0020 |
| 15 | 4.20 | 0.24 | 0.15 | 0.009 | 0.064 | 0.026 | 0.016 | - | 0.04 | - | - | 0.15 | - | - |
| 16 | 2.56 | 0.14 | 0.20 | 0.008 | 0.023 | 0.025 | 0.019 | - | - | - | 0.12 | | 0.16 | 0.0052 |
| 17 | 4.45 | 0.65 | 0.22 | 0.008 | 0.079 | 0.025 | 0.011 | - | 0.01 | - | 0.04 | 0.11 | 0.04 | 0.0005 |

Each slab was subjected to a hot rolling process. Specifically, the slab was heated to 1350°C, and thereafter the slab was subjected to hot rolling to produce a hot-rolled steel sheet having a thickness of 2.3 mm.

The hot-rolled steel sheet after the hot rolling process was subjected to a hot-rolled sheet annealing process in which the annealing temperature was 900 to 1200°C and the holding time was 10 to 300 seconds. After the hot-rolled sheet annealing process, a pickling process was performed. In the pickling process, a pickling bath in which the hydrochloric acid concentration was 10% and the bath temperature was 90°C was used, and the pickling time was set to 120 seconds. Thereafter, a cold rolling process was performed to produce a cold-rolled steel sheet (base steel sheet) having a thickness of 0.22 mm.

The cold-rolled steel sheet was subjected to a decarburization annealing process. In the decarburization annealing process, the rapid heating attainment temperature Ta was set to 870°C, and the decarburization annealing temperature was set to 830°C. The average heating rate V1 until the temperature of the cold-rolled steel sheet reached the rapid heating attainment temperature Ta (870°C) from 550°C was set to 1000°C/sec, and the average oxygen partial pressure ratio PO1 was set to 0.03. The holding time at the decarburization annealing temperature (830°C) was set to 80 seconds. The average oxygen partial pressure ratio PO4 at the decarburization annealing temperature was set to 0.40.

An annealing separator (aqueous slurry) having MgO as a main component was applied to the decarburization-annealed steel sheet after the decarburization annealing process, and thereafter the decarburization-annealed steel sheet was coiled into a coil shape. The steel sheet coiled in a coil shape was subjected to a final annealing process. In the final annealing process, the average heating rate V2 during a period until the temperature of the steel sheet reached 900°C from 650°C was set to 15°C/hr, and the average oxygen partial pressure ratio PO2 was set to 0.008. In addition, during a period until the temperature reached 1100°C from 900°C, the average heating rate V3 was set to 15°C/hr and the average oxygen partial pressure ratio PO3 was 0.005. After raising the temperature to 1100°C or more, the steel sheet was held for 5 hours or more at that temperature. The purity of the hydrogen gas used as the atmospheric gas in the final annealing process was 6N (99.9999%).

The steel sheet after the final annealing process was subjected to a secondary coating formation process. In the secondary coating formation process, an insulation coating agent mainly composed of colloidal silica and phosphate was applied onto the surface (onto the primary coating) of the steel sheet after the final annealing process, and thereafter baking was performed under well-known conditions and a secondary coating was formed. A grain-oriented electrical steel sheet of each test number was produced by the above production process.

[Evaluation tests]

The grain-oriented electrical steel sheet of each test number was subjected to Test 1 to Test 5. The chemical composition of each base steel sheet determined by Test 1 in Example 2 is shown in Table 3.

[Table 3]

TABLE 3

| Test Number | Chemical Composition of Base Steel Sheet (unit is mass%; balance is Fe and impurities) | | | | | | | | | | | | | |
|---|---|---|---|---|---|---|---|---|---|---|---|---|---|---|
| | Si | Mn | Sn | N | C | Sol.Al | S | Se | P | Sb | Cr | Cu | Ni | Bi |
| 1 | 3.24 | 0.08 | 0.18 | 0.002 | 0.002 | 0.001 | 0.001 | - | - | - | - | - | - | - |
| 2 | 2.89 | 0.08 | 0.16 | 0.001 | 0.002 | 0.001 | 0.001 | 0.001 | - | - | - | - | - | - |

(continued)

| Test Number | Chemical Composition of Base Steel Sheet (unit is mass%; balance is Fe and impurities) | | | | | | | | | | | | | |
|---|---|---|---|---|---|---|---|---|---|---|---|---|---|---|
| | Si | Mn | Sn | N | C | Sol.Al | S | Se | P | Sb | Cr | Cu | Ni | Bi |
| 3 | 3.31 | 0.08 | 0.20 | 0.002 | 0.002 | 0.002 | 0.001 | - | 0.01 | - | - | - | - | - |
| 4 | 3.28 | 0.06 | 0.18 | 0.002 | 0.001 | 0.001 | 0.002 | - | - | 0.02 | - | - | - | - |
| 5 | 3.32 | 0.08 | 0.16 | 0.002 | 0.002 | 0.001 | 0.001 | - | - | - | 0.05 | - | - | - |
| 6 | 3.32 | 0.08 | 0.20 | 0.002 | 0.002 | 0.001 | 0.001 | - | - | - | - | 0.05 | - | - |
| 7 | 3.34 | 0.08 | 0.18 | 0.003 | 0.002 | 0.001 | 0.001 | - | - | - | - | - | 0.05 | - |
| 8 | 3.35 | 0.08 | 0.20 | 0.001 | 0.001 | 0.003 | 0.001 | - | - | - | - | - | - | 0.0020 |
| 9 | 3.34 | 0.08 | 0.22 | 0.002 | 0.002 | 0.001 | 0.001 | - | - | - | - | - | 0.05 | 0.0010 |
| 10 | 3.45 | 0.08 | 0.20 | 0.002 | 0.002 | 0.001 | 0.001 | - | - | - | 0.05 | 0.05 | - | 0.0010 |
| 11 | 3.31 | 0.08 | 0.18 | 0.002 | 0.003 | 0.001 | 0.001 | - | - | 0.01 | - | - | - | 0.0030 |
| 12 | 3.32 | 0.07 | 0.16 | 0.002 | 0.002 | 0.001 | 0.001 | - | - | - | 0.02 | 0.08 | 0.08 | 0.0020 |
| 13 | 3.31 | 0.08 | 0.18 | 0.002 | 0.001 | 0.001 | 0.001 | - | 0.01 | - | 0.06 | 0.10 | 0.03 | 0.0010 |
| 14 | 3.32 | 0.09 | 0.18 | 0.002 | 0.002 | 0.001 | 0.001 | 0.001 | 0.01 | 0.01 | 0.01 | 0.01 | 0.02 | 0.0020 |
| 15 | 4.10 | 0.23 | 0.15 | 0.001 | 0.002 | 0.001 | 0.001 | - | 0.04 | - | - | 0.15 | - | - |
| 16 | 2.55 | 0.13 | 0.19 | 0.001 | 0.002 | 0.002 | 0.001 | - | - | - | 0.12 | - | 0.16 | 0.0052 |
| 17 | 4.35 | 0.63 | 0.21 | 0.002 | 0.003 | 0.001 | 0.001 | - | 0.01 | - | 0.04 | 0.11 | 0.04 | 0.0005 |

Further, the results of Tests 2 to 5 are shown in Table 4.

[Table 4]

TABLE 4

| Test Number | $I_{Sn/Mg}$ | $I_{Mg/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|
| 1 | 0.0008 | 3.9 | 0.0002 | 0.0003 | 10 | 0.77 | Inventive Example |
| 2 | 0.0008 | 3.9 | 0.0002 | 0.0002 | 10 | 0.79 | Inventive Example |
| 3 | 0.0012 | 4.1 | 0.0003 | 0.0003 | 10 | 0.78 | Inventive Example |
| 4 | 0.0005 | 4.0 | 0.0001 | 0.0003 | 10 | 0.79 | Inventive Example |
| 5 | 0.0009 | 4.2 | 0.0002 | 0.0003 | 10 | 0.80 | Inventive Example |
| 6 | 0.0013 | 4.2 | 0.0003 | 0.0003 | 10 | 0.78 | Inventive Example |
| 7 | 0.0009 | 4.2 | 0.0002 | 0.0002 | 10 | 0.76 | Inventive Example |
| 8 | 0.0010 | 4.4 | 0.0002 | 0.0003 | 10 | 0.81 | Inventive Example |
| 9 | 0.0013 | 4.3 | 0.0003 | 0.0004 | 10 | 0.79 | Inventive Example |
| 10 | 0.0012 | 4.1 | 0.0003 | 0.0003 | 10 | 0.80 | Inventive Example |
| 11 | 0.0008 | 4.2 | 0.0002 | 0.0003 | 10 | 0.83 | Inventive Example |
| 12 | 0.0010 | 3.9 | 0.0003 | 0.0002 | 10 | 0.81 | Inventive Example |
| 13 | 0.0012 | 3.9 | 0.0003 | 0.0002 | 10 | 0.81 | Inventive Example |
| 14 | 0.0011 | 4.1 | 0.0003 | 0.0002 | 10 | 0.82 | Inventive Example |
| 15 | 0.0007 | 4.5 | 0.0002 | 0.0002 | 10 | 0.76 | Inventive Example |

(continued)

| Test Number | $I_{Sn/Mg}$ | $I_{Mg/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|
| 16 | 0.0008 | 3.8 | 0.0002 | 0.0002 | 10 | 0.79 | Inventive Example |
| 17 | 0.0006 | 4.6 | 0.0001 | 0.0003 | 10 | 0.77 | Inventive Example |

[Evaluation results]

Referring to Table 4, in each of Test Nos. 1 to 17, the chemical composition of the base steel sheet was appropriate, and the production conditions were also appropriate. As a result, in each of these test numbers, the intensity ratio $I_{ref}$ defined by Formula (1) was 0.0006 or less. In addition, the Sn concentration gradient $\Delta I_{Sn}$ was 0.0004/sec or less. Therefore, the iron loss $W_{17/50}$ was a low value of less than 0.90 W/kg, and thus each of these test numbers was excellent in iron loss. In addition, the bending peeling diameter was 20 mm or less, and thus each of these test numbers was also excellent in adhesion of the secondary coating.

EXAMPLE 3

In Example 3, grain-oriented electrical steel sheets were produced by varying the average oxygen partial pressure ratio PO4 in the decarburization annealing process.

Specifically, slabs in which the contents of Si, Mn, N, C, sol. Al, and S were as shown in Table 5-1, and also in which the content of Sn was as shown in Table 5-2 were prepared.

[Table 5-1]

TABLE 5-1

| Test Number | Chemical Composition of Slab (unit is mass%; balance is Fe and impurities) | | | | | |
|---|---|---|---|---|---|---|
| | Si | Mn | N | C | sol.Al | S |
| 1 | 3.42 | 0.08 | 0.008 | 0.076 | 0.027 | 0.022 |
| 2 | 3.24 | 0.06 | 0.007 | 0.071 | 0.021 | 0.015 |
| 3 | 3.31 | 0.07 | 0.004 | 0.073 | 0.019 | 0.018 |
| 4 | 2.99 | 0.13 | 0.011 | 0.068 | 0.042 | 0.032 |
| 5 | 3.42 | 0.09 | 0.013 | 0.071 | 0.039 | 0.024 |
| 6 | 2.64 | 0.10 | 0.009 | 0.061 | 0.033 | 0.029 |
| 7 | 3.87 | 0.18 | 0.005 | 0.088 | 0.029 | 0.044 |
| 8 | 3.51 | 0.14 | 0.007 | 0.076 | 0.030 | 0.041 |
| 9 | 3.38 | 0.07 | 0.005 | 0.071 | 0.021 | 0.021 |
| 10 | 3.46 | 0.04 | 0.005 | 0.069 | 0.013 | 0.010 |
| 11 | 3.42 | 0.02 | 0.005 | 0.078 | 0.022 | 0.010 |
| 12 | 3.40 | 0.04 | 0.010 | 0.076 | 0.027 | 0.011 |
| 13 | 3.33 | 0.07 | 0.005 | 0.071 | 0.032 | 0.021 |
| 14 | 3.41 | 0.06 | 0.009 | 0.081 | 0.035 | 0.024 |
| 15 | 2.87 | 0.22 | 0.009 | 0.064 | 0.029 | 0.041 |
| 16 | 3.02 | 0.19 | 0.006 | 0.071 | 0.022 | 0.039 |
| 17 | 3.22 | 0.15 | 0.003 | 0.077 | 0.013 | 0.032 |
| 18 | 3.50 | 0.12 | 0.006 | 0.071 | 0.018 | 0.033 |

(continued)

| Test Number | Chemical Composition of Slab (unit is mass%; balance is Fe and impurities) | | | | | |
|---|---|---|---|---|---|---|
| | Si | Mn | N | C | sol.Al | S |
| 19 | 3.05 | 0.07 | 0.008 | 0.069 | 0.024 | 0.018 |
| 20 | 2.98 | 0.22 | 0.007 | 0.066 | 0.025 | 0.041 |
| 21 | 2.78 | 0.27 | 0.004 | 0.061 | 0.021 | 0.039 |
| 22 | 3.32 | 0.09 | 0.012 | 0.069 | 0.039 | 0.024 |

Each slab was subjected to a hot rolling process. Specifically, the slab was heated to 1350°C, and thereafter the slab was subjected to hot rolling to produce a hot-rolled steel sheet having a thickness of 2.3 mm.

The hot-rolled steel sheet after the hot rolling process was subjected to a hot-rolled sheet annealing process in which the annealing temperature was 900 to 1200°C and the holding time was 10 to 300 seconds. After the hot-rolled sheet annealing process, a pickling process was performed. In the pickling process, a pickling bath in which the hydrochloric acid concentration was 10% and the bath temperature was 90°C was used, and the pickling time was set to 120 seconds. Thereafter, a cold rolling process was performed to produce a cold-rolled steel sheet (base steel sheet) having a thickness of 0.22 mm.

The cold-rolled steel sheet was subjected to a decarburization annealing process. In the decarburization annealing process, the rapid heating attainment temperature Ta was set to 870°C, and the decarburization annealing temperature was set to 830°C. The average heating rate V1 until the temperature of the cold-rolled steel sheet reached the rapid heating attainment temperature Ta (870°C) from 550°C was set to 1600°C/sec, and the average oxygen partial pressure ratio PO1 was set to 0.03. The holding time at the decarburization annealing temperature (830°C) was set to 80 seconds. The average oxygen partial pressure ratio PO4 at the decarburization annealing temperature is shown in Table 5-2.

[Table 5-2]

TABLE 5-2

| Test Number | Sn Content (mass%) | 0.88Sn +0.19 | PO4 | $I_{Sn/Mg}$ | $I_{Mg/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|---|---|---|
| 1 | 0.05 | 0.23 | 0.20 | 0.0002 | 4.3 | 0.0000 | 0.0005 | 30 | 0.81 | Inventive Example |
| 2 | 0.05 | 0.23 | 0.30 | 0.0001 | 4.4 | 0.0000 | 0.0002 | 20 | 0.82 | Inventive Example |
| 3 | 0.05 | 0.23 | 0.40 | 0.0002 | 4.3 | 0.0000 | 0.0001 | 10 | 0.82 | Inventive Example |
| 4 | 0.06 | 0.24 | 0.50 | 0.0001 | 4.5 | 0.0000 | 0.0001 | 10 | 0.82 | Inventive Example |
| 5 | 0.05 | 0.23 | 0.60 | 0.0001 | 4.4 | 0.0000 | 0.0001 | 10 | 0.81 | Inventive Example |
| 6 | 0.05 | 0.23 | 0.70 | 0.0001 | 4.5 | 0.0000 | 0.0001 | 10 | 0.90 or more | Comparative Example |
| 7 | 0.12 | 0.30 | 0.20 | 0.0005 | 4.1 | 0.0001 | 0.0005 | 30 | 0.79 | Inventive Example |
| 8 | 0.10 | 0.28 | 0.30 | 0.0005 | 3.9 | 0.0001 | 0.0003 | 20 | 0.78 | Inventive Example |
| 9 | 0.11 | 0.29 | 0.40 | 0.0003 | 4.1 | 0.0001 | 0.0002 | 10 | 0.79 | Inventive Example |

(continued)

| Test Number | Sn Content (mass%) | 0.88Sn +0.19 | PO4 | $I_{Sn/Mg}$ | $I_{Mg/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|---|---|---|
| 10 | 0.11 | 0.29 | 0.50 | 0.0002 | 4.2 | 0.0000 | 0.0002 | 10 | 0.77 | Inventive Example |
| 11 | 0.10 | 0.28 | 0.60 | 0.0003 | 3.9 | 0.0001 | 0.0002 | 10 | 0.80 | Inventive Example |
| 12 | 0.10 | 0.28 | 0.70 | 0.0003 | 4.1 | 0.0001 | 0.0002 | 10 | 0.90 or more | Comparative Example |
| 13 | 0.20 | 0.37 | 0.30 | 0.0013 | 3.8 | 0.0003 | 0.0006 | 30 | 0.76 | Inventive Example |
| 14 | 0.19 | 0.36 | 0.40 | 0.0012 | 3.9 | 0.0003 | 0.0003 | 20 | 0.76 | Inventive Example |
| 15 | 0.19 | 0.36 | 0.50 | 0.0015 | 3.9 | 0.0004 | 0.0003 | 20 | 0.76 | Inventive Example |
| 16 | 0.22 | 0.38 | 0.60 | 0.0013 | 3.8 | 0.0003 | 0.0003 | 10 | 0.75 | Inventive Example |
| 17 | 0.21 | 0.37 | 0.70 | 0.0014 | 4.0 | 0.0004 | 0.0002 | 10 | 0.90 or more | Comparative Example |
| 18 | 0.30 | 0.45 | 0.30 | 0.0021 | 4.0 | 0.0005 | 0.0007 | 30 | 0.73 | Inventive Example |
| 19 | 0.28 | 0.44 | 0.40 | 0.0019 | 4.0 | 0.0005 | 0.0006 | 30 | 0.71 | Inventive Example |
| 20 | 0.29 | 0.45 | 0.50 | 0.0020 | 3.9 | 0.0005 | 0.0004 | 20 | 0.72 | Inventive Example |
| 21 | 0.30 | 0.45 | 0.60 | 0.0018 | 4.1 | 0.0004 | 0.0003 | 20 | 0.71 | Inventive Example |
| 22 | 0.30 | 0.45 | 0.70 | 0.0018 | 4.2 | 0.0004 | 0.0003 | 20 | 0.90 or more | Comparative Example |

An annealing separator (aqueous slurry) having MgO as a main component was applied to the decarburization-annealed steel sheet after the decarburization annealing process, and thereafter the decarburization-annealed steel sheet was coiled into a coil shape. The steel sheet coiled in a coil shape was subjected to a final annealing process. In the final annealing process, the average heating rate V2 during a period until the temperature of the steel sheet reached 900°C from 650°C was set to 20°C/hr, and the average oxygen partial pressure ratio PO2 was set to 0.008. In addition, during a period until the temperature reached 1100°C from 900°C, the average heating rate V3 was set to 15°C/hr and the average oxygen partial pressure ratio PO3 was set to 0.005. After raising the temperature to 1100°C or more, the steel sheet was held for 5 hours or more at that temperature. The purity of the hydrogen gas used as the atmospheric gas in the final annealing process was 6N (99.9999%).

The steel sheet after the final annealing process was subjected to a secondary coating formation process. In the secondary coating formation process, an insulation coating agent mainly composed of colloidal silica and phosphate was applied onto the surface (onto the primary coating) of the steel sheet after the final annealing process, and thereafter baking was performed under well-known conditions and a secondary coating was formed. A grain-oriented electrical steel sheet of each test number was produced by the above production process.

[Evaluation tests]

The grain-oriented electrical steel sheet of each test number was subjected to Test 1 to Test 5.

In Example 3, the chemical composition of each base steel sheet determined as the result of the analysis in Test 1 was as shown in Table 5-3.

[Table 5-3]

TABLE 5-3

| Test Number | Chemical Composition of Base Steel Sheet (unit is mass%; balance is Fe and impurities) | | | | | | |
|---|---|---|---|---|---|---|---|
| | Si | Mn | Sn | N | C | sol.Al | S |
| 1 | 3.42 | 0.08 | 0.05 | 0.002 | 0.003 | 0.001 | 0.001 |
| 2 | 3.22 | 0.06 | 0.05 | 0.001 | 0.001 | 0.001 | 0.001 |
| 3 | 3.31 | 0.07 | 0.05 | 0.001 | 0.001 | 0.001 | 0.001 |
| 4 | 2.97 | 0.13 | 0.06 | 0.003 | 0.001 | 0.003 | 0.001 |
| 5 | 3.42 | 0.09 | 0.05 | 0.004 | 0.001 | 0.002 | 0.001 |
| 6 | 2.64 | 0.10 | 0.05 | 0.002 | 0.001 | 0.001 | 0.001 |
| 7 | 3.81 | 0.18 | 0.12 | 0.001 | 0.003 | 0.001 | 0.003 |
| 8 | 3.51 | 0.14 | 0.10 | 0.001 | 0.001 | 0.001 | 0.002 |
| 9 | 3.38 | 0.07 | 0.11 | 0.001 | 0.001 | 0.001 | 0.001 |
| 10 | 3.43 | 0.04 | 0.11 | 0.001 | 0.001 | 0.001 | 0.001 |
| 11 | 3.42 | 0.02 | 0.09 | 0.001 | 0.001 | 0.001 | 0.001 |
| 12 | 3.40 | 0.04 | 0.10 | 0.002 | 0.001 | 0.001 | 0.001 |
| 13 | 3.33 | 0.07 | 0.20 | 0.001 | 0.001 | 0.001 | 0.001 |
| 14 | 3.33 | 0.06 | 0.19 | 0.001 | 0.003 | 0.002 | 0.001 |
| 15 | 2.87 | 0.21 | 0.19 | 0.001 | 0.001 | 0.001 | 0.003 |
| 16 | 3.02 | 0.19 | 0.22 | 0.001 | 0.001 | 0.001 | 0.002 |
| 17 | 3.22 | 0.15 | 0.21 | 0.001 | 0.002 | 0.001 | 0.001 |
| 18 | 3.45 | 0.12 | 0.29 | 0.001 | 0.001 | 0.001 | 0.002 |
| 19 | 3.05 | 0.07 | 0.28 | 0.001 | 0.001 | 0.001 | 0.001 |
| 20 | 2.96 | 0.20 | 0.29 | 0.001 | 0.001 | 0.001 | 0.003 |
| 21 | 2.78 | 0.23 | 0.30 | 0.001 | 0.001 | 0.001 | 0.002 |
| 22 | 3.31 | 0.09 | 0.30 | 0.002 | 0.001 | 0.003 | 0.001 |

[Evaluation results]

Referring to Table 5-1 to Table 5-3, in Test Nos. 1 to 5, 7 to 11, 13 to 16, and 18 to 21, the chemical composition of each slab and the chemical composition of each base steel sheet were appropriate, and the production conditions were also appropriate. As a result, in each of these test numbers, the intensity ratio $I_{ref}$ defined by Formula (1) was 0.0006 or less. Therefore, the iron loss $W_{17/50}$ was a low value of less than 0.90 W/kg, and each of these test numbers was excellent in iron loss. In addition, the bending peeling diameter was 30 mm or less, and thus each of these test numbers was also excellent in adhesion of the secondary coating.

In addition, in Test Nos. 2 to 5, 8 to 11, 14 to 16, 20, and 21, the average oxygen partial pressure ratio PO4 was equal to or greater than the lower limit of Formula (5). Therefore, the Sn concentration gradient $\Delta I_{Sn}$ was 0.0000 to 0.0004/sec. Therefore, the bending peeling diameter was 20 mm or less, and thus each of these test numbers was further excellent in adhesion of the secondary coating.

On the other hand, in Test Nos. 6, 12, 17, and 22, PO4 was high. Consequently, the iron loss $W_{17/50}$ was 0.90 W/kg or more.

EXAMPLE 4

In Example 4, slabs in which the contents of Si, Mn, N, C, sol. Al, and S were as shown in Table 6-1, and also in which the content of Sn was as shown in Table 6-2 were prepared.

[Table 6-1]

TABLE 6-1

| Test Number | Chemical Composition of Slab (unit is mass%; balance is Fe and impurities) | | | | | |
|---|---|---|---|---|---|---|
| | Si | Mn | N | C | Sol.Al | S |
| 1 | 3.35 | 0.08 | 0.008 | 0.078 | 0.026 | 0.022 |
| 2 | 3.41 | 0.07 | 0.004 | 0.076 | 0.019 | 0.015 |
| 3 | 3.52 | 0.05 | 0.006 | 0.088 | 0.020 | 0.018 |
| 4 | 3.55 | 0.06 | 0.006 | 0.079 | 0.022 | 0.022 |
| 5 | 3.21 | 0.09 | 0.008 | 0.072 | 0.018 | 0.028 |
| 6 | 3.25 | 0.22 | 0.007 | 0.077 | 0.021 | 0.043 |
| 7 | 3.17 | 0.18 | 0.005 | 0.071 | 0.024 | 0.039 |
| 8 | 3.22 | 0.17 | 0.015 | 0.073 | 0.041 | 0.031 |
| 9 | 3.00 | 0.12 | 0.010 | 0.066 | 0.029 | 0.033 |
| 10 | 3.04 | 0.03 | 0.009 | 0.075 | 0.022 | 0.013 |
| 11 | 2.60 | 0.05 | 0.007 | 0.059 | 0.029 | 0.017 |
| 12 | 2.78 | 0.04 | 0.008 | 0.066 | 0.030 | 0.013 |
| 13 | 3.22 | 0.07 | 0.012 | 0.075 | 0.031 | 0.016 |
| 14 | 3.82 | 0.11 | 0.011 | 0.083 | 0.036 | 0.028 |
| 15 | 3.54 | 0.09 | 0.013 | 0.077 | 0.032 | 0.021 |
| 16 | 3.25 | 0.18 | 0.009 | 0.078 | 0.031 | 0.044 |
| 17 | 3.44 | 0.04 | 0.008 | 0.076 | 0.022 | 0.027 |
| 18 | 3.38 | 0.14 | 0.005 | 0.078 | 0.019 | 0.022 |
| 19 | 3.33 | 0.19 | 0.004 | 0.079 | 0.012 | 0.049 |
| 20 | 3.25 | 0.10 | 0.006 | 0.073 | 0.019 | 0.025 |
| 21 | 3.18 | 0.09 | 0.015 | 0.071 | 0.041 | 0.021 |
| 22 | 3.54 | 0.08 | 0.012 | 0.077 | 0.039 | 0.019 |
| 23 | 3.59 | 0.03 | 0.010 | 0.081 | 0.040 | 0.011 |
| 24 | 3.48 | 0.04 | 0.008 | 0.083 | 0.034 | 0.011 |
| 25 | 3.29 | 0.08 | 0.009 | 0.069 | 0.032 | 0.018 |
| 26 | 3.44 | 0.04 | 0.006 | 0.082 | 0.031 | 0.013 |
| 27 | 3.19 | 0.24 | 0.006 | 0.071 | 0.028 | 0.045 |
| 28 | 3.22 | 0.03 | 0.008 | 0.079 | 0.033 | 0.013 |
| 29 | 2.92 | 0.05 | 0.010 | 0.064 | 0.039 | 0.011 |
| 30 | 2.95 | 0.08 | 0.008 | 0.070 | 0.029 | 0.018 |
| 31 | 3.20 | 0.01 | 0.006 | 0.071 | 0.025 | 0.012 |
| 32 | 3.34 | 0.04 | 0.009 | 0.081 | 0.024 | 0.016 |

(continued)

| Test Number | Chemical Composition of Slab (unit is mass%; balance is Fe and impurities) | | | | | |
|---|---|---|---|---|---|---|
| | Si | Mn | N | C | Sol.Al | S |
| 33 | 3.29 | 0.08 | 0.007 | 0.077 | 0.028 | 0.019 |
| 34 | 3.29 | 0.09 | 0.005 | 0.079 | 0.022 | 0.021 |
| 35 | 3.41 | 0.10 | 0.009 | 0.081 | 0.022 | 0.025 |
| 36 | 3.38 | 0.15 | 0.006 | 0.075 | 0.025 | 0.031 |
| 37 | 3.31 | 0.19 | 0.004 | 0.071 | 0.019 | 0.027 |
| 38 | 3.19 | 0.19 | 0.009 | 0.073 | 0.024 | 0.022 |
| 39 | 3.25 | 0.09 | 0.006 | 0.071 | 0.019 | 0.023 |
| 40 | 3.64 | 0.03 | 0.005 | 0.089 | 0.014 | 0.013 |
| 41 | 3.26 | 0.05 | 0.010 | 0.073 | 0.029 | 0.015 |
| 42 | 2.84 | 0.06 | 0.013 | 0.066 | 0.038 | 0.015 |
| 43 | 2.90 | 0.02 | 0.012 | 0.067 | 0.033 | 0.014 |
| 44 | 3.21 | 0.19 | 0.008 | 0.073 | 0.031 | 0.049 |
| 45 | 3.30 | 0.19 | 0.008 | 0.079 | 0.030 | 0.050 |
| 46 | 3.52 | 0.18 | 0.007 | 0.083 | 0.029 | 0.045 |
| 47 | 3.30 | 0.11 | 0.009 | 0.078 | 0.028 | 0.028 |
| 48 | 3.30 | 0.10 | 0.010 | 0.074 | 0.028 | 0.022 |
| 49 | 3.29 | 0.16 | 0.005 | 0.079 | 0.022 | 0.039 |
| 50 | 3.41 | 0.14 | 0.004 | 0.077 | 0.021 | 0.034 |
| 51 | 3.45 | 0.08 | 0.008 | 0.077 | 0.019 | 0.027 |
| 52 | 3.44 | 0.09 | 0.010 | 0.083 | 0.025 | 0.021 |
| 53 | 3.12 | 0.13 | 0.009 | 0.077 | 0.025 | 0.034 |
| 54 | 3.22 | 0.09 | 0.003 | 0.073 | 0.011 | 0.025 |
| 55 | 3.28 | 0.08 | 0.003 | 0.076 | 0.014 | 0.019 |
| 56 | 3.51 | 0.09 | 0.008 | 0.079 | 0.022 | 0.022 |
| 57 | 3.41 | 0.05 | 0.014 | 0.073 | 0.039 | 0.012 |
| 58 | 3.44 | 0.02 | 0.012 | 0.077 | 0.042 | 0.012 |
| 59 | 3.29 | 0.09 | 0.008 | 0.078 | 0.029 | 0.025 |
| 60 | 3.14 | 0.09 | 0.007 | 0.074 | 0.025 | 0.019 |

Each slab was subjected to a hot rolling process. Specifically, the slab was heated to 1350°C, and thereafter the slab was subjected to hot rolling to produce a hot-rolled steel sheet having a thickness of 2.3 mm.

The hot-rolled steel sheet after the hot rolling process was subjected to a hot-rolled sheet annealing process in which the annealing temperature was 900 to 1200°C and the holding time was 10 to 300 seconds. After the hot-rolled sheet annealing process, a pickling process was performed. In the pickling process, a pickling bath in which the hydrochloric acid concentration was 10% and the bath temperature was 90°C was used, and the pickling time was set to 120 seconds. Thereafter, a cold rolling process was performed to produce a cold-rolled steel sheet (base steel sheet) having a thickness of 0.22 mm.

The cold-rolled steel sheet was subjected to a decarburization annealing process. In the decarburization annealing process, the rapid heating attainment temperature Ta was set to 860°C, and the decarburization annealing temperature was set to 830°C. The average heating rate V1 until the temperature of the cold-rolled steel sheet reached the rapid heating attainment temperature Ta (860°C) from 550°C was set to 800°C/sec, and the average oxygen partial pressure ratio PO1 was set to 0.03. The holding time at the decarburization annealing temperature (830°C) was set to 60 seconds. The average oxygen partial pressure ratio PO4 at the decarburization annealing temperature was set to 0.30.

An annealing separator (aqueous slurry) having MgO as a main component was applied to the decarburization-annealed steel sheet after the decarburization annealing process, and thereafter the decarburization-annealed steel sheet was coiled into a coil shape. The steel sheet coiled in a coil shape was subjected to a final annealing process. In the final annealing process, the average heating rate V2 during a period until the temperature of the steel sheet reached 900°C from 650°C was set to 20°C/hr, and the average oxygen partial pressure ratio PO2 was 0.008. In addition, the average heating rate V3 and the average oxygen partial pressure ratio PO3 during a period until the temperature reached 1100°C from 900°C were set as shown in Table 6-2. After raising the temperature to 1100°C or more, the steel sheet was held for 5 hours or more at that temperature. The purity of the hydrogen gas used as the atmospheric gas in the final annealing process was 6N (99.9999%).

[Table 6-2]

TABLE 6-2

| Test Number | Sn Content (mass%) | 31Sn+5 | V3 (°C/hr) | PO3 | -0.020Sn +0.015 | $I_{Sn/Mg}$ | $I_{Mg/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|---|---|---|---|---|
| 1 | 0.00 | 5 | 10 | 0.005 | 0.015 | - | 3.9 | - | - | 20 | 0.90 or more | Comparative Example |
| 2 | 0.04 | 6 | 10 | 0.005 | 0.014 | 0.0004 | 3.9 | 0.0001 | 0.0000 | 10 | 0.90 or more | Comparative Example |
| 3 | 0.05 | 7 | 5 | 0.002 | 0.014 | 0.0026 | 3.1 | 0.0008 | -0.0001 | 40 | 0.84 | Comparative Example |
| 4 | 0.05 | 7 | 5 | 0.005 | 0.014 | 0.0025 | 3.1 | 0.0008 | -0.0001 | 40 | 0.84 | Comparative Example |
| 5 | 0.05 | 7 | 5 | 0.010 | 0.014 | 0.0028 | 3.2 | 0.0009 | -0.0001 | 40 | 0.85 | Comparative Example |
| 6 | 0.05 | 7 | 5 | 0.015 | 0.014 | 0.0033 | 3.0 | 0.0011 | -0.0002 | 50 | 0.85 | Comparative Example |
| 7 | 0.05 | 7 | 10 | 0.002 | 0.014 | 0.0001 | 4.3 | 0.0000 | 0.0001 | 10 | 0.83 | Inventive Example |
| 8 | 0.06 | 7 | 10 | 0.005 | 0.014 | 0.0001 | 4.0 | 0.0000 | 0.0001 | 10 | 0.83 | Inventive Example |
| 9 | 0.05 | 7 | 10 | 0.010 | 0.014 | 0.0002 | 4.2 | 0.0000 | 0.0001 | 10 | 0.84 | Inventive Example |
| 10 | 0.05 | 7 | 10 | 0.015 | 0.014 | 0.0023 | 3.2 | 0.0007 | -0.0001 | 40 | 0.85 | Comparative Example |
| 11 | 0.05 | 7 | 15 | 0.002 | 0.014 | 0.0001 | 4.0 | 0.0000 | 0.0002 | 10 | 0.82 | Inventive Example |
| 12 | 0.06 | 7 | 15 | 0.005 | 0.014 | 0.0001 | 3.9 | 0.0000 | 0.0001 | 10 | 0.82 | Inventive Example |
| 13 | 0.06 | 7 | 15 | 0.010 | 0.014 | 0.0001 | 3.9 | 0.0000 | 0.0002 | 10 | 0.83 | Inventive Example |

| Test Number | Sn Content (mass%) | 31Sn+5 | V3 (°C/hr) | PO3 | -0.020Sn +0.015 | $I_{Sn/Mg}$ | $I_{Mg/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|---|---|---|---|---|
| 14 | 0.08 | 7 | 15 | 0.015 | 0.013 | 0.0022 | 3.3 | 0.0007 | -0.0001 | 40 | 0.84 | Comparative Example |
| 15 | 0.06 | 7 | 30 | 0.002 | 0.014 | 0.0001 | 4.4 | 0.0000 | 0.0001 | 10 | 0.84 | Inventive Example |
| 16 | 0.07 | 7 | 30 | 0.005 | 0.014 | 0.0001 | 4.4 | 0.0000 | 0.0001 | 10 | 0.84 | Inventive Example |
| 17 | 0.06 | 7 | 30 | 0.010 | 0.014 | 0.0002 | 4.3 | 0.0000 | 0.0001 | 20 | 0.85 | Inventive Example |
| 18 | 0.06 | 7 | 30 | 0.015 | 0.014 | 0.0023 | 3.5 | 0.0007 | -0.0001 | 40 | 0.85 | Comparative Example |
| 19 | 0.06 | 7 | 35 | 0.005 | 0.014 | 0.0001 | 4.8 | 0.0000 | 0.0001 | 10 | 0.90 or more | Comparative Example |
| 20 | 0.10 | 8 | 10 | 0.002 | 0.013 | 0.0001 | 4.2 | 0.0000 | 0.0003 | 10 | 0.81 | Inventive Example |
| 21 | 0.10 | 8 | 10 | 0.005 | 0.013 | 0.0002 | 4.1 | 0.0000 | 0.0002 | 10 | 0.82 | Inventive Example |
| 22 | 0.11 | 8 | 10 | 0.010 | 0.013 | 0.0004 | 4.0 | 0.0001 | 0.0001 | 20 | 0.82 | Inventive Example |
| 23 | 0.10 | 8 | 10 | 0.015 | 0.013 | 0.0028 | 3.8 | 0.0007 | -0.0001 | 40 | 0.83 | Comparative Example |
| 24 | 0.12 | 9 | 15 | 0.002 | 0.013 | 0.0001 | 4.6 | 0.0000 | 0.0004 | 10 | 0.80 | Inventive Example |
| 25 | 0.13 | 9 | 15 | 0.005 | 0.012 | 0.0004 | 4.4 | 0.0001 | 0.0003 | 20 | 0.81 | Inventive Example |
| 26 | 0.12 | 9 | 15 | 0.010 | 0.013 | 0.0004 | 4.2 | 0.0001 | 0.0002 | 20 | 0.81 | Inventive Example |
| 27 | 0.12 | 9 | 15 | 0.015 | 0.013 | 0.0028 | 3.8 | 0.0007 | 0.0000 | 40 | 0.82 | Comparative Example |

EP 4 512 915 A1

| Test Number | Sn Content (mass%) | 31Sn+5 | V3 (°C/hr) | PO3 | -0.020Sn +0.015 | $I_{Sn/Mg}$ | $I_{Mg/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|---|---|---|---|---|
| 28 | 0.11 | 8 | 30 | 0.002 | 0.013 | 0.0001 | 4.4 | 0.0000 | 0.0003 | 20 | 0.83 | Inventive Example |
| 29 | 0.11 | 8 | 30 | 0.005 | 0.013 | 0.0003 | 4.5 | 0.0001 | 0.0001 | 10 | 0.83 | Inventive Example |
| 30 | 0.11 | 8 | 30 | 0.010 | 0.013 | 0.0003 | 4.1 | 0.0001 | 0.0001 | 20 | 0.84 | Inventive Example |
| 31 | 0.11 | 8 | 30 | 0.015 | 0.013 | 0.0026 | 3.7 | 0.0007 | 0.0000 | 40 | 0.85 | Comparative Example |
| 32 | 0.12 | 9 | 35 | 0.005 | 0.013 | 0.0001 | 4.6 | 0.0000 | 0.0001 | 20 | 0.90 or more | Comparative Example |
| 33 | 0.20 | 11 | 10 | 0.002 | 0.011 | 0.0031 | 3.7 | 0.0008 | 0.0004 | 40 | 0.76 | Comparative Example |
| 34 | 0.20 | 11 | 10 | 0.005 | 0.011 | 0.0040 | 3.4 | 0.0012 | 0.0003 | 40 | 0.76 | Comparative Example |
| 35 | 0.21 | 12 | 10 | 0.010 | 0.011 | 0.0041 | 3.3 | 0.0012 | 0.0003 | 50 | 0.77 | Comparative Example |
| 36 | 0.20 | 11 | 10 | 0.015 | 0.011 | 0.0043 | 3.3 | 0.0013 | 0.0003 | 50 | 0.77 | Comparative Example |
| 37 | 0.21 | 12 | 15 | 0.002 | 0.011 | 0.0011 | 4.3 | 0.0003 | 0.0005 | 30 | 0.76 | Inventive Example |
| 38 | 0.21 | 12 | 15 | 0.005 | 0.011 | 0.0012 | 4.3 | 0.0003 | 0.0005 | 30 | 0.77 | Inventive Example |
| 39 | 0.23 | 12 | 15 | 0.010 | 0.010 | 0.0014 | 4.2 | 0.0003 | 0.0005 | 30 | 0.77 | Inventive Example |
| 40 | 0.20 | 11 | 15 | 0.015 | 0.011 | 0.0035 | 3.5 | 0.0010 | 0.0001 | 50 | 0.78 | Comparative Example |
| 41 | 0.20 | 11 | 30 | 0.002 | 0.011 | 0.0012 | 4.5 | 0.0003 | 0.0006 | 30 | 0.78 | Inventive Example |

(continued)

| Test Number | Sn Content (mass%) | $31Sn+5$ | V3 (°C/hr) | PO3 | $-0.020Sn +0.015$ | $I_{Sn/Mg}$ | $I_{Mg/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|---|---|---|---|---|
| 42 | 0.20 | 11 | 30 | 0.005 | 0.011 | 0.0012 | 4.2 | 0.0003 | 0.0005 | 30 | 0.78 | Inventive Example |
| 43 | 0.20 | 11 | 30 | 0.010 | 0.011 | 0.0014 | 3.8 | 0.0004 | 0.0005 | 30 | 0.78 | Inventive Example |
| 44 | 0.23 | 12 | 30 | 0.015 | 0.010 | 0.0035 | 3.6 | 0.0010 | 0.0002 | 50 | 0.79 | Comparative Example |
| 45 | 0.21 | 12 | 35 | 0.005 | 0.011 | 0.0011 | 4.3 | 0.0003 | 0.0007 | 30 | 0.90 or more | Comparative Example |
| 46 | 0.29 | 14 | 10 | 0.002 | 0.009 | 0.0042 | 3.4 | 0.0012 | 0.0006 | 40 | 0.75 | Comparative Example |
| 47 | 0.28 | 14 | 10 | 0.005 | 0.009 | 0.0044 | 3.2 | 0.0014 | 0.0005 | 40 | 0.75 | Comparative Example |
| 48 | 0.29 | 14 | 10 | 0.010 | 0.009 | 0.0046 | 2.9 | 0.0016 | 0.0005 | 50 | 0.76 | Comparative Example |
| 49 | 0.26 | 13 | 10 | 0.015 | 0.010 | 0.0047 | 2.9 | 0.0016 | 0.0004 | 50 | 0.77 | Comparative Example |
| 50 | 0.30 | 14 | 15 | 0.002 | 0.009 | 0.0014 | 4.2 | 0.0003 | 0.0008 | 30 | 0.73 | Inventive Example |
| 51 | 0.30 | 14 | 15 | 0.005 | 0.009 | 0.0018 | 3.9 | 0.0005 | 0.0008 | 30 | 0.74 | Inventive Example |
| 52 | 0.29 | 14 | 15 | 0.010 | 0.009 | 0.0039 | 3.4 | 0.0011 | 0.0005 | 50 | 0.74 | Comparative Example |
| 53 | 0.29 | 14 | 15 | 0.015 | 0.009 | 0.0045 | 3.3 | 0.0014 | 0.0004 | 50 | 0.75 | Comparative Example |
| 54 | 0.30 | 14 | 30 | 0.002 | 0.009 | 0.0017 | 3.9 | 0.0004 | 0.0008 | 30 | 0.75 | Inventive Example |
| 55 | 0.29 | 14 | 30 | 0.005 | 0.009 | 0.0021 | 3.8 | 0.0006 | 0.0007 | 30 | 0.75 | Inventive Example |

(continued)

| Test Number | Sn Content (mass%) | 31Sn+5 | V3 (°C/hr) | PO3 | -0.020Sn +0.015 | $I_{Sn/Mg}$ | $I_{Mg/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|---|---|---|---|---|
| 56 | 0.28 | 14 | 30 | 0.010 | 0.009 | 0.0033 | 3.2 | 0.0010 | 0.0006 | 50 | 0.76 | Comparative Example |
| 57 | 0.29 | 14 | 30 | 0.015 | 0.009 | 0.0042 | 3.2 | 0.0013 | 0.0005 | 50 | 0.77 | Comparative Example |
| 58 | 0.29 | 14 | 35 | 0.005 | 0.009 | 0.0012 | 4.2 | 0.0003 | 0.0006 | 30 | 0.90 or more | Comparative Example |
| 59 | 0.31 | 15 | - | - | - | - | - | - | - | Not evaluated due to cracking during rolling | | Comparative Example |
| 60 | 0.31 | 15 | 20 | 0.005 | 0.009 | 0.0022 | 4.0 | 0.0006 | 0.0007 | 30 | 0.90 or more | Comparative Example |

The steel sheet after the final annealing process was subjected to a secondary coating formation process. In the secondary coating fonnation process, an insulation coating agent mainly composed of colloidal silica and phosphate was applied onto the surface (onto the primary coating) of the steel sheet after the final annealing process, and thereafter baking was performed under well-known conditions and a secondary coating was formed. A grain-oriented electrical steel sheet of each test number was produced by the above production process.

[Evaluation tests]

The grain-oriented electrical steel sheet of each test number was subjected to Test 1 to Test 5.

In Example 4, the chemical composition of each base steel sheet determined as the result of the analysis in Test 1 was as shown in Table 6-3.

[Table 6-3]

TABLE 6-3

| Test Number | Chemical Composition of Base Steel Sheet (unit is mass%; balance is Fe and impurities) | | | | | | |
|---|---|---|---|---|---|---|---|
| | Si | Mn | Sn | N | C | Sol.Al | S |
| 1 | 3.35 | 0.08 | 0.00 | 0.002 | 0.003 | 0.001 | 0.001 |
| 2 | 3.41 | 0.07 | 0.04 | 0.001 | 0.002 | 0.001 | 0.001 |
| 3 | 3.52 | 0.05 | 0.05 | 0.001 | 0.002 | 0.001 | 0.001 |
| 4 | 3.51 | 0.06 | 0.05 | 0.001 | 0.002 | 0.001 | 0.001 |
| 5 | 3.21 | 0.09 | 0.05 | 0.001 | 0.001 | 0.001 | 0.001 |
| 6 | 3.25 | 0.20 | 0.05 | 0.001 | 0.001 | 0.001 | 0.002 |
| 7 | 3.17 | 0.18 | 0.05 | 0.001 | 0.001 | 0.001 | 0.002 |
| 8 | 3.22 | 0.16 | 0.06 | 0.004 | 0.002 | 0.003 | 0.002 |
| 9 | 3.00 | 0.12 | 0.05 | 0.001 | 0.001 | 0.001 | 0.002 |
| 10 | 3.04 | 0.03 | 0.05 | 0.001 | 0.002 | 0.001 | 0.001 |
| 11 | 2.60 | 0.05 | 0.05 | 0.001 | 0.001 | 0.001 | 0.001 |
| 12 | 2.78 | 0.04 | 0.06 | 0.001 | 0.001 | 0.001 | 0.001 |
| 13 | 3.22 | 0.07 | 0.06 | 0.002 | 0.002 | 0.001 | 0.001 |
| 14 | 3.77 | 0.11 | 0.08 | 0.001 | 0.003 | 0.001 | 0.002 |
| 15 | 3.54 | 0.09 | 0.06 | 0.002 | 0.001 | 0.001 | 0.001 |
| 16 | 3.25 | 0.18 | 0.07 | 0.001 | 0.002 | 0.002 | 0.002 |
| 17 | 3.42 | 0.04 | 0.06 | 0.001 | 0.001 | 0.001 | 0.001 |
| 18 | 3.38 | 0.14 | 0.06 | 0.001 | 0.001 | 0.001 | 0.001 |
| 19 | 3.33 | 0.17 | 0.06 | 0.001 | 0.002 | 0.003 | 0.002 |
| 20 | 3.25 | 0.10 | 0.10 | 0.001 | 0.001 | 0.001 | 0.001 |
| 21 | 3.18 | 0.09 | 0.10 | 0.003 | 0.001 | 0.001 | 0.001 |
| 22 | 3.54 | 0.08 | 0.11 | 0.002 | 0.001 | 0.001 | 0.001 |
| 23 | 3.55 | 0.03 | 0.10 | 0.002 | 0.003 | 0.001 | 0.001 |
| 24 | 3.48 | 0.04 | 0.12 | 0.001 | 0.002 | 0.001 | 0.001 |
| 25 | 3.29 | 0.08 | 0.13 | 0.001 | 0.001 | 0.001 | 0.001 |
| 26 | 3.44 | 0.04 | 0.12 | 0.001 | 0.001 | 0.001 | 0.001 |
| 27 | 3.19 | 0.22 | 0.12 | 0.001 | 0.001 | 0.002 | 0.002 |

(continued)

| Test Number | Chemical Composition of Base Steel Sheet (unit is mass%; balance is Fe and impurities) | | | | | | |
|---|---|---|---|---|---|---|---|
| | Si | Mn | Sn | N | C | Sol.Al | S |
| 28 | 3.22 | 0.03 | 0.11 | 0.001 | 0.001 | 0.001 | 0.001 |
| 29 | 2.92 | 0.05 | 0.11 | 0.002 | 0.001 | 0.001 | 0.001 |
| 30 | 2.95 | 0.08 | 0.11 | 0.001 | 0.001 | 0.001 | 0.001 |
| 31 | 3.20 | 0.01 | 0.11 | 0.001 | 0.001 | 0.001 | 0.001 |
| 32 | 3.34 | 0.04 | 0.12 | 0.001 | 0.002 | 0.001 | 0.001 |
| 33 | 3.29 | 0.08 | 0.20 | 0.001 | 0.001 | 0.001 | 0.001 |
| 34 | 3.29 | 0.09 | 0.20 | 0.001 | 0.003 | 0.001 | 0.001 |
| 35 | 3.41 | 0.10 | 0.21 | 0.002 | 0.001 | 0.001 | 0.002 |
| 36 | 3.38 | 0.15 | 0.20 | 0.001 | 0.001 | 0.002 | 0.002 |
| 37 | 3.31 | 0.18 | 0.21 | 0.002 | 0.001 | 0.001 | 0.001 |
| 38 | 3.19 | 0.19 | 0.21 | 0.002 | 0.001 | 0.001 | 0.001 |
| 39 | 3.25 | 0.09 | 0.23 | 0.002 | 0.001 | 0.001 | 0.001 |
| 40 | 3.64 | 0.03 | 0.20 | 0.001 | 0.003 | 0.001 | 0.001 |
| 41 | 3.26 | 0.05 | 0.20 | 0.001 | 0.001 | 0.001 | 0.001 |
| 42 | 2.84 | 0.06 | 0.20 | 0.002 | 0.001 | 0.001 | 0.001 |
| 43 | 2.90 | 0.02 | 0.20 | 0.001 | 0.001 | 0.001 | 0.001 |
| 44 | 3.21 | 0.17 | 0.23 | 0.001 | 0.001 | 0.003 | 0.002 |
| 45 | 3.30 | 0.19 | 0.21 | 0.001 | 0.001 | 0.004 | 0.003 |
| 46 | 3.50 | 0.18 | 0.29 | 0.001 | 0.003 | 0.002 | 0.002 |
| 47 | 3.30 | 0.11 | 0.28 | 0.001 | 0.001 | 0.002 | 0.001 |
| 48 | 3.30 | 0.10 | 0.29 | 0.002 | 0.001 | 0.001 | 0.001 |
| 49 | 3.29 | 0.11 | 0.26 | 0.001 | 0.001 | 0.002 | 0.002 |
| 50 | 3.41 | 0.14 | 0.30 | 0.001 | 0.001 | 0.002 | 0.001 |
| 51 | 3.45 | 0.08 | 0.28 | 0.001 | 0.001 | 0.001 | 0.001 |
| 52 | 3.44 | 0.09 | 0.29 | 0.001 | 0.002 | 0.001 | 0.001 |
| 53 | 3.12 | 0.13 | 0.29 | 0.001 | 0.001 | 0.001 | 0.002 |
| 54 | 3.22 | 0.09 | 0.30 | 0.001 | 0.001 | 0.001 | 0.001 |
| 55 | 3.28 | 0.08 | 0.29 | 0.001 | 0.001 | 0.001 | 0.001 |
| 56 | 3.51 | 0.09 | 0.28 | 0.001 | 0.002 | 0.001 | 0.001 |
| 57 | 3.41 | 0.05 | 0.29 | 0.003 | 0.001 | 0.001 | 0.001 |
| 58 | 3.44 | 0.02 | 0.28 | 0.002 | 0.001 | 0.001 | 0.001 |
| 59 | 3.29 | 0.09 | 0.31 | 0.001 | 0.002 | 0.001 | 0.001 |
| 60 | 3.14 | 0.09 | 0.31 | 0.001 | 0.001 | 0.001 | 0.001 |

[Evaluation results]

Referring to Table 6-1 to Table 6-3, in each of Test Nos. 7 to 9, 11 to 13, 15 to 17, 20 to 22, 24 to 26, 28 to 30, 37 to 39, 41 to 43, 50, 51, 54, and 55, the chemical composition was appropriate and the production conditions were also appropriate. As a result, in each of these test numbers, the intensity ratio $I_{ref}$ defined by Formula (1) was 0.0006 or less. Therefore, the iron loss $W_{17/50}$ was a low value of less than 0.90 W/kg, and thus each of these test numbers was excellent in iron loss. In addition, the bending peeling diameter was 30 mm or less, and thus each of these test numbers was also excellent in adhesion of the secondary coating.

In addition, Test Nos. 7 to 9, 11 to 13, 15 to 17, 20 to 22, 24 to 26, and 28 to 30 satisfied Formula (5). Therefore, the Sn concentration gradient $\Delta I_{Sn}$ was 0.0000 to 0.0004/sec. Thus, the bending peeling diameter was 20 mm or less, and each of these test numbers was further excellent in adhesion of the secondary coating.

On the other hand, in Test Nos. 1 and 2, the content of Sn in the base steel sheet was low. Therefore, the iron loss $W_{17/50}$ was 0.90 W/kg or more.

In Test No. 59, the content of Sn in the base steel sheet was high. Consequently, cracks occurred in the steel sheet in the cold rolling process. Therefore, the subsequent production processes and Test 2 to Test 5 were not performed.

In Test No. 60, the content of Sn in the base steel sheet was high. Therefore, the iron loss $W_{17/50}$ was 0.90 W/kg or more.

In Test Nos. 3 to 6, 33 to 36, and 46 to 49, the average heating rate V3 during a period until the temperature in the final annealing process reached 1100°C from 900°C was too slow. In addition, in Test Nos. 6, 36, 48 and 49, the average oxygen partial pressure ratio PO3 in the final annealing process was too high. Consequently, the intensity ratio $I_{ref}$ was more than 0.0006. As a result, the bending peeling diameter was 40 mm or more, and thus the adhesion of the secondary coating was low.

In each of Test Nos. 19, 32, 45, and 58, the average heating rate V3 was too high. Consequently, the iron loss $W_{17/50}$ was 0.90 W/kg or more.

In each of Test Nos. 10, 14, 18, 23, 27, 31, 40, 44, 52, 53, 56, and 57, the average oxygen partial pressure ratio PO3 in the final annealing process was too high. Consequently, the intensity ratio $I_{ref}$ was more than 0.0006. As a result, the bending peeling diameter was 40 mm or more, and thus the adhesion of the secondary coating was low.

EXAMPLE 5

In Example 5, grain-oriented electrical steel sheets were produced by varying the production conditions in the temperature raising process of the decarburization annealing process.

Specifically, slabs in which the contents of Si, Mn, N, C, sol. Al, and S were as shown in Table 7-1, and also in which the content of Sn was as shown in Table 7-2 were prepared.

[Table 7-1]

TABLE 7-1

| Test Number | Chemical Composition of Slab (unit is mass%; balance is Fe and impurities) | | | | | |
|---|---|---|---|---|---|---|
| | Si | Mn | N | C | Sol.Al | S |
| 1 | 3.34 | 0.08 | 0.008 | 0.076 | 0.027 | 0.022 |
| 2 | 3.41 | 0.11 | 0.005 | 0.069 | 0.024 | 0.025 |
| 3 | 3.33 | 0.21 | 0.004 | 0.078 | 0.021 | 0.049 |
| 4 | 3.21 | 0.15 | 0.008 | 0.071 | 0.024 | 0.038 |
| 5 | 3.25 | 0.09 | 0.012 | 0.078 | 0.032 | 0.028 |
| 6 | 3.10 | 0.04 | 0.014 | 0.068 | 0.033 | 0.015 |
| 7 | 2.57 | 0.05 | 0.007 | 0.055 | 0.029 | 0.018 |
| 8 | 2.71 | 0.03 | 0.011 | 0.061 | 0.028 | 0.012 |
| 9 | 2.88 | 0.09 | 0.007 | 0.069 | 0.024 | 0.022 |
| 10 | 3.12 | 0.08 | 0.004 | 0.073 | 0.019 | 0.028 |
| 11 | 3.64 | 0.10 | 0.008 | 0.079 | 0.013 | 0.024 |
| 12 | 3.55 | 0.14 | 0.005 | 0.088 | 0.019 | 0.034 |
| 13 | 3.25 | 0.08 | 0.016 | 0.074 | 0.034 | 0.025 |
| 14 | 3.25 | 0.21 | 0.013 | 0.077 | 0.049 | 0.041 |
| 15 | 3.61 | 0.22 | 0.010 | 0.085 | 0.044 | 0.049 |

(continued)

| Test Number | Chemical Composition of Slab (unit is mass%; balance is Fe and impurities) | | | | | |
|---|---|---|---|---|---|---|
| | Si | Mn | N | C | Sol.Al | S |
| 16 | 3.30 | 0.22 | 0.012 | 0.073 | 0.030 | 0.041 |
| 17 | 3.40 | 0.22 | 0.006 | 0.079 | 0.022 | 0.048 |
| 18 | 3.33 | 0.19 | 0.004 | 0.081 | 0.021 | 0.044 |
| 19 | 3.51 | 0.12 | 0.009 | 0.084 | 0.024 | 0.046 |
| 20 | 3.20 | 0.09 | 0.003 | 0.071 | 0.022 | 0.018 |
| 21 | 3.56 | 0.10 | 0.003 | 0.085 | 0.026 | 0.034 |
| 22 | 3.40 | 0.09 | 0.005 | 0.069 | 0.019 | 0.021 |
| 23 | 3.33 | 0.08 | 0.004 | 0.071 | 0.022 | 0.016 |
| 24 | 3.12 | 0.05 | 0.007 | 0.065 | 0.026 | 0.011 |
| 25 | 3.22 | 0.15 | 0.010 | 0.077 | 0.029 | 0.045 |
| 26 | 3.53 | 0.11 | 0.012 | 0.075 | 0.030 | 0.019 |
| 27 | 3.81 | 0.09 | 0.009 | 0.091 | 0.022 | 0.029 |
| 28 | 3.54 | 0.09 | 0.011 | 0.088 | 0.032 | 0.032 |
| 29 | 3.45 | 0.09 | 0.005 | 0.077 | 0.030 | 0.019 |
| 30 | 3.45 | 0.02 | 0.007 | 0.082 | 0.029 | 0.011 |
| 31 | 3.33 | 0.14 | 0.006 | 0.071 | 0.027 | 0.044 |
| 32 | 3.25 | 0.13 | 0.012 | 0.069 | 0.027 | 0.029 |

Each slab was subjected to a hot rolling process. Specifically, the slab was heated to 1350°C, and thereafter the slab was subjected to hot rolling to produce a hot-rolled steel sheet having a thickness of 2.3 mm.

The hot-rolled steel sheet after the hot rolling process was subjected to a hot-rolled sheet annealing process in which the annealing temperature was 900 to 1200°C and the holding time was 10 to 300 seconds. After the hot-rolled sheet annealing process, a pickling process was performed. In the pickling process, a pickling bath in which the hydrochloric acid concentration was 10% and the bath temperature was 90°C was used, and the pickling time was set to 120 seconds. Thereafter, a cold rolling process was performed to produce a cold-rolled steel sheet (base steel sheet) having a thickness of 0.22 mm.

The cold-rolled steel sheet was subjected to a decarburization annealing process. In the decarburization annealing process, the rapid heating attainment temperature Ta was set to 850°C, and the decarburization annealing temperature was set to 830°C. The average heating rate V1 until the temperature of the cold-rolled steel sheet reached the rapid heating attainment temperature Ta (850°C) from 550°C was set as shown in Table 7-2, and the average oxygen partial pressure ratio PO1 was set to 0.03. The holding time at the decarburization annealing temperature (830°C) was set to 60 seconds. The average oxygen partial pressure ratio PO4 at the decarburization annealing temperature was set to 0.40.

[Table 7-2]

TABLE 7-2

| Test Number | Sn Content (mass%) | Heating Rate V1 °C/sec | 0.88Sn +0.19 | $I_{Sn/Mg}$ | $I_{Sn/Mg}$ | $I_{ref}$ | $\Delta I_{Sn}$ | Bending Peeling Diameter (mm) | **Iron** Loss $W_{17/50}$ (W/kg) | Remarks |
|---|---|---|---|---|---|---|---|---|---|---|
| 1 | 0.05 | 80 | 0.23 | 0.0002 | 4.3 | 0.0000 | 0.0001 | 10 | 0.90 or more | Comparative Example |

(continued)

| Test Number | Sn Content (mass%) | Heating Rate V1 °C/sec | 0.88Sn +0.19 | $I_{Sn/Mg}$ | $I_{Sn/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|---|---|---|
| 2 | 0.05 | 100 | 0.23 | 0.0001 | 4.4 | 0.0000 | 0.0002 | 10 | 0.89 | Inventive Example |
| 3 | 0.05 | 200 | 0.23 | 0.0002 | 4.3 | 0.0000 | 0.0001 | 10 | 0.87 | Inventive Example |
| 4 | 0.06 | 400 | 0.24 | 0.0001 | 4.5 | 0.0000 | 0.0001 | 10 | 0.85 | Inventive Example |
| 5 | 0.05 | 600 | 0.23 | 0.0001 | 4.4 | 0.0000 | 0.0001 | 10 | 0.85 | Inventive Example |
| 6 | 0.05 | 1000 | 0.23 | 0.0001 | 4.5 | 0.0000 | 0.0001 | 10 | 0.85 | Inventive Example |
| 7 | 0.05 | 2000 | 0.23 | 0.0005 | 4.1 | 0.0001 | 0.0002 | 10 | 0.82 | Inventive Example |
| 8 | 0.05 | 3000 | 0.23 | 0.0005 | 3.9 | 0.0001 | 0.0001 | 10 | 0.80 | Inventive Example |
| 9 | 0.11 | 80 | 0.29 | 0.0002 | 4.2 | 0.0000 | 0.0002 | 10 | 0.90 or more | Comparative Example |
| 10 | 0.10 | 100 | 0.28 | 0.0003 | 3.9 | 0.0001 | 0.0002 | 10 | 0.85 | Inventive Example |
| 11 | 0.10 | 200 | 0.28 | 0.0003 | 4.1 | 0.0001 | 0.0002 | 10 | 0.85 | Inventive Example |
| 12 | 0.11 | 400 | 0.29 | 0.0003 | 3.8 | 0.0001 | 0.0002 | 10 | 0.80 | Inventive Example |
| 13 | 0.10 | 600 | 0.28 | 0.0003 | 3.9 | 0.0001 | 0.0003 | 10 | 0.80 | Inventive Example |
| 14 | 0.10 | 1000 | 0.28 | 0.0003 | 3.9 | 0.0001 | 0.0002 | 10 | 0.80 | Inventive Example |
| 15 | 0.11 | 2000 | 0.29 | 0.0002 | 3.8 | 0.0001 | 0.0003 | 20 | 0.78 | Inventive Example |
| 16 | 0.10 | 3000 | 0.28 | 0.0003 | 4.0 | 0.0001 | 0.0002 | 10 | 0.76 | Inventive Example |
| 17 | 0.20 | 80 | 0.37 | 0.0011 | 4.0 | 0.0003 | 0.0003 | 20 | 0.90 or more | Comparative Example |
| 18 | 0.20 | 100 | 0.37 | 0.0009 | 3.9 | 0.0002 | 0.0004 | 20 | 0.80 | Inventive Example |
| 19 | 0.20 | 200 | 0.37 | 0.0010 | 4.1 | 0.0002 | 0.0003 | 20 | 0.80 | Inventive Example |
| 20 | 0.20 | 400 | 0.37 | 0.0009 | 4.2 | 0.0002 | 0.0003 | 20 | 0.77 | Inventive Example |
| 21 | 0.20 | 600 | 0.37 | 0.0013 | 4.2 | 0.0003 | 0.0003 | 20 | 0.77 | Inventive Example |
| 22 | 0.20 | 1000 | 0.37 | 0.0012 | 4.3 | 0.0003 | 0.0003 | 20 | 0.77 | Inventive Example |

(continued)

| Test Number | Sn Content (mass%) | Heating Rate V1 °C/sec | 0.88Sn +0.19 | $I_{Sn/Mg}$ | $I_{Sn/Mg}$ | $I_{ref}$ | $\Delta I_{Sn}$ | Bending Peeling Diameter (mm) | Iron Loss $W_{17/50}$ (W/kg) | Remarks |
|---|---|---|---|---|---|---|---|---|---|---|
| 23 | 0.20 | 2000 | 0.37 | 0.0011 | 4.2 | 0.0003 | 0.0004 | 20 | 0.76 | Inventive Example |
| 24 | 0.20 | 3000 | 0.37 | 0.0013 | 4.2 | 0.0003 | 0.0003 | 20 | 0.75 | Inventive Example |
| 25 | 0.29 | 80 | 0.45 | 0.0019 | 4.0 | 0.0005 | 0.0006 | 30 | 0.90 or more | Comparative Example |
| 26 | 0.29 | 100 | 0.45 | 0.0020 | 3.9 | 0.0005 | 0.0005 | 30 | 0.80 | Inventive Example |
| 27 | 0.29 | 200 | 0.45 | 0.0018 | 4.1 | 0.0004 | 0.0006 | 30 | 0.80 | Inventive Example |
| 28 | 0.29 | 400 | 0.45 | 0.0018 | 4.2 | 0.0004 | 0.0006 | 30 | 0.75 | Inventive Example |
| 29 | 0.29 | 600 | 0.45 | 0.0019 | 4.2 | 0.0005 | 0.0005 | 30 | 0.75 | Inventive Example |
| 30 | 0.29 | 1000 | 0.45 | 0.0019 | 4.1 | 0.0005 | 0.0005 | 30 | 0.75 | Inventive Example |
| 31 | 0.29 | 2000 | 0.45 | 0.0019 | 4.2 | 0.0005 | 0.0005 | 30 | 0.73 | Inventive Example |
| 32 | 0.29 | 3000 | 0.45 | 0.0021 | 4.1 | 0.0005 | 0.0005 | 30 | 0.73 | Inventive Example |

An annealing separator (aqueous slurry) having MgO as a main component was applied to the decarburization-annealed steel sheet after the decarburization annealing process, and thereafter the decarburization-annealed steel sheet was coiled into a coil shape. The steel sheet coiled in a coil shape was subjected to final annealing. In the final annealing process, the average heating rate V2 during a period until the temperature of the steel sheet reached 900°C from 650°C was set to 15°C/hr, and the average oxygen partial pressure ratio PO2 was set to 0.008. In addition, during a period until the temperature reached 1100°C from 900°C, the average heating rate V3 was set to 15°C/hr and the average oxygen partial pressure ratio PO3 was set to 0.005. After raising the temperature to 1100°C or more, the steel sheet was held for 5 hours or more at that temperature. The purity of the hydrogen gas used as the atmospheric gas in the final annealing process was 6N (99.9999%).

The steel sheet after the final annealing process was subjected to a secondary coating formation process. In the secondary coating formation process, an insulation coating agent mainly composed of colloidal silica and phosphate was applied onto the surface (onto the primary coating) of the steel sheet after the final annealing process, and thereafter baking was performed under well-known conditions and a secondary coating was formed. A grain-oriented electrical steel sheet of each test number was produced by the above production process.

[Evaluation tests]

The grain-oriented electrical steel sheet of each test number was subjected to Test 1 to Test 5.

In Example 5, the chemical composition of each base steel sheet determined as the result of the analysis in Test 1 was as shown in Table 7-3.

[Table 7-3]

TABLE 7-3

| Test Number | Chemical Composition of Base Steel Sheet (unit is mass%; balance is Fe and impurities) | | | | | | |
|---|---|---|---|---|---|---|---|
| | Si | Mn | Sn | N | C | Sol.Al | S |
| 1 | 3.34 | 0.08 | 0.05 | 0.002 | 0.002 | 0.001 | 0.001 |
| 2 | 3.39 | 0.11 | 0.05 | 0.001 | 0.001 | 0.001 | 0.001 |
| 3 | 3.33 | 0.20 | 0.05 | 0.001 | 0.001 | 0.001 | 0.002 |
| 4 | 3.21 | 0.15 | 0.06 | 0.002 | 0.001 | 0.001 | 0.002 |
| 5 | 3.25 | 0.09 | 0.05 | 0.003 | 0.002 | 0.002 | 0.001 |
| 6 | 3.10 | 0.04 | 0.05 | 0.003 | 0.001 | 0.001 | 0.001 |
| 7 | 2.57 | 0.05 | 0.05 | 0.001 | 0.001 | 0.001 | 0.001 |
| 8 | 2.71 | 0.03 | 0.05 | 0.002 | 0.001 | 0.001 | 0.001 |
| 9 | 2.88 | 0.09 | 0.11 | 0.001 | 0.001 | 0.001 | 0.001 |
| 10 | 3.12 | 0.08 | 0.10 | 0.001 | 0.001 | 0.001 | 0.001 |
| 11 | 3.59 | 0.10 | 0.10 | 0.001 | 0.002 | 0.001 | 0.001 |
| 12 | 3.52 | 0.13 | 0.11 | 0.001 | 0.003 | 0.001 | 0.002 |
| 13 | 3.23 | 0.08 | 0.10 | 0.002 | 0.001 | 0.002 | 0.001 |
| 14 | 3.25 | 0.21 | 0.10 | 0.002 | 0.002 | 0.002 | 0.001 |
| 15 | 3.56 | 0.21 | 0.11 | 0.001 | 0.003 | 0.002 | 0.002 |
| 16 | 3.30 | 0.22 | 0.10 | 0.002 | 0.001 | 0.001 | 0.001 |
| 17 | 3.35 | 0.21 | 0.20 | 0.001 | 0.001 | 0.001 | 0.003 |
| 18 | 3.29 | 0.19 | 0.20 | 0.001 | 0.001 | 0.001 | 0.002 |
| 19 | 3.48 | 0.12 | 0.20 | 0.001 | 0.004 | 0.001 | 0.002 |
| 20 | 3.20 | 0.09 | 0.20 | 0.001 | 0.003 | 0.001 | 0.001 |
| 21 | 3.51 | 0.10 | 0.20 | 0.001 | 0.002 | 0.001 | 0.001 |
| 22 | 3.40 | 0.09 | 0.20 | 0.001 | 0.001 | 0.001 | 0.001 |
| 23 | 3.33 | 0.08 | 0.20 | 0.001 | 0.001 | 0.001 | 0.001 |
| 24 | 3.12 | 0.05 | 0.20 | 0.002 | 0.001 | 0.001 | 0.001 |
| 25 | 3.22 | 0.15 | 0.29 | 0.002 | 0.002 | 0.001 | 0.002 |
| 26 | 3.51 | 0.11 | 0.29 | 0.003 | 0.001 | 0.001 | 0.001 |
| 27 | 3.71 | 0.09 | 0.29 | 0.001 | 0.003 | 0.001 | 0.001 |
| 28 | 3.51 | 0.09 | 0.28 | 0.001 | 0.002 | 0.001 | 0.001 |
| 29 | 3.41 | 0.09 | 0.29 | 0.001 | 0.002 | 0.001 | 0.001 |
| 30 | 3.44 | 0.02 | 0.29 | 0.001 | 0.002 | 0.001 | 0.001 |
| 31 | 3.33 | 0.14 | 0.29 | 0.001 | 0.001 | 0.001 | 0.002 |
| 32 | 3.25 | 0.13 | 0.29 | 0.002 | 0.001 | 0.001 | 0.001 |

[Evaluation results]

Referring to Table 7-1 to 7-3, in each of Test Nos. 2 to 8, 10 to 16, 18 to 24, and 26 to 32, the chemical composition was appropriate, V1 was 100°C/sec or more, and the other production conditions were also appropriate. As a result, in each of these test numbers, the intensity ratio $I_{ref}$ defined by Formula (1) was 0.0006 or less. Therefore, the iron loss $W_{17/50}$ was a low value of less than 0.90 W/kg, and thus each of these test numbers was excellent in iron loss. In addition, the bending peeling diameter was 30 mm or less, and thus each of these test numbers was also excellent in adhesion of the secondary coating.

In addition, in each of Test Nos. 2 to 8, 10 to 16, and 18 to 24, the average oxygen partial pressure ratio PO4 satisfied the lower limit of Formula (5). Therefore, the Sn concentration gradient $\Delta I_{Sn}$ was 0.0004/sec or less. Therefore, the bending peeling diameter was 20 mm or less, and thus each of these test numbers was further excellent in adhesion of the secondary coating.

Furthermore, in the test numbers which were Inventive Examples of the present invention, the higher the content of Sn was and the faster the heating rate V1 was, the more the iron loss $W_{17/50}$ decreased. Specifically, among Test Nos. 2 to 8 which each had approximately the same content of Sn, in Test Nos. 4 to 8 in which the heating rate V1 was 400°C/sec or more, the iron loss $W_{17/50}$ was 0.85 W/kg or less which was even lower than in Test Nos. 2 and 3. Among Test Nos. 10 to 16 which each had approximately the same content of Sn, in Test Nos. 12 to 16 in which the heating rate V1 was 400°C/sec or more, the iron loss $W_{17/50}$ was 0.80 W/kg or less which was even lower than in Test Nos. 10 and 11. Among Test Nos. 18 to 24 which each had the same content of Sn, in Test Nos. 20 to 24 in which the heating rate V1 was 400°C/sec or more, the iron loss $W_{17/50}$ was 0.77 W/kg or less which was even lower than in Test Nos. 18 and 19. Among Test Nos. 26 to 32 which each had the same content of Sn, in Test Nos. 28 to 32 in which the heating rate V1 was 400°C/sec or more, the iron loss $W_{17/50}$ was 0.75 W/kg or less which was even lower than in Test Nos. 26 and 27.

Note that, when the content of Sn was 0.10% or more and the heating rate V1 was 100°C/sec or more, the iron loss $W_{17/50}$ was 0.85 W/kg or less which was extremely good.

On the other hand, in Test Nos. 1, 9, 17, and 25, V1 was less than 100°C/sec. Consequently, the iron loss $W_{17/50}$ was 0.90 W/kg or more.

An embodiment of the present invention has been described above. However, the embodiment described above is merely an example for carrying out the present invention. Therefore, the present invention is not limited to the above-described embodiment, and can be implemented by appropriately modifying the above embodiment within a range that does not depart from the gist of the present invention.

REFERENCE SIGNS LIST

1     Grain-oriented electrical steel sheet
10    Base steel sheet
11    Primary coating
12    Secondary coating

**Claims**

1.  A grain-oriented electrical steel sheet, comprising:

    a base steel sheet,
    a primary coating formed on the base steel sheet, and
    a secondary coating formed on the primary coating,
    wherein:

        a chemical composition of the base steel sheet consists of, in mass%,
        Si: 2.50 to 4.50%,
        Mn: 0.01 to 1.00%,
        Sn: 0.05 to 0.30%,
        N: 0.010% or less,
        C: 0.010% or less,
        sol. Al: 0.010% or less,
        one or more kinds of element selected from a group consisting of S and Se: 0.020% or less in total,
        P: 0.00 to 0.05%,
        Sb: 0.00 to 0.50%,
        Cr: 0.00 to 0.50%,
        Cu: 0.00 to 0.50%,
        Ni: 0.00 to 0.50%, and
        Bi: 0.0000 to 0.0100%,
        with the balance being Fe and impurities;
        and wherein:
        in glow emission spectroscopic spectra obtained by performing glow discharge optical emission spectroscopy from a surface of the secondary coating in a thickness direction of the base steel sheet, the glow emission spectroscopic spectra showing a relation of an emission intensity of Mg and an emission intensity of Sn with respect to a sputtering time:

when a maximum emission intensity of Mg is defined as $I_{Mg/Mg}$, and
an emission intensity of Sn at the sputtering time at which Mg exhibits the maximum emission intensity is defined as $I_{Sn/Mg}$,
an intensity ratio $I_{ref}$ defined by Formula (1) is 0.0000 to 0.0006, and
an iron loss $W_{17/50}$ measured in accordance with JIS C 2556: 2015 is less than 0.90 W/kg.

$$I_{ref} = I_{Sn/Mg}/I_{Mg/Mg} \quad (1)$$

2. The grain-oriented electrical steel sheet according to claim 1, wherein:
   the $I_{Sn/Mg}$ is 0.0021 or less.

3. The grain-oriented electrical steel sheet according to claim 1 or claim 2, wherein:

   in the glow emission spectroscopic spectra,
   when the emission intensity of Sn at a time point at which a further 20.0 seconds passes from a sputtering time at which the $I_{Sn/Mg}$ is obtained is defined as $I_{Sn/Mg+20}$, an Sn concentration gradient $\Delta I_{Sn}$ defined by Formula (2) is 0.0000 to 0.0004/sec.

$$\Delta I_{Sn} = (I_{Sn/Mg+20} - I_{Sn/Mg})/20 \quad (2)$$

4. The grain-oriented electrical steel sheet according to any one of claim 1 to claim 3, wherein the chemical composition of the base steel sheet contains one element or more selected from a group consisting of:

   P: 0.01 to 0.05%,
   Sb: 0.01 to 0.50%,
   Cr: 0.01 to 0.50%,
   Cu: 0.01 to 0.50%,
   Ni: 0.01 to 0.50%, and
   Bi: 0.0001 to 0.0100%.

5. A method for producing a grain-oriented electrical steel sheet according to claim 1, comprising
   a hot rolling process of producing a hot-rolled steel sheet by performing hot rolling on a slab having a chemical composition consisting of:

   Si: 2.50 to 4.50%,
   Mn: 0.01 to 1.00%,
   Sn: 0.05 to 0.30%,
   N: 0.002 to 0.020%,
   C: 0.020 to 0.100%,
   sol. Al: 0.010 to 0.050%,
   one or more kinds of element selected from a group consisting of S and Se: 0.010 to 0.050% in total,
   P: 0.00 to 0.05%,
   Sb: 0.00 to 0.50%,
   Cr: 0.00 to 0.50%,
   Cu: 0.00 to 0.50%,
   Ni: 0.00 to 0.50%, and
   Bi: 0.0000 to 0.0100%,
   with the balance being Fe and impurities;
   a hot-rolled sheet annealing process of annealing the hot-rolled steel sheet;
   a pickling process of performing a pickling treatment on the hot-rolled steel sheet after the hot-rolled sheet annealing process;
   a cold rolling process of subjecting the hot-rolled steel sheet after the pickling process to cold rolling to produce a cold-rolled steel sheet;

a decarburization annealing process of subjecting the cold-rolled steel sheet to decarburization annealing to produce a decarburization-annealed steel sheet;

a final annealing process of applying an annealing separator to the decarburization-annealed steel sheet and subjecting the decarburization-annealed steel sheet to which the annealing separator is applied to final annealing to produce a final-annealed steel sheet on which the primary coating is formed; and

a secondary coating formation process of applying a secondary coating forming solution to the final-annealed steel sheet and subjecting the final-annealed steel sheet to which the secondary coating forming solution is applied to a heat treatment to form the secondary coating on the final-annealed steel sheet;

wherein:

in the pickling process,

a hydrochloric acid concentration in a pickling bath is set to 5 to 20% by mass, and a bath temperature is set to 80 to 100°C, and

an immersion time in the pickling bath is set to 30 to 120 seconds;

in the decarburization annealing process,

a rapid heating attainment temperature Ta is set to 800 to 900°C,

an average heating rate V1 during a period until a temperature of the cold-rolled steel sheet reaches the rapid heating attainment temperature Ta from 550°C is set to 100°C/sec or more, and

after the temperature of the cold-rolled steel sheet rises to the rapid heating attainment temperature Ta, the cold-rolled steel sheet is held for 60 seconds or more at a decarburization annealing temperature of 800 to 950°C, and an average oxygen partial pressure ratio PO4 during a period in which the cold-rolled steel sheet is held at the decarburization annealing temperature is made 0.60 or less; and

in the final annealing process,

an average heating rate V3 (°C/hr) and an average oxygen partial pressure ratio PO3 during a period until a temperature of the decarburization-annealed steel sheet reaches 1100°C from 900°C satisfy Formula (3) and Formula (4), and

a purity of a hydrogen gas introduced into a furnace atmosphere of a final annealing furnace used for the final annealing is more than 99.9%;

$$31 \times Sn + 5 \leq V3 \leq 30 \quad (3)$$

$$0.000 \leq PO3 \leq -0.020 \times Sn + 0.015 \quad (4)$$

where, a content of Sn in percent by mass in the slab is substituted for Sn in Formula (3) and Formula (4).

6. The method for producing a grain-oriented electrical steel sheet according to claim 5, wherein:

in the decarburization annealing process, in addition,
the average oxygen partial pressure ratio PO4 satisfies Formula (5);

$$0.88 \times Sn + 0.19 \leq PO4 \leq 0.60 \quad (5)$$

where, a content of Sn in percent by mass in the slab is substituted for Sn in Formula (5).

7. The method for producing a grain-oriented electrical steel sheet according to claim 5 or claim 6, wherein the chemical composition of the slab contains one element or more selected from a group consisting of:

P: 0.01 to 0.05%,
Sb: 0.01 to 0.50%,
Cr: 0.01 to 0.50%,
Cu: 0.01 to 0.50%,
Ni: 0.01 to 0.50%, and
Bi: 0.0001 to 0.0100%.

FIG.1

FIG.2

## INTERNATIONAL SEARCH REPORT

| International application No. |
|---|
| **PCT/JP2023/015892** |

### A. CLASSIFICATION OF SUBJECT MATTER

**C21D 8/12**(2006.01)i; **C22C 38/00**(2006.01)i; **C22C 38/60**(2006.01)i; **H01F 1/147**(2006.01)i
FI: C22C38/00 303U; C22C38/60; C21D8/12 B; H01F1/147 183

According to International Patent Classification (IPC) or to both national classification and IPC

### B. FIELDS SEARCHED

Minimum documentation searched (classification system followed by classification symbols)

C21D8/12; C22C38/00-38/60; H01F1/147

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-101311 A (JFE STEEL CORP) 08 June 2017 (2017-06-08)<br>entire text | 1-7 |
| A | WO 2020/162611 A1 (NIPPON STEEL CORPORATION) 13 August 2020 (2020-08-13)<br>entire text | 1-7 |
| A | JP 2012-180545 A (JFE STEEL CORP) 20 September 2012 (2012-09-20)<br>entire text | 1-7 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 June 2023** | **04 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/015892**

| Patent document<br>cited in search report | Publication date<br>(day/month/year) | Patent family member(s) | Publication date<br>(day/month/year) |
|---|---|---|---|
| JP 2017-101311 A | 08 June 2017 | (Family: none) | |
| WO 2020/162611 A1 | 13 August 2020 | US 2022/0243315 A1<br>entire text<br>EP 3922754 A1<br>CN 113396242 A<br>KR 10-2021-0118916 A | |
| JP 2012-180545 A | 20 September 2012 | (Family: none) | |

Form PCT/ISA/210 (patent family annex) (January 2015)

**EP 4 512 915 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6049543 A
- JP 7062436 A
- JP 10280040 A
- JP 2003096520 A